(19) **Europäisches Patentamt / European Patent Office / Office européen des brevets**

(11) **EP 1 942 364 A1**

(12) **EUROPEAN PATENT APPLICATION**

(43) Date of publication:
09.07.2008 Bulletin 2008/28

(51) Int Cl.:
$G02B\ 27/01$ (2006.01)     $G02B\ 5/32$ (2006.01)
$G02B\ 6/00$ (2006.01)     $G02B\ 5/18$ (2006.01)

(21) Application number: 08006532.9

(22) Date of filing: 07.09.2006

(84) Designated Contracting States:
AT BE BG CH CY CZ DE DK EE ES FI FR GB GR
HU IE IS IT LI LT LU LV MC NL PL PT RO SE SI
SK TR

(30) Priority: 18.08.2006 US 505866
19.05.2006 US 801410 P
03.11.2005 US 732661 P
14.09.2005 US 716533 P

(62) Document number(s) of the earlier application(s) in
accordance with Art. 76 EPC:
06780476.5 / 1 932 050

(71) Applicant: MIRAGE INNOVATIONS LTD.
49001 Petach-Tikva (IL)

(72) Inventor: **The designation of the inventor has not
yet been filed**

(74) Representative: Vossius & Partner
Siebertstrasse 4
81675 München (DE)

Remarks:
This application was filed on 31-03-2008 as a
divisional application to the application mentioned
under INID code 62.

(54) **Diffractive optical relay and method for manufacturing the same**

(57)  An optical relay device, comprising a substrate, and at least one diffractive optical element is disclosed. The substrate is made, at least in part, of a light transmissive polymeric material characterized by a birefringence, $\Delta n$, satisfying the inequality $|\Delta n| < \varepsilon$, where $\varepsilon$ is lower than the birefringence of polycarbonate. In a preferred embodiment, the light transmissive polymeric material comprises a cycloolefin polymer or a cycloolefin copolymer.

Fig. 1

**Description**

FIELD AND BACKGROUND OF THE INVENTION

The present invention relates to optics and, more particularly, to an optical system and device diffracting light into one or more two-dimensional regions.

Miniaturization of electronic devices has always been a continuing objective in the field of electronics. Electronic devices are often equipped with some form of a display, which is visible to a user. As these devices reduce in size, there is an increase need for manufacturing compact displays, which are compatible with small size electronic devices. Besides having small dimensions, such displays should not sacrifice image quality, and be available at low cost. By definition the above characteristics are conflicting and many attempts have been made to provide some balanced solution.

An electronic display may provide a real image, the size of which is determined by the physical size of the display device, or a virtual image, the size of which may extend the dimensions of the display device.

A real image is defined as an image, projected on or displayed by a viewing surface positioned at the location of the image, and observed by an unaided human eye (to the extent that the viewer does not require corrective glasses). Examples of real image displays include a cathode ray tube (CRT), a liquid crystal display (LCD), an organic light emitting diode array (OLED), or any screen-projected displays. A real image could be viewed normally from a distance of about at least 25 cm, the minimal distance at which the human eye can utilize focus onto an object. Unless a person is long-sighted, he may not be able to view a sharp image at a closer distance.

Typically, desktop computer systems and workplace computing equipment utilize CRT display screens to display images for a user. The CRT displays are heavy, bulky and not easily miniaturized. For a laptop, a notebook, or a palm computer, flat-panel display is typically used. The flat-panel display may use LCD technology implemented as passive matrix or active matrix panel. The passive matrix LCD panel consists of a grid of horizontal and vertical wires. Each intersection of the grid constitutes a single pixel, and controls an LCD element. The LCD element either allows light through or blocks the light. The active matrix panel uses a transistor to control each pixel, and is more expensive.

An OLED flat panel display is an array of light emitting diodes, made of organic polymeric materials. Existing OLED flat panel displays are based on both passive and active configurations. Unlike the LCD display, which controls light transmission or reflection, an OLED display emits light, the intensity of which is controlled by the electrical bias applied thereto. Flat-panels are also used for miniature image display systems because of their compactness and energy efficiency compared to the CRT displays. Small size real image displays have a relatively small surface area on which to present a real image, thus have limited capability for providing sufficient information to the user. In other words, because of the limited resolution of the human eye, the amount of details resolved from a small size real image might be insufficient.

By contrast to a real image, a virtual image is defined as an image, which is not projected onto or emitted from a viewing surface, and no light ray connects the image and an observer. A virtual image can only be seen through an optic element, for example a typical virtual image can be obtained from an object placed in front of a converging lens, between the lens and its focal point. Light rays, which are reflected from an individual point on the object, diverge when passing through the lens, thus no two rays share two endpoints. An observer, viewing from the other side of the lens would perceive an image, which is located behind the object, hence enlarged. A virtual image of an object, positioned at the focal plane of a lens, is said to be projected to infinity. A virtual image display system, which includes a miniature display panel and a lens, can enable viewing of a small size, but high content display, from a distance much smaller than 25 cm. Such a display system can provide a viewing capability which is equivalent to a high content, large size real image display system, viewed from much larger distance.

Conventional virtual image displays are known to have many shortcomings. For example, such displays have suffered from being too heavy for comfortable use, as well as too large so as to be obtrusive, distracting and even disorienting. These defects stem from, *inter alia,* the incorporation of relatively large optics systems within the mounting structures, as well as physical designs which fail to adequately take into account important factors as size, shape, weight, *etc.*

Recently, holographic optical elements have been used in portable virtual image displays. Holographic optical elements serve as an imaging lens and a combiner where a two-dimensional, quasi-monochromatic display is imaged to infinity and reflected into the eye of an observer. A common problem to all types of holographic optical elements is their relatively high chromatic dispersion. This is a major drawback in applications where the light source is not purely monochromatic. Another drawback of some of these displays is the lack of coherence between the geometry of the image and the geometry of the holographic optical element, which causes aberrations in the image array that decrease the image quality.

New designs, which typically deal with a single holographic optical element, compensate for the geometric and chromatic aberrations by using non-spherical waves rather than simple spherical waves for recording; however, they do not overcome the chromatic dispersion problem. Moreover, with these designs, the overall optical systems are usually very complicated and difficult to manufacture. Furthermore, the field-of-view resulting from these designs is usually very small.

U.S. Patent No. 4,711,512 to Upatnieks describes a diffractive planar optics head-up display configured to transmit collimated light wavefronts of an image, as well as to allow light rays coming through the aircraft windscreen to pass and be viewed by the pilot. The light wavefronts enter an elongated optical element located within the aircraft cockpit through a first diffractive element, are diffracted into total internal reflection within the optical element, and are diffracted out of the optical element by means of a second diffractive element into the direction of the pilot's eye while retaining the collimation. Upatnieks, however, does not teach how to transmit a wide field-of-view through the display, or how to transmit a broad spectrum of wavelengths (for providing color images). A major limitation of the head-up display of Upatnieks is the use of thick volume holograms which, albeit their relatively high diffraction efficiency, are known to have narrow angular and chromatic response.

U.S. Patent Nos. 5,966,223 and 5,682,255 to Friesern et al. describes a holographic optical device similar to that of Upatnieks, with the additional aspect that the first diffractive optical element acts further as the collimating element that collimates the waves emitted by each data point in a display source and corrects for field aberrations over the entire field-of-view. The field-of-view discussed is $\pm 6°$, and there is a further discussion of low chromatic sensitivity over wavelength shift of $\Delta\lambda_c$ of $\pm 2$ nm around a center wavelength $\lambda_c$ of 632.8 nm. However, the diffractive collimating element of Friesern et al. is known to narrow spectral response, and the low chromatic sensitivity at spectral range of $\pm 2$ nm becomes an unacceptable sensitivity at $\pm 20$ nm or $\pm 70$ nm.

U.S. Patent No. 6,757,105 to Niv et al., the contents of which are hereby incorporated by reference, provides a diffractive optical element for optimizing a field-of-view for a multicolor spectrum. The optical element includes a light-transmissive substrate and a linear grating formed therein. Niv et al. teach how to select the pitch of the linear grating and the refraction index of the light-transmissive substrate so as to trap a light beam having a predetermined spectrum and characterized by a predetermined field of view to propagate within the light-transmissive substrate via total internal reflection. Niv et al. also disclose an optical device incorporating the aforementioned diffractive optical element for transmitting light in general and images in particular into the eye of the user.

The above virtual image devices, however, provide a single optical channel, hence allowing the scene of interest to be viewed by one eye. It is recognized that the ability of any virtual image devices to transmit an image without distortions inherently depends on whether or not light rays emanating from all points of the image are successfully transmitted to the eye of the user in their original color. Due to the single optical channel employed by presently known devices, the filed-of-view which can be achieved without distortions or loss of information is rather limited.

A binocular device which employs several diffractive optical elements is disclosed in U.S. Patent Application Nos. 10/896,865 and 11/017,920, and in International Patent Application, Publication No. WO 2006/008734, the contents of which are hereby incorporated by reference. An optical relay is formed of a light transmissive substrate, an input diffractive optical element and two output diffractive optical elements. Collimated light is diffracted into the optical relay by the input diffractive optical element, propagates in the substrate via total internal reflection and coupled out of the optical relay by two output diffractive optical elements. The input and output diffractive optical elements preserve relative angles of the light rays to allow transmission of images with minimal or no distortions. The output elements are spaced apart such that light diffracted by one element is directed to one eye of the viewer and light diffracted by the other element is directed to the other eye of the viewer. The binocular design of these references significantly improves the field-of-view.

In a binocular system of the type descried above, the distance between the output optical elements should, in principle, match the interpupillary distance of the individual using the system. On the other hand, the interpupillary distance may vary by more than 50 % from one individual to another. Such binocular systems therefore provide different viewing conditions to individuals with different interpupillary distances. In other words, a binocular system which provides optimal viewing conditions for one individual may provide less than optimal viewing conditions for another individual, particularly when the interpupillary distances of the two individuals significantly differ.

There is thus a widely recognized need for, and it would be highly advantageous to have an optical device and system devoid of the above limitations.

SUMMARY OF THE INVENTION

According to one aspect of the present invention there is provided an optical relay device for transmitting light striking the optical relay device at a plurality of angles within a field-of-view. The device comprises a light-transmissive substrate engaging a plane spanned by a longitudinal direction and a transverse direction. The optical relay device further comprises an input optical element, designed and constructed for redirecting the light such that the light propagates within the light-transmissive substrate via total internal reflection; and an output optical element, laterally displaced from the input optical element, and being designed and constructed for redirecting the light out of the light-transmissive substrate. The output optical element of the device is characterized by planar dimensions defined by a length along the longitudinal direction and a width along the transverse direction, where the length and the width are selected such that at least a portion of one or more outermost light ray within the field-of-view is directed to a two-dimensional region being at a predetermined distance from the light transmissive substrate.

According another aspect of the present invention there is provided an optical relay device. The device comprises a light-transmissive substrate engaging a plane as described above; an input optical element designed and constructed for redirecting the light such that the light propagates within the light-transmissive substrate via total internal reflection; and one or more output optical element, laterally displaced from the input optical element, and being designed and constructed for redirecting the light out of the light-transmissive substrate. Each of the input optical element and the output optical element(s) of the device being characterized by planar dimensions defined by a length along the longitudinal direction and a width along the transverse direction, where a width of the output optical element is smaller than a width of the input optical element.

According to another aspect of the present invention there is provided an optical relay device. The device comprises, a light-transmissive substrate engaging a plane as described above, an input optical element designed and constructed for redirecting the light such that the light propagates within the light-transmissive substrate via total internal reflection; a first output optical element, laterally displaced from the input optical element, and being designed and constructed for redirecting light corresponding to a first partial field-of-view out of the light-transmissive substrate; and a second output optical element, laterally displaced from the input optical element and the first output optical element, and being designed and constructed for redirecting light corresponding to a second partial field-of-view out of the light-transmissive substrate. Each of the first and second output optical elements being characterized by planar dimensions defined by a length along the longitudinal direction and a width along the transverse direction, wherein a length and a width of the first output optical element are selected such that at least a portion of one or more outermost light ray within the first partial field-of-view is directed to a first two-dimensional region, and a length and a width of the second output optical element are selected such that at least a portion of one or more outermost light ray within the second partial field-of-view is directed to a second two-dimensional region, the first and the second two-dimensional regions being at a predetermined distance from the light transmissive substrate.

According to still further features in the described preferred embodiments the planar dimensions are selected such that the portions of the outermost light rays are respectively directed to the first and the second two-dimensional regions, for any lateral separation between the centers two-dimensional regions which is larger than Y1 millimeters and smaller than Y2 millimeters, where Y1 can be any number larger or equal 40 and Y2 can be any number smaller or equal 80.

According to still further features in the described preferred embodiments Y1 equals about 50 and Y2 equals about 65; alternatively, Y1 equals about 53 and Y2 equals about 73; alternatively, Y2 is larger than Y1 by about 10 millimeters and Y1 can be any number from about 53 to about 63, including, without limitation, 53, 58 or 63.

According to still further features in the described preferred embodiments the input and/or output optical element is a diffractive optical element.

According to still another aspect of the present invention there is provided an optical relay device for transmitting an image by diffraction to a first eye and a second eye characterized by an interpupillary distance, the device comprises a light transmissive substrate and a plurality of diffractive optical elements located at fixed locations on the light transmissive substrate, the diffractive optical relay device being characterized by a field-of-view of at least 16 degrees, and being capable of providing the image for any interpupillary distance from Y1 millimeters to Y2 millimeters, as described above.

According to yet another aspect of the present invention there is provided a system for providing an image to a user. The system comprises the optical relay device and an image generating system for providing the diffractive optical relay device with collimated light constituting the image.

According to further features in preferred embodiments of the invention described below, the width of the output optical element(s) is smaller than the width of the input optical element.

According to still further features in the described preferred embodiments the plurality of diffractive optical elements comprises an input diffractive optical element, a first output diffractive optical element and a second output diffractive optical element, the input diffractive optical element being designed and constructed for diffracting light constituting the image to propagate within the light-transmissive substrate via total internal reflection, and the output diffractive optical elements being designed and constructed for diffracting at least a portion of the light out of the light transmissive substrate.

According to still further features in the described preferred embodiments the first output diffractive optical element is designed and constructed for diffracting light corresponding to a first partial field-of-view of the image out of the light-transmissive substrate, and the second output diffractive optical element is designed and constructed for diffracting light corresponding to a second partial field-of-view of the image out of the light-transmissive substrate, such that the combination of the first and the second partial field-of-views substantially reconstructs the field-of-view.

According to still further features in the described preferred embodiments the first and the second diffractive optical elements are characterized by planar dimensions selected such that at least a portion of one or more outermost light ray within the first partial field-of-view is directed to a first two-dimensional region containing the first eye, and at least a portion of one or more outermost light ray within the second partial field-of-view is directed to a second two-dimensional region containing the second eye, the first and the second two-dimensional regions being at a predetermined distance from the light transmissive substrate.

According to still further features in the described preferred embodiments the predetermined distance is from about Z1 millimeters to Z2 millimeters, where Z1 is preferably about 15 and Z2 can be any number from about 20 to about to about 35, including, without limitation, about 20, about 25, about 30 and about 35.

According to still further features in the described preferred embodiments a width of the two-dimensional region is from about 4 millimeters to about 9 millimeters. According to still further features in the described preferred embodiments a length of the two-dimensional region is from about 5 millimeters to about 13 millimeters.

According to still further features in the described preferred embodiments a length of the input optical element equals from about X to about 3X where X is a minimal unit hop-length characterizing propagation of an outermost light ray within the light transmissive substrate via total internal reflection.

According to still further features in the described preferred embodiments wherein the light is characterized by a spectrum inclusively defined between a shortest wavelength and a longest wavelength. According to still further features in the described preferred embodiments the length of the input optical element equals from about X to about 3X where X is a unit hop-length characterizing propagation of a light ray having the shortest wavelength within the light transmissive substrate via total internal reflection.

According to still further features in the described preferred embodiments one or more of the diffractive optical elements comprises a grating described by non-uniform diffraction efficiency function.

According to still further features in the described preferred embodiments the grating has a periodic linear structure in one or more direction, the periodic linear structure being characterized by non-uniform duty cycle.

According to still further features in the described preferred embodiments the grating has a periodic linear structure in one or more direction, the periodic linear structure being characterized by non-uniform modulation depth.

According to still further features in the described preferred embodiments the grating has a periodic linear structure in one or more direction, the periodic linear structure being characterized by non-uniform duty cycle and non-uniform modulation depth.

According to still further features in the described preferred embodiments the non-uniform diffraction efficiency function is monotonic across the one or more direction.

According to still further features in the described preferred embodiments the non-uniform diffraction efficiency function is selected such that when a light ray impinges on the grating a plurality of times, a predetermined and substantially constant fraction of the energy of the light is diffracted at each impingement.

According to still further features in the described preferred embodiments the grating is formed in the light transmissive substrate.

According to still further features in the described preferred embodiments the grating is attached to the light transmissive substrate.

According to one aspect of the present invention there is provided an optical relay device, comprising: a substrate, made at least in part of a light transmissive polymeric material characterized by a birefringence, $\Delta n$, satisfying the inequality $|\Delta n| < \varepsilon$, wherein $\varepsilon$ is lower than the birefringence of polycarbonate; and at least one diffractive optical element located on at least one surface of the substrate.

According to still further features in the described preferred embodiments the diffractive optical element(s) is formed on the at least one surface.

According to still further features in the described preferred embodiments the diffractive optical element(s) is attached to the at least one surface.

According to further features in preferred embodiments of the invention described below, the at least one diffractive optical element comprises an input diffractive optical element and at least one output diffractive optical element.

According to still further features in the described preferred embodiments the at least one diffractive optical element comprises a linear grating.

According to still further features in the described preferred embodiments the thickness of the substrate is sufficiently large so as to allow light having any wavelength within a predetermined spectrum and any striking angle within a predetermined range of angles, to propagate in the substrate via total internal reflection.

According to still further features in the described preferred embodiments the at least one diffractive optical element comprises an input diffractive optical element, a first output diffractive optical element and a second output diffractive optical element.

According to still further features in the described preferred embodiments the input diffractive optical element is designed and constructed for diffracting light striking the device at a plurality of angles within a predetermined field-of-view into the substrate, such that light corresponding to a first partial field-of-view propagates via total internal reflection to impinge on the first output diffractive optical element, and light corresponding to a second partial field-of-view propagates via total internal reflection to impinge on the second output diffractive optical element, the first partial field-of-

view being different from the second partial field-of-view.

According to another aspect of the present invention there is provided a system for providing an image to a user, comprising an optical relay device as described herein for transmitting an image into at least one eye of the user, and an image generating system for providing the optical relay device with collimated light constituting the image.

According to further features in preferred embodiments of the invention described below, the input diffractive optical element is designed and constructed for diffracting light originated from the image into the substrate such that a first partial field-of-view of the image propagates via total internal reflection to impinge on the first output diffractive optical element, and a second partial field-of-view of the image propagates via total internal reflection to impinge on the second output diffractive optical element, the first partial field-of-view being different from the second partial field-of-view.

According to still further features in the described preferred embodiments the image generating system comprises a light source, at least one image carrier and a collimator for collimating light produced by the light source and reflected or transmitted through the at least one image carrier.

According to still further features in the described preferred embodiments the image generating system comprises at least one miniature display and a collimator for collimating light produced by the at least one miniature display.

According to still further features in the described preferred embodiments the image generating system comprises a light source, configured to produce light modulated imagery data, and a scanning device for scanning the light modulated imagery data onto the input diffractive optical element.

According to yet another aspect of the present invention there is provided a method of manufacturing an optical relay device having at least one linear grating, comprising: forming a mold having at least one pattern corresponding to an inverted shape of the at least one linear grating; and contacting the mold with a light transmissive polymeric material characterized by low birefringence, so as to provide a substrate having the at least one linear grating formed on at least one surface thereof.

According to still further features in the described preferred embodiments the polymeric material comprises a cycloolefin polymer.

According to still further features in the described preferred embodiments the polymeric material comprises a polycyclic polymer.

According to still further features in the described preferred embodiments the light transmissive polymeric material comprises a copolymer.

According to still further features in the described preferred embodiments the copolymer comprises a cycloolefin copolymer.

According to still further features in the described preferred embodiments the copolymer comprises a polycyclic copolymer.

According to still further features in the described preferred embodiments the contacting is by injection molding.

According to still further features in the described preferred embodiments the light transmissive polymeric material is in a solid form. According to still further features in the described preferred embodiments the light transmissive polymeric material is in form of a substrate having optically flat surfaces. According to still further features in the described preferred embodiments the method further comprises coating at least one of the optically flat surfaces by a curable modeling material, prior to the contacting of the mold with the light transmissive polymeric material. According to still further features in the described preferred embodiments the contacting comprises pressing the mold against the light transmissive polymeric material in the solid form.

According to still further features in the described preferred embodiments at least one surface of the mold is formed by coating a master substrate having the at least one linear grating formed thereon by a metallic layer, and separating the metallic layer from the master substrate, thereby forming the at least one surface.

According to still further features in the described preferred embodiments the mold comprises a second surface which is substantially flat.

According to still further features in the described preferred embodiments the coating of the master substrate by the metallic layer comprises sputtering followed by electroplating.

According to still further features in the described preferred embodiments the method further comprises forming the master substrate.

According to still further features in the described preferred embodiments the master substrate is formed as follows: a first substrate is coated by a layer of curable modeling material; the first substrate is contacted with a second substrate having the inverted shape of the at least one linear grating formed thereon; the curable modeling material is cured to provide a cured layer patterned according to the shape of the at least one linear grating; and the first substrate is separated from the second substrate to expose the cured layer on the first substrate.

According to still further features in the described preferred embodiments the curable modeling material comprises at least one photopolymer component, and the step of curing the curable modeling material comprises irradiating the curable modeling material by electromagnetic radiation.

According to still further features in the described preferred embodiments the curable modeling material comprises at least one curable component, and the step of curing the curable modeling material comprises irradiating the curable modeling material by curing radiation.

According to still further features in the described preferred embodiments the curable modeling material comprises a thermally settable material, and the step of curing the curable modeling material comprises applying heat to the thermally settable material.

According to still further features in the described preferred embodiments the method further comprises, prior to the step of contacting the first substrate with the second substrate, forming the inverted shape of the at least one linear grating on the second substrate.

According to still further features in the described preferred embodiments the inverted shape of the at least one linear grating is formed on the second substrate by a ruling engine.

According to still further features in the described preferred embodiments the inverted shape of the at least one linear grating is formed on the second substrate by lithography followed by etching.

According to still further features in the described preferred embodiments the lithography comprises photolithography.

According to still further features in the described preferred embodiments the lithography comprises electron beam lithography.

The present invention successfully addresses the shortcomings of the presently known configurations by providing an optical relay device and a system incorporating the optical relay device.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. In case of conflict, the patent specification, including definitions, will control. In addition, the materials, methods, and examples are illustrative only and not intended to be limiting.

BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the drawings:

FIG. 1 is a schematic illustration of light diffraction by a linear diffraction grating operating in transmission mode;

FIGs. 2a-c are schematic illustrations of cross sectional views of an optical relay device according to various exemplary embodiments of the invention;

FIG. 2d is a schematic illustration of a rechtangular field-of-view of the optical relay device, according to various exemplary embodiments of the invention;

FIGs. 2e-f are schematic illustrations of field-of-view angles of the optical relay device, according to various exemplary embodiments of the invention;

FIGs. 3a-b are schematic illustrations of a perspective view (Figure 3a) and a side view (Figure 3b) of the optical relay device, in a preferred embodiment in which the device comprises one input optical element and two output optical elements, according to various exemplary embodiments of the present invention;

FIGs. 4a-b are fragmentary views schematically illustrating wavefront propagation within the optical relay device, according to preferred embodiments of the present invention;

FIGs. 5a-b are schematic illustrations of a fragmentary top view (Figure 5a) and a fragmentary side view (Figure 5b) of the relay device in a preferred embodiment in which one or more of the diffractive optical elements of the device comprises a grating;

FIG. 6 is a schematic illustration of a grating having a non-uniform duty cycle, according to various exemplary embodiments of the present invention;

FIG. 7 is a schematic illustration of a grating having a non-uniform modulation depth, according to various exemplary embodiments of the present invention;

FIG. 8 is a schematic illustration of a grating having a non-uniform duty cycle and a non-uniform modulation depth, according to various exemplary embodiments of the present invention;

FIG. 9 is a schematic illustration of binocular system, according to various exemplary embodiments of the present invention;

FIGs. 10a-c are schematic illustrations of a wearable device, according to various exemplary embodiments of the present invention;

FIGs. 11a-d is a graph showing numerical calculations of the diffraction efficiency of a grating as a function of the duty cycle, for impinging angles of 50° (Figures 11a-b) and 55° (Figures 11c-d), and modulation depths of 150 nm (Figures 11a and 11c) and 300 nm (Figures 11b and 11d);

FIGs. 12a-b is a graph showing numerical calculations of the diffraction efficiency of a grating as a function of the modulation depth, for duty cycle of 0.5 and impinging angles of 50° (Figure 12a) and 55° (Figure 12b)

FIGs. 13A-B are schematic illustrations of side view (Figure 13A) and a top view (Figure 13B) of an optical relay device, according to various exemplary embodiments of the present invention;

FIGs. 14A-B are schematic illustrations of a perspective view (Figure 14A) and a side view (Figure 14B) of the optical relay device of Figures 13A-B, in a preferred embodiment in which one input optical element and two output optical elements are employed;

FIGs. 15A-B are schematic illustrations of wavefront propagation within the optical relay device of Figures 13A-B, according to various exemplary embodiments of the present invention;

FIG. 16 is a schematic illustration of a system for providing an image to a user, according to various exemplary embodiments of the present invention;

FIGs. 17A-D are flowchart diagrams of method steps suitable for manufacturing the optical relay device, according to various exemplary embodiments of the present invention;

FIGs. 18A-L are schematic process illustrations describing various manufacturing steps of the optical relay device, according to various exemplary embodiments of the present invention; and

FIGs. 19A-B are graphs showing dimensionless birefringence as a function of the position across a material sample, for a polycarbonate sample (Figure 19A) and a cycloolefin polymer sample (Figure 19B).

<u>DESCRIPTION OF THE PREFERRED EMBODIMENTS</u>

The present embodiments comprise a device and system which can be used for transmitting light. Specifically, but not exclusively, the present embodiments can be used for providing virtual images. The present embodiments can be used in many applications in which virtual images are viewed, including, without limitation, eyeglasses, binoculars, head mounted displays, head-up displays, cellular telephones, personal digital assistants, aircraft cockpits and the like.

The principles and operation of a device and system according to the present invention may be better understood with reference to the drawings and accompanying descriptions.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

When a ray of light moving within a light-transmissive substrate and striking one of its internal surfaces at an angle $\phi_1$ as measured from a normal to the surface, it can be either reflected from the surface or refracted out of the surface into the open air in contact with the substrate. The condition according to which the light is reflected or refracted is determined by Snell's law, which is mathematically realized through the following equation:

$$n_A \sin \phi_2 = n_S \sin \phi_1, \qquad\qquad (EQ.\ 1)$$

where $n_S$ is the index of refraction of the light-transmissive substrate, $n_A$ is the index of refraction of the medium outside the light transmissive substrate ($n_S > n_A$), and $\phi_2$ is the angle in which the ray is refracted out, in case of refraction. Similarly to $\phi_1$, $\phi_2$ is measured from a normal to the surface. A typical medium outside the light transmissive substrate is air having an index of refraction of about unity.

As used herein, the term "about" refers to $\pm$ 10 %.

As a general rule, the index of refraction of any substrate depends on the specific wavelength $\lambda$ of the light which strikes its surface. Given the impact angle, $\phi_1$, and the refraction indices, $n_S$ and $n_A$, Equation 1 has a solution for $\phi_2$ only for $\phi_1$ which is smaller than arcsine of $n_A/n_S$ often called the critical angle and denoted $\alpha_c$. Hence, for sufficiently large $\phi_1$ (above the critical angle), no refraction angle $\phi_2$ satisfies Equation 1 and light energy is trapped within the light-transmissive substrate. In other words, the light is reflected from the internal surface as if it had stroked a mirror. Under these conditions, total internal reflection is said to take place. Since different wavelengths of light (*i.e.,* light of different colors) correspond to different indices of refraction, the condition for total internal reflection depends not only on the angle at which the light strikes the substrate, but also on the wavelength of the light. In other words, an angle which satisfies the total internal reflection condition for one wavelength may not satisfy this condition for a different wavelength.

When a sufficiently small object or sufficiently small opening in an object is placed in the optical path of light, the light experiences a phenomenon called diffraction in which light rays change direction as they pass around the edge of the object or at the opening thereof. The amount of direction change depends on the ratio between the wavelength of the light and the size of the object/opening. In planar optics there is a variety of optical elements which are designed to provide an appropriate condition for diffraction. Such optical elements are typically manufactured as diffraction gratings which are located on a surface of a light-transmissive substrate. Diffraction gratings can operate in transmission mode, in which case the light experiences diffraction by passing through the gratings, or in reflective mode in which case the light experiences diffraction while being reflected off the gratings

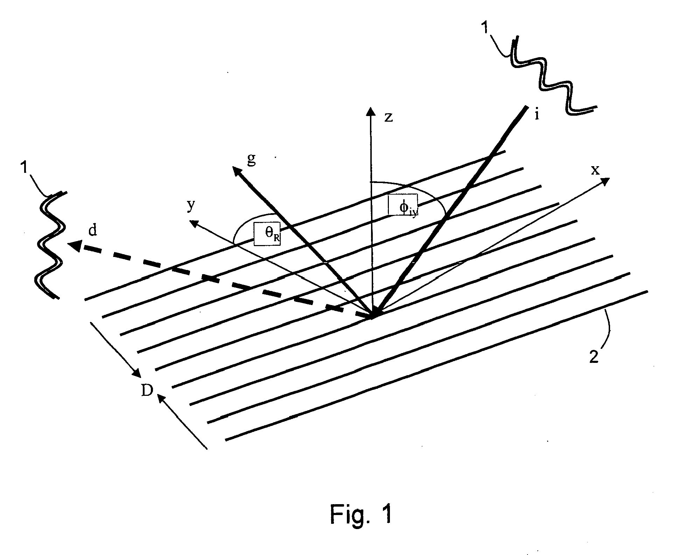

Figure 1 schematically illustrates diffraction of light by a linear diffraction grating operating in transmission mode. One of ordinary skills in the art, provided with the details described herein would know how to adjust the description for the case of reflection mode.

A wavefront **1** of the light propagates along a vector $\underline{i}$ and impinges upon a grating **2** engaging the $x$-$y$ plane. The normal to the grating is therefore along the $z$ direction and the angle of incidence of the light $\phi_i$ is conveniently measured between the vector $\underline{i}$ and the $z$ axis. In the description below, $\phi_i$ is decomposed into two angles, $\phi_{ix}$ and $\phi_{iy}$, where $\phi_{ix}$ is the incidence angle in the $z$-$x$ plane, and $\phi_{iy}$ is the incidence angle in the $z$-$y$ plane. For clarity of presentation, only $\phi_{iy}$ is illustrated in Figure 1.

The grating has a periodic linear structure along a vector $g$, forming an angle $\theta_R$ with the $y$ axis. The period of the grating (also known as the grating pitch) is denoted by $D$. The grating is formed on a light transmissive substrate having an index of refraction denoted by $n_s$.

Following diffraction by grating **2**, wavefront **1** changes its direction of propagation. The principal diffraction direction which corresponds to the first order of diffraction is denoted by $\underline{d}$ and illustrated as a dashed line in Figure 1. Similarly to the angle of incidence, the angle of diffraction $\phi_d$, is measured between the vector $\underline{d}$ and the $z$ axis, and is decomposed into two angles, $\phi_{dx}$ and $\phi_{dy}$, where $\phi_{dx}$ is the diffraction angle in the $z$-$x$ plane, and $\phi_{dy}$ is the diffraction angle in the $z$-$y$ plane.

The relation between the grating vector $\underline{g}$, the diffraction vector $\underline{d}$ and the incident vector $\underline{i}$ can therefore be expressed in terms of five angles ($\theta_R$, $\phi_{ix}$, $\phi_{iy}$, $\phi_{dx}$ and $\phi_{dy}$) and it generally depends on the wavelength $\lambda$ of the light and the grating period $D$ through the following pair of equations:

$$\sin(\phi_{ix}) - n_S \sin(\phi_{dx}) = (\lambda/D) \sin(\theta_R) \qquad (EQ.\ 2)$$

$$\sin(\phi_{iy}) + n_S \sin(\phi_{dy}) = (\lambda/D) \cos(\theta_R). \qquad (EQ.\ 3)$$

Without the loss of generality, the Cartesian coordinate system can be selected such that the vector $\underline{i}$ lies in the $y$-$z$ plane, hence $\sin(\phi_{ix}) = 0$. In the special case in which the vector $g$ lies along the $y$ axis, $\theta_R = 0°$ or $180°$, and Equations 2-3 reduce to the following one-dimensional grating equation:

$$\sin\phi_{iy} + n_S \sin\phi_{dy} = \pm\lambda/d. \qquad (EQ.\ 4)$$

According the known conventions, the sign of $\phi_{ix}$, $\phi_{iy}$, $\phi_{dx}$ and $\phi_{dy}$ is positive, if the angles are measured clockwise from the normal to the grating, and negative otherwise. The dual sign on the RHS of the one-dimensional grating equation relates to two possible orders of diffraction, +1 and -1, corresponding to diffractions in opposite directions, say, "diffraction to the right" and "diffraction to the left," respectively.

A light ray, entering a substrate through a grating, impinge on the internal surface of the substrate opposite to the grating at an angle which depends on the two diffraction components $\sin(\phi_{dx})$ and $\sin(\phi_{dy})$ according to the following equation:

$$\phi_d = \sin^{-1}\{[\sin^2(\phi_{dx}) + \sin^2(\phi_{dy})]^{1/2}\} \qquad (EQ.\ 5)$$

When $\phi_d$ is larger than the critical angle $\alpha_c$, the wavefront undergoes total internal reflection and begin to propagate within the substrate.

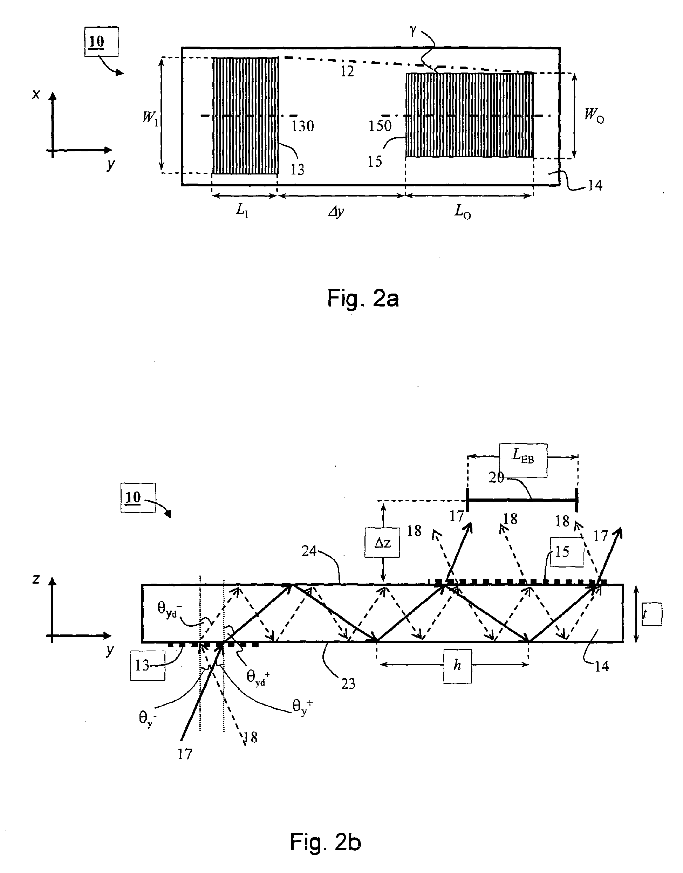

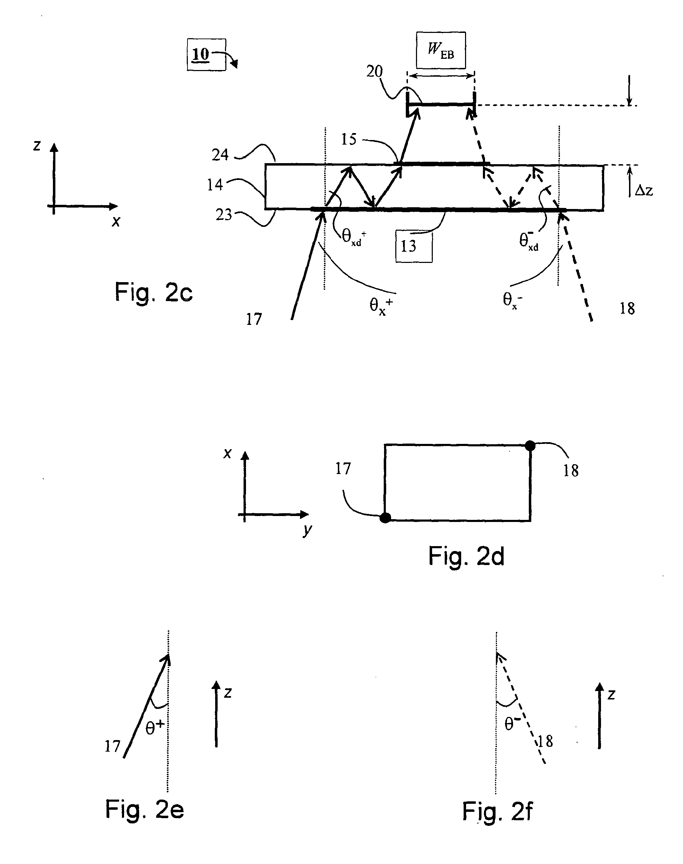

Reference is now made to Figures 2a-c which are schematic illustrations of cross sectional views of an optical relay device **10**, according to various exemplary embodiments of the present invention. Figures 2a, 2b and 2c illustrate cross sectional views of device **10** in the *x-y* plane, *y-z* plane and the *x-z* plane, respectively. Device **10** comprises a light-transmissive substrate **14**, an input optical element **13** and an output optical element **15**. The system of coordinates in Figures 2a-c is selected such that substrate **14** is orthogonal to the *z* axis, and optical elements **13** and **15** are laterally displaced along the *y* axis. Generally, the *z* axis is referred to as the "normal axis", the *y* axis is referred to as the "longitudinal axis" and the *x* axis is referred to as the "transverse axis" of device **10**. Thus, substrate **14** engages a plane spanned by the longitudinal direction (the *y* direction in the present coordinate system) and the transverse direction (the *x* direction in the present coordinate system).

Element **13** redirects the light into substrate **14** such that at least a few light rays experience total internal reflection and propagate within substrate **14**. Element **15** serves for redirecting at least a few of the propagating light rays out of substrate **14**. Each of elements **13** and **15** can be a refractive element, a reflective element or a diffractive element.

In embodiments in which a refractive element is employed, element **13** and/or element **15** can comprise a plurality of linearly stretched mini- or micro-prisms, and the redirection of light is generally by the refraction phenomenon described by Snell's law. Thus, for example, when both elements **13** and **15** are refractive elements, element **13** refracts the light into substrate **14** such that at least a few light rays experience total internal reflection and propagate within substrate **14**, and element **15** refracts at least a few of the propagating light rays out of substrate **14**. Refractive elements in the form of mini- or micro-prisms are known in the art and are found, *e.g.*, in U.S. Patent Nos. 5,969,869, 6,941,069 and 6,687,010, the contents of which are hereby incorporated by reference.

In embodiments in which a reflective element is employed, element **13** and/or element **15** can comprises a plurality of dielectric mirrors, and the redirection of light is generally by the reflection phenomenon, described by the basic law of reflection. Thus, for example, when both elements **13** and **15** are reflective elements, element **13** reflects the light into substrate **14** such that at least a few light rays experience total internal reflection and propagate within substrate **14**, and element **15** reflects at least a few of the propagating light rays out of substrate **14**. Reflective elements in the form of dielectric mirrors are known in the art and are found, *e.g.*, in U.S. Patent Nos. 6,330,388 and 6,766,082, the contents of which are hereby incorporated by reference.

Element **13** and/or element **15** can also combine reflection with refraction. For example, element **13** and/or element **15** can comprise a plurality of partially reflecting surfaces located in substrate **14**. In this embodiment, the partially reflecting surfaces are preferably parallel to each other. Optical elements of this type are known in the art and found, *e.g.,* in U.S. Patent No. 6,829,095, the contents of which are hereby incorporated by reference.

In embodiments in which diffractive element is employed, element **13** and/or **15** can comprise a grating and the redirection of light is generally by the diffraction phenomenon. Thus, for example, when both elements **13** and **15** are diffractive elements, element **13** diffracts the light into substrate **14** such that at least a few light rays experience total internal reflection and propagate within substrate **14**, and element **15** diffracts at least a few of the propagating light rays out of substrate **14**.

The term "diffracting" as used herein, refers to a change in the propagation direction of a wavefront, in either a transmission mode or a reflection mode. In a transmission mode, "diffracting" refers to change in the propagation direction of a wavefront while passing through the diffractive element; in a reflection mode, "diffracting" refers to change in the propagation direction of a wavefront while reflecting off the diffractive element in an angle different from the basic reflection angle (which is identical to the angle of incidence). In the exemplified illustration of Figure 2b, elements **13** and **15** are transmissive elements, *i.e.*, they operates in transmission mode.

Input element **13** is designed and constructed such that the angle of light rays redirected thereby is above the critical angle, and the light propagates in the substrate via total internal reflection. The propagated light, after a few reflections within substrate **14**, reaches output element **15** which redirects the light out of substrate **14**.

Element **13** and/or element **15** is optionally and preferably a linear diffraction grating, operating according to the principles described above. When both elements **13** and **15** are linear ratings, their periodic linear structures are preferably substantially parallel. Elements **13** and **15** can be formed on or attached to any of the surfaces **23** and **24** of substrate **14**. Substrate **14** can be made of any light transmissive material, preferably, but not obligatorily, a martial having a sufficiently low birefringence. Element **15** is laterally displaced from element **13**. A preferred lateral separation between the elements is from a few millimeters to a few centimeters.

Device **10** is preferably designed to transmit light striking substrate **14** at any striking angle within a predetermined range of angles, which predetermined range of angles is referred to of the field-of-view of the device.

The input optical element is designed to trap all light rays in the field-of-view within the substrate. A field-of-view can be expressed either inclusively, in which case its value corresponds to the difference between the minimal and maximal incident angles, or explicitly in which case the field-of-view has a form of a mathematical range or set. Thus, for example, a field-of-view, $\Omega$, spanning from a minimal incident angle, $\alpha$, to a maximal incident angle, $\beta$, is expressed inclusively as $\Omega = \beta - \alpha$, and exclusively as $\Omega = [\alpha, \beta]$. The minimal and maximal incident angles are also referred to as rightmost and leftmost incident angles or counterclockwise and clockwise field-of-view angles, in any combination. The inclusive and exclusive representations of the field-of-view are used herein interchangeably.

The field-of-view of device **10** is illustrated in Figures 2b-f by two of its outermost light rays, generally shown at **17** and **18**.

Figure 2b and 2c illustrate the projections of rays **17** and **18** on two planes which are parallel to the normal axis of device **10**. Specifically, Figure 2b illustrates the projections of rays **17** and **18** on a plane containing the longitudinal axis of device **10** (the *y-z* plane in the present coordinate system) and Figure 2c illustrates the projections of rays **17** and **18** on a plane containing the transverse axis of device **10** (the x-z plane in the present coordinate system).

Below, the terms "longitudinal field-of-view" and "transverse field-of-view" will be used to describe the ranges angles within the field-of-view as projected on the *y-z* and x-z planes respectively.

Thus, Figure 2b schematically illustrates the longitudinal field-of-view and Figure 2c schematically illustrates the transverse field-of-view of device **10**. In the longitudinal field-of-view illustrated in Figure 2b, the projection of ray **18** is the rightmost ray projection which forms with the normal axis an angle denoted $\theta_y^-$, and the projection of ray **17** is the leftmost ray projection which forms with the normal axis an angle denoted $\theta_y^+$. In the transverse field-of-view illustrated in Figure 2c, the projection of ray **18** is the rightmost ray projection which forms with the normal axis an angle denoted $\theta_x^-$, and the projection of ray **17** is the leftmost ray projection which forms with the normal axis an angle denoted $\theta_x^+$. When substrate **14** is held with the transverse axis directed upwards, the projection of ray **18** is viewed as the uppermost ray projection and the projection of ray **17** is viewed as the lowermost ray projection.

In exclusive representations, the longitudinal field-of-view, denoted $\Omega_y$, is $[\theta_y^-, \theta_y^+]$ and the transverse field-of-view, denoted $\Omega_x$ is $[\theta_x^-, \theta_x^+]$. In the exemplified illustration of Figures 2b and 2c the projections $\theta_x^-$, $\theta_y^-$ are measured anticlockwise from the normal axis (the *z* axis in Figures 2b and 2c), and the projections $\theta_x^+$, $\theta_y^+$ are measured clockwise from the normal axis. Thus, according to the above convention, $\theta_x^-$, $\theta_y^-$ have negative values and $\theta_x^+$, $\theta_y^+$ have positive values, resulting in a longitudinal field-of-view $\Omega_y = \theta_y^+ + |\theta_y^-|$, and a transverse field-of-view $\Omega_x = \theta_x^+ + |\theta_x^-|$, in inclusive representations.

Figure 2d schematically illustrates the field-of-view in a plane orthogonal to the normal axis of device **10** (parallel to the *x-y* plane, in the present coordinate system). Rays **17** and **18** are points on this plane. For the purpose of simplifying the presentation, the field-of-view is illustrated as a rectangle, and the straight light connecting the points is the diagonal of the rectangle. Rays **17** and **18** are referred to as the "lower-left" and "upper-right" light rays of the field-of-view, respectively.

It is appreciated that the field-of-view can also have a planar shape other than a rectangle, include, without limitation, a square, a circle and an ellipse. One of ordinary skills in the art, provided with the details described herein would know how to adjust the description for non-rectangle field-of-view.

In exclusive representation, the diagonal field-of-view of device **10** is given by $\Omega = [\theta^-, \theta^+]$, where $\theta^-$ the angle between ray **17** and a line intersecting ray **17** and being parallel to the normal axis, and $\theta^+$ is the angle between ray **18** and a line intersecting ray **18** and being parallel to the normal axis. Figures 2e and 2f illustrate the diagonal field-of-view angles $\theta^-$ and $\theta^+$ in planes containing ray **17** and ray **18,** respectively. The relation between $\theta^\pm$ and their projections $\theta_x^\pm$, $\theta_y^\pm$ are given by Equation 5 above with the substitutions $\phi_d \rightarrow \theta^\pm$, $\phi_{dx} \rightarrow \theta_x^\pm$ and $\phi_{dy} \rightarrow \theta_y^\pm$. Unless specifically stated otherwise, the term "field-of-view angle" refers to a diagonal angle, such as $\theta^\pm$.

The light rays arriving to device **10** can have one or more wavelength. When the light has a plurality of wavelengths, the shortest wavelength is denoted $\lambda_B$ and the longest wavelength is denoted $\lambda_R$, and the range of wavelengths from $\lambda_B$ to $\lambda_R$ is referred to herein as the spectrum of the light.

Irrespectively of the number of different wavelengths of the light, when the light rays in the field-of-view impinge on element **13,** they are preferably redirected at an angle (defined relative to the normal) which is larger than the critical angle, such that upon striking the other surface of substrate **14,** all the light rays of the field-of view experiences total internal reflection and propagate within substrate **14.**

In the representative illustration of Figures 2b-c, element **13** diffracts leftmost ray **17** and rightmost ray **18** into substrate **14** at diffraction angles denoted $6_d^+$ and $\theta_d^-$, respectively. Shown in Figures 2b-c are $\theta_{yd}^\pm$ (Figure 2b) and $\theta_{xd}^\pm$ (Figure 2b), which are the projections of $\theta_d^\pm$ on the *y-z* plane and the *x-z* plane, respectively.

While propagating, the rays are reflected from the internal surfaces of substrate **14**. The Euclidian distance between two successive points on the internal surface of the substrate at which a particular light ray experiences total internal reflection is referred to as the "hop length" of the light ray and denoted by "*h*". The propagated light, after a few reflections within substrate **14,** generally along the longitudinal axis of device **10,** reaches output optical element **15** which redirects the light out of substrate **14**. Device **10** thus transmits at least a portion of the optical energy carried by each light ray between rays **17** and **18**. When the light rays within the field-of-view originate from an object which emits or reflects light, a viewer can position one or two eyes in front of element **15** to see a virtual image of the object.

As shown in Figure 2b, for a single impingement of a light ray on output element **15**, only a portion of the light energy exits substrate **14**. The remnant of each ray is redirected through an angle, which causes it, again, to experience total internal reflection from the other side of substrate **14**. After a first reflection, the remnant may re-strike element **15,** and upon each such re-strike, an additional part of the light energy exits substrate **14**. Thus, a light ray propagating in the substrate via total internal reflection exits the substrate in a form of a series of parallel light rays where the distance between two adjacent light rays in the series is *h*. Such series of parallel light rays corresponds to a collimated light beam exiting element **15**. Since more than one light ray exit as a series of parallel light rays, a beam of light passing through device **10** is expanded in a manner that the cross sectional area of the outgoing beam is larger than cross sectional area of the incoming beam.

According to a preferred embodiment of the present invention output optical element **15** is characterized by planar dimensions selected such that at least a portion of one or more outermost light rays within the field-of-view is directed to a two-dimensional region **20** being at a predetermined distance $\Delta z$ from light transmissive substrate **14**. More preferably, the planar dimensions of element **15** are selected such that the outgoing light beam enters region **20**.

To ensure entering of the outermost light ray or the entire outgoing light beam into region **20**, the length $L_O$ of element **15** is preferably selected to be larger then a predetermined length threshold, $L_{O, min}$, and the width $W_O$ of element **15** is preferably selected to be larger then a predetermined width threshold, $W_{O, min}$. In various exemplary embodiments of the invention the length and width thresholds are given by the following expressions:

$$L_{O, min} = 2 \, \Delta z \, \tan(\Omega_y/2)$$

$$W_{O, min} = 2 \, \Delta z \, \tan(\Omega_x/2). \qquad \text{(EQ. 6)}$$

When device **10** is used for viewing a virtual image, the user may place his or her eye(s) within region **20** to view the virtual image. Thus, in this embodiment, region **20** is the "eye-box" of device **10**, and $\Delta z$ is approximately the distance between the pupil(s) of the user to substrate **14**. The distance $\Delta z$ is referred to herein as the characteristic eye-relief of device **10**. For transmitting an image to one eye, the length $L_O$ and width $W_O$ of element **15** are preferably about $L_{O, min} + O_p$, and about $W_{O, min} + O_p$, respectively, where $O_p$ represents the diameter of the pupil and is typically about 3 millimeters. In various exemplary embodiments of the invention the eye-box is larger than the diameter of the pupil, so as to allow the user to relocate the eye within the eye-box while still viewing the entire virtual image. Thus, denoting the dimensions of region **20** by $L_{EB}$ and $W_{EB}$, where $L_{EB}$ is measured along the *y* axis and $W_{EB}$ is measured along the *x* axis, the length and width of element **15** are preferably:

$$L_O = L_{O, min} + L_{EB}$$

$$W_O = W_{O, min} + W_{EB}, \qquad \text{(EQ. 7)}$$

where each of $L_{EB}$ and $W_{EB}$ is preferably larger than $O_p$, so as to allow the user to relocate the eye within region **20** while still viewing the entire field-of-view.

The dimensions of input optical element **13** are preferably selected to allow all light rays within the field-of-view to propagate in substrate **14** such as to impinge on the area of element **15**. In various exemplary embodiments of the invention the length $L_I$ of input element **13** equals from about *X* to about 3*X* where *X* is preferably a unit hop-length characterizing the propagation of light rays within substrate **14**. Typically, *X* equals the hop-length of the light-ray with the minimal hop-length, which is one of the outermost light-rays in the field-of-view (ray **18** in the exemplified illustration of Figure 2b). When the light has a plurality of wavelengths, *X* is typically the hop-length of one of the outermost light-rays which has the shortest wavelength of the spectrum.

According to a preferred embodiment of the present invention the width $W_O$ of element **15** is smaller than the width $W_I$ of element **13**. $W_I$ is preferably calculated based on the relative arrangement of elements **13** and **15**. For example, in one embodiment, elements **13** and **15** are centrally aligned with respect to the transverse axis of device **10** (but laterally displaced along the longitudinal axis and optionally displaced also along the normal axis). In the present coordinate system this central alignment correspond to equal *x* coordinate for a central width line **130** (connecting half width points of element **13**) and a central width line **150** (connecting half width points of element **15**). In this embodiment, the relation between $W_I$ is preferably given by the following expression:

$$W_I = 2 \, (L_O + \Delta y) \, \tan \gamma + W_O, \qquad \text{(EQ. 8)}$$

where $\Delta y$ is the lateral separation between element **13** and element **15** along the longitudinal axis of device **10** and $\gamma$ is

a predetermined angular parameter. Geometrically, $\gamma$ is the angle formed between the longitudinal axis and a straight line connecting the corner of element **13** which is closest to element **15** and the corner of element **15** which is farthest from element **13** (see, *e.g.*, line **12** in Figure 2a).

Preferably, $\gamma$ relates to the propagation direction of one or more of the outermost light rays of the field-of-view within the substrate, as projected on a plane parallel to the substrate. In various exemplary embodiments of the invention $\gamma$ equals the angle formed between the longitudinal axis of the substrate and the propagation direction of an outermost light ray of the field-of-view, as projected on a plane parallel to the substrate.

Consider, for example, the "upper-right" light ray of the field-of-view impinging on element **13** at a field-of-view angle $\theta^-$ which is decomposed, according to the Cartesian coordinate system described above, into of angles $\theta_x^-$ (measured in the *x-z* plane) and $\theta_y^-$ (measured in the *y-z* plane). Using Equations 2 and 3 above, the corresponding components $\theta_{xd}$ and $\theta_{yd}$ of the diffraction angle $\theta_d$ can be calculated, *e.g.*, by selecting a value of 0° to $\theta_R$. The propagation of the "upper-right" light ray in the substrate, can then be projected on a plane parallel to the substrate (the *x-y* plane in the present coordinate system), thereby forming a vector in the *x-y* plane. According to a preferred embodiment of the present invention $\gamma$ is set to the angle formed between the projected vector and the *y* axis, which can be written in the form: $\gamma = \tan^{-1}[\sin(\theta_{xd})/\sin(\theta_{yd})]$. A typical value for the absolute value of $\gamma$ is, without limitation, from about 6° to about 15°.

Thus, a viewer placing his or her eye in region **20** of dimensions $L_{EB} \times W_{EB}$, receives at least a portion of any light ray within the field-of-view, provided the distance between the eye and element **15** equals $\Delta z$ or is smaller than $\Delta z$.

The preferred value for $\Delta z$ is, without limitation, from about 15 millimeters to about 35 millimeters, the preferred value for $\Delta y$ is, without limitation, from a few millimeters to a few centimeters, the preferred value for $L_{EB}$ is, without limitation, from about 5 millimeters to about 13 millimeters, and the preferred value for $W_{EB}$ is, without limitation, is from about 4 millimeters to about 9 millimeters. For a given field-of-view, selection of large $\Delta z$ results in smaller eye-box dimensions $L_{EB}$ and $W_{EB}$, as known in the art. Conversely, small $\Delta z$ allows for larger eye-box dimensions $L_{EB}$ and $W_{EB}$.

$L_{O, min}$ and $W_{O, min}$ are preferably calculated using Equation 6, and together with the selected dimensions of region **20** ($L_{EB}$ and $W_{EB}$), the dimensions of element **15** ($L_O$ and $W_O$) can be calculated using Equation 7.

Once $L_O$ and $W_O$ are calculated, the transverse dimension $W_1$ of input element **13** is preferably calculated by selecting values for $\Delta y$ and $\gamma$ and using Equation 8. The longitudinal dimension $L_1$ is generally selected from about 3 millimeters and about 15 millimeters.

In a preferred embodiment in which surfaces **23** and **24** of substrate **14** are substantially parallel, elements **13** and **15** can be designed, for a given spectrum, solely based on the value of $\theta^-$ and the value of the shortest wavelength $\lambda_B$. For example, when the optical elements are linear gratings, the period, $D$, of the gratings can be selected based on $\theta^-$ and $\lambda_B$, irrespectively of the optical properties of substrate **14** or any wavelength longer than $\lambda_B$.

According to a preferred embodiment of the present invention $D$ is selected such that the ratio $\lambda_B/D$ is from about 1 to about 2. A preferred expression for $D$ is given by the following equation:

$$D = \lambda_B/[n_A(1 - \sin \theta^-)]. \qquad \text{(EQ. 9)}$$

It is appreciated that $D$, as given by Equation 9, is a maximal grating period. Hence, in order to accomplish total internal reflection $D$ can also be smaller than $\lambda_B/[n_A(1-\sin \theta^-)]$.

Substrate **14** is preferably selected such as to allow light having any wavelength within the spectrum and any striking angle within the field-of-view to propagate in substrate **14** via total internal reflection.

According to a preferred embodiment of the present invention the refraction index of substrate **14** is larger than $\lambda_R/D + n_A\sin(\theta^+)$. More preferably, the refraction index, $n_S$, of substrate **14** satisfies the following equation:

$$n_S \geq [\lambda_R/D + n_A\sin(\theta^+)]/\sin(\alpha_D^{MAX}). \qquad \text{(EQ. 10)}$$

where $\alpha_D^{MAX}$ is the largest diffraction angle, *e.g.*, the diffraction angle of the light ray **17**. There are no theoretical limitations on $\alpha_D^{MAX}$, except from a requirement that it is positive and smaller than 90 degrees. $\alpha_D^{MAX}$ can therefore have any positive value smaller than 90°. Various considerations for the value $\alpha_D^{MAX}$ are found in U.S. Patent No. 6,757,105, the contents of which are hereby incorporated by reference.

The thickness, *t*, of substrate **14** is preferably from about 0.1 mm to about 5 mm, more preferably from about 1 mm to about 3 mm, even more preferably from about 1 to about 2.5 mm. For multicolor use, *t* is preferably selected to allow simultaneous propagation of plurality of wavelengths, *e.g.*, $t > 10\lambda_R$. The width/length of substrate **14** is preferably from about 10 mm to about 100 mm. A typical width/length of the diffractive optical elements depends on the application for which device **10** is used. For example, device **10** can be employed in a near eye display, such as the display described in U.S. Patent No. 5,966,223, in which case the typical width/length of the diffractive optical elements is from about 5 mm to about 20 mm. The contents of U.S. Patent Application No. 60/716,533, which provides details as to the design of the diffractive optical elements and the selection of their dimensions, are hereby incorporated by reference.

For different viewing applications, such as the application described in U.S. Patent No. 6,833,955, the contents of which are hereby incorporated by reference, the length of substrate **14** can be 1000 mm or more, and the length of diffractive optical element **15** can have a similar size. When the length of the substrate is longer than 100 mm, then $t$ is preferably larger than 5 millimeters. This embodiment is advantageous because it reduces the number of hops and maintains the substrate within reasonable structural/mechanical conditions.

Device **10** is capable of transmitting light having a spectrum spanning over at least 100 nm. More specifically, the shortest wavelength, $\lambda_B$, generally corresponds to a blue light having a typical wavelength of between about 400 to about 500 nm and the longest wavelength, $\lambda_R$, generally corresponds to a red light having a typical wavelength of between about 600 to about 700 nm.

As can be understood from the geometrical configuration illustrated in Figures 2b-c, the angles at which light rays **18** and **17** are redirected can differ. As the angles of redirection depend on the incident angles (see, *e.g.*, Equations 2-5 for the case of diffraction), the allowed clockwise ($\theta^+$) and anticlockwise ($\theta^-$) field-of-view angles, are also different. Thus, device **10** supports transmission of asymmetric field-of-view in which, say, the clockwise field-of-view angle is greater than the anticlockwise field-of-view angle. The difference between the absolute values of the clockwise and anticlockwise field-of-view angles can reach more than 70 % of the total field-of-view.

This asymmetry can be exploited in accordance with various exemplary embodiments of the present invention, to enlarge the field-of-view of optical device **10**. According to a preferred embodiment of the present invention, a light-transmissive substrate can be formed with at least one input optical element and two or more output optical elements. The input optical element(s) serve for redirecting the light into the light-transmissive substrate in a manner such that different portions of the light, corresponding to different partial field-of-views, propagate within the substrate in different directions to thereby reach the output optical elements. The output optical elements redirect the different portions of the light out of the light-transmissive substrate.

In accordance with the present embodiments, the planar dimensions of the output and/or input optical elements can be selected to facilitate the transmission of the partial field-of-views. The output optical elements can also be designed and constructed such that the redirection of the different portions of the light is in complementary manner.

The terms "complementarily" or "complementary," as used herein in conjunction with a particular observable or quantity (*e.g.*, field-of-view, image, spectrum), refer to a combination of two or more overlapping or non-overlapping parts of the observable or quantity, which combination provides the information required for substantially reconstructing the original observable or quantity.

In various exemplary embodiments of the invention, the optical elements of the optical relay device are designed to transmit an image covering a wide field-of-view to both eyes of the user (*e.g.*, using one input element and two output elements). Preferably, the optical relay device of the present embodiments is characterized by a diagonal field-of-view of at least 16° (corresponding to longitudinal field-of-view of about 12°), more preferably at least 20° (corresponding to longitudinal field-of-view of about 15°), more preferably at least 24° (corresponding to longitudinal field-of-view of about 18°), more preferably at least 32° (corresponding to longitudinal field-of-view of about 24°). The optical elements are preferably located at fixed locations on the light transmissive substrate, but provide the image for any interpupillary distance from a minimal value denoted $IPD_{min}$ to a maximal value denoted $IPD_{max}$.

The advantage of the present embodiments is that any user with an interpupillary distance IPD satisfying $IPD_{min} \leq IPD \leq IPD_{max}$ can use the device to view the entire image without having to adjust the size of the device or the separation between the optical elements. The range of IPD in western society grown-ups is from about 53 mm to about 73 mm. Children have further smaller IPD. Other human races generally have different ranges of IPD. A preferred value for $IPD_{min}$ is from about 5mm to about 20 millimeters less than the selected value for $IPD_{max}$, more preferably from about 5mm to about 10 millimeters less than the selected value for $IPD_{max}$, and the two values are preferably selected within the range of human IPD as described above.

Any number of input/output optical elements can be used. Additionally, the number of input optical elements and the number of output optical elements may be different, as two or more output optical elements may share the same input optical element by optically communicating therewith. The input and output optical elements can be formed on a single substrate or a plurality of substrates, as desired. For example, in one embodiment, the input and output optical elements comprise linear diffraction gratings of identical periods, formed on a single substrate, preferably in a parallel orientation.

If several input/output optical elements are formed on the same substrate, as in the above embodiment, they can engage any side of the substrate, in any combination.

One ordinarily skilled in the art would appreciate that this corresponds to any combination of transmissive and reflective optical elements. Thus, for example, suppose that there is one input optical element, formed on surface **23** of substrate **14** and two output optical elements formed on surface **24.** Suppose further that the light impinges on surface **23** and it is desired to diffract the light out of surface **24**. In this case, the input optical element and the two output optical elements are all transmissive, so as to ensure that entrance of the light through the input optical element, and the exit of the light through the output optical elements. Alternatively, if the input and output optical elements are all formed on surface **23,** then the input optical element remain transmissive, so as to ensure the entrance of the light therethrough, while the output optical elements are reflective, so as to reflect the propagating light at an angle which is sufficiently small to couple the light out. In such configuration, light can enter the substrate through the side opposite the input optical element, be diffracted in reflection mode by the input optical element, propagate within the light transmissive substrate in total internal diffraction and be diffracted out by the output optical elements operating in a transmission mode.

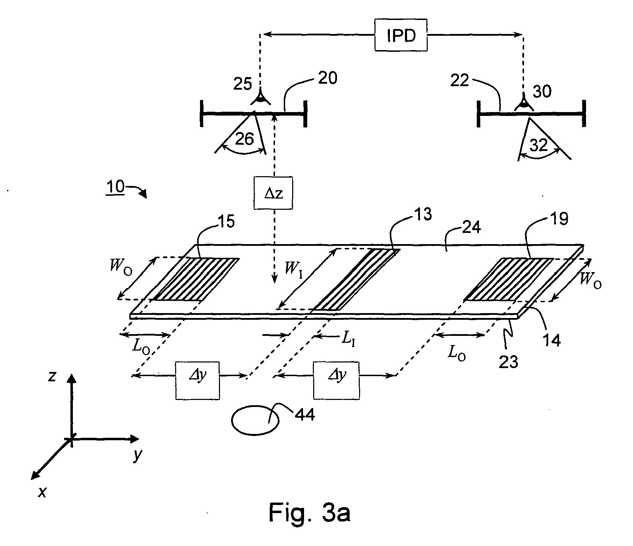

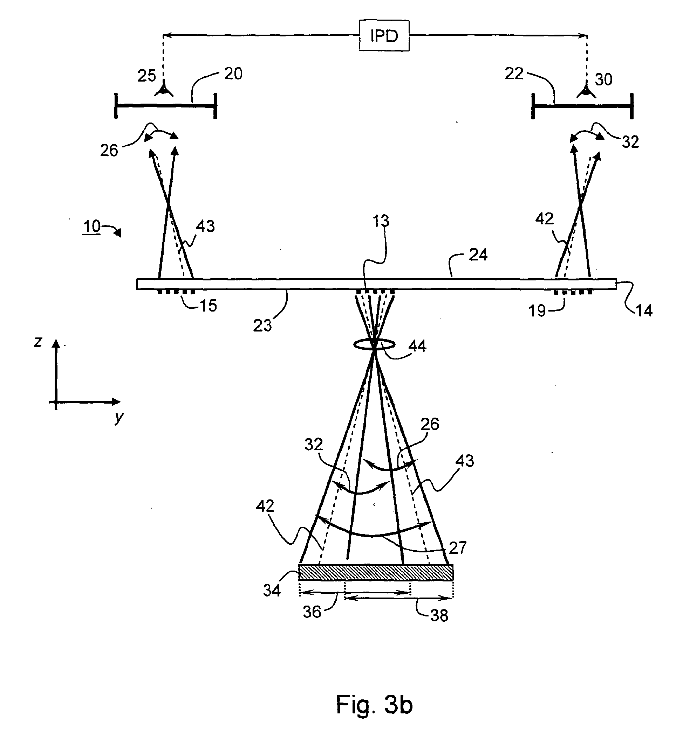

Reference is now made to Figures 3a-b which are schematic illustrations of a perspective view (Figure 3a) and a side view (Figure 3b) of device **10,** in a preferred embodiment in which one input optical element **13** and two output optical elements **15** and **19** are employed. In this embodiment, device **10** can be used as a binocular device for transmitting light to a first eye **25** and a second eye **30** of a user characterized by an interpupillary distance, IPD.

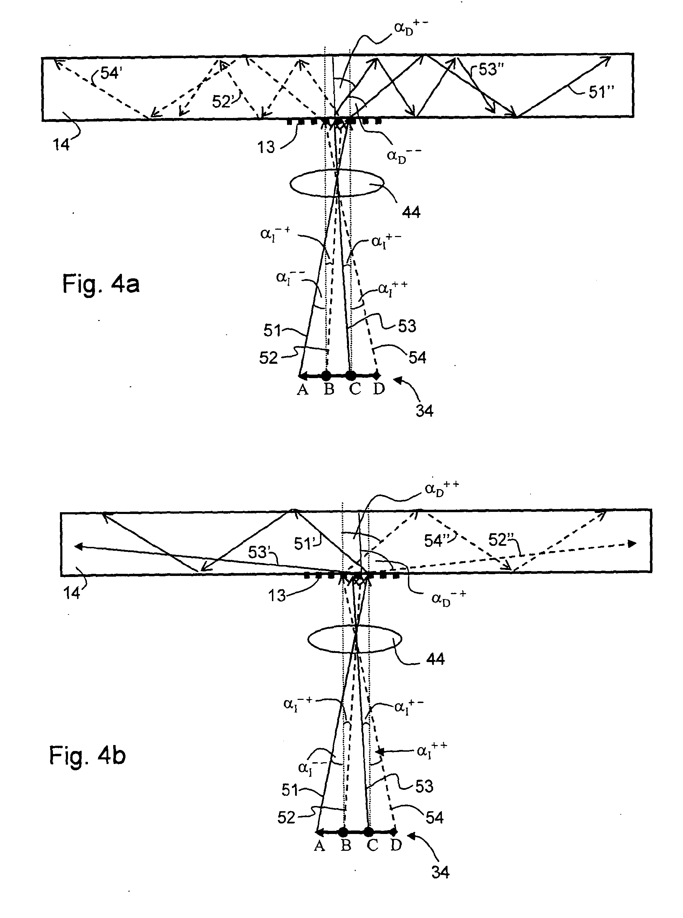

In Figure 3b, first **15** and second **19** output optical elements are formed, together with input optical element **13,** on surface **23** of substrate **14**. However, as stated, this need not necessarily be the case, since, for some applications, it may be desired to form the input/output optical elements on any of the surfaces of substrate **14,** in an appropriate transmissive/reflective combination. Wavefront propagation within substrate **14,** according to various exemplary embodiments of the present invention, is further detailed hereinunder with reference to Figures 4a-b.

Element **13** preferably redirects the incoming light into substrate **14** in a manner such that different portions of the light, corresponding to different partial fields-of-view, propagate in different directions within substrate **14.** In the configuration exemplified in Figures 3a-b, element **13** redirects light rays within one asymmetric partial field-of-view, designated by reference numeral **26,** leftwards to impinge on element **15,** and another asymmetric partial field-of-view, designated by reference numeral **32,** to impinge on element **19**. Elements **15** and **19** complementarily redirect the respective portions of the light, or portions thereof, out of substrate **14,** to provide first eye **25** with partial field-of-view **26** and second eye **30** with partial field-of-view **32.**

Partial field-of-views **26** and **32** form together the field-of-view **27** of device 10. Similarly to the embodiments in which one output optical element is employed (see, *e.g.*, Figures 2a-c) elements **15** and **19** are characterized by planar dimensions selected such that at least a portion of one or more outermost light rays within partial field-of-view **26** is directed to two-dimensional region **20,** and at least a portion of one or more outermost light rays within partial field-of-view **32** is directed to another two-dimensional region **22**. This can be achieved by selecting the lengths and widths of elements **15** and **19** to be larger then predetermined length and width thresholds, as described above (see Equations 6-7).

Preferably, but not obligatorily, the planar dimensions of region **20** equal the planar dimensions of region **22**. Thus, the planar dimensions of each of regions **20** and **22** as well as the distance $\Delta z$ are preferably within the aforementioned ranges.

In various exemplary embodiments of the invention the lateral separation between the longitudinal centers of regions **20** and **22** is at least 40 millimeters. Preferably, the lateral separation between the longitudinal centers of regions **20** and **22** is less than 80 millimeters. According to a preferred embodiment of the present invention the planar dimensions of elements **15** and **19** are selected such that the portions of outermost light rays are respectively directed to regions **20** and **22,** for any lateral separation between the regions which is larger than 40 millimeters and smaller than 80 millimeters.

When device **10** is used for transmitting light to the eyes of the user, the planar dimensions of elements **15** and **19** are preferably selected such that eyes **25** and **30** are respectively provided with partial field-of-views **26** and **32** for any interpupillary distance IPD satisfying $\text{IPD}_{min} \leq \text{IPD} \leq \text{IPD}_{max}$.

This is preferably ensured by selecting the lengths $L_{EB}$ of regions **20** and **22** according to the following weak inequality:

$$L_{EB} \geq (\text{IPD}_{max} - \text{IPD}_{min})/2. \qquad (\text{EQ. } 11)$$

Once $L_{EB}$ is selected to satisfy Equation 11, the lengths and widths of output elements **15** and **19** can be set according to Equations 7 substantially as described hereinabove. According to a preferred embodiment of the present invention the longitudinal center of each of elements **15** and **19** is located at a distance of $(\text{IPD}_{max} + \text{IPD}_{min})/4$ from the longitudinal center of element **13**.

The width $W_1$ of element **13** is preferably larger than width of each of elements **15** and **19**. The calculation of $W_1$ is preferably, but not obligatorily, performed using a procedure similar to the procedure described above, see Equation 8. When it is desired to manufacture a symmetric optical relay, the same planar dimensions $L_O \times W_O$ are used for both output elements **15** and **19,** and the same lateral separation $\Delta y$ is used between elements **13** and **15** and between elements **13** and **19.** In this case, the width $W_1$ of the input element can be set according to Equation 8 using the angular parameter $\gamma$ as described above. Equation 8 can also be used in for configuration in which the lateral separation between elements **13** and **15** differs from the lateral separation between elements **13** and **19.** In this case the value of $\Delta y$ which is used in the calculation is preferably set to the larger of the two lateral separations.

When device **10** is used for transmitting an image **34,** field-of-view **27** preferably includes substantially all light rays originated from image **34.** Partial fields-of-view **26** and **32** can therefore correspond to different parts of image **34,** which different parts are designated in Figure 3b by numerals **36** and **38.** Thus, as shown in Figure 3b, there is at least one light ray **42** which enters device **10** via element **13** and exits device **10** via element **19** but not via element **15.** Similarly, there is at least one light ray **43** which enters device **10** via element **13** and exits device **10** via element **15** but not via element **19.**

Generally, the partial field-of-views, hence also the parts of the image arriving to each eye depend on the wavelength of the light. Therefore, it is not intended to limit the scope of the present embodiments to a configuration in which part **36** is viewed by eye **25** and part **38** viewed by eye **30.** In other words, for different wavelengths, part **36** is viewed by eye **30** and part **38** viewed by eye **25.** For example, when the image is constituted by a light having three colors: red, green and blue, device **10** can be constructed such that eye **25** sees part **38** for the blue light and part **36** for the red light, while eye **30** sees part **36** for the blue light and part **38** for the red light. In such configuration, both eyes see an almost symmetric field-of-view for the green light. Thus, for every color, the two partial fields-of-view compliment each other.

The human visual system is known to possess a physiological mechanism capable of inferring a complete image based on several parts thereof, provided sufficient information reaches the retinas. This physiological mechanism operates on monochromatic as well as chromatic information received from the rod cells and cone cells of the retinas. Thus, in a cumulative nature, the two asymmetric field-of-views, reaching each individual eye, form a combined field-of-view perceived by the user, which combined field-of-view is wider than each individual asymmetric field-of-view.

According to a preferred embodiment of the present invention, there is a predetermined overlap between first **26** and second **32** partial fields-of-view, which overlap allows the user's visual system to combine parts **36** and **38** of image **34,** thereby to perceive the image, as if it has been fully observed by each individual eye.

For example, the optical elements can be constructed such that the exclusive representations of partial fields-of-view **26** and **32** are, respectively, [-$\alpha$, $\beta$] and [-$\beta$, $\alpha$], resulting in a symmetric combined field-of-view **27** of [-$\beta$, $\beta$]. It will be appreciated that when $\beta >> \alpha > 0$, the combined field-of-view is considerably wider than each of the asymmetric field-of-views. Device **10** is capable of transmitting a field-of-view of at least 20 degrees, more preferably at least 30 degrees most preferably at least 40 degrees, in inclusive representation.

When the image is a multicolor image having a spectrum of wavelengths, different sub-spectra correspond to different, wavelength-dependent, asymmetric partial field-of-views, which, in different combinations, form different wavelength-dependent combined fields-of-view. For example, a red light can correspond to a first red asymmetric partial field-of-view, and a second red asymmetric partial field-of view, which combine to a red combined field-of-view. Similarly, a blue light can correspond to a first blue asymmetric partial field-of-view, and a second blue asymmetric partial field-of-view, which combine to a blue combined field-of-view, and so on. Thus, a multicolor configuration is characterized by a plurality of wavelength-dependent combined field-of-views. According to a preferred embodiment of the present invention the optical elements are designed and constructed so as to maximize the overlap between two or more of the wavelength-dependent combined field-of-views.

In terms of spectral coverage, the design of device **10** is preferably as follows: element **15** provides eye **25** with, say, a first sub-spectrum which originates from part **36** of image **34,** and a second sub-spectrum which originates from part **38** of image **34.** Element **19** preferably provides the complementary information, so as to allow the aforementioned physiological mechanism to infer the complete spectrum of the image. Thus, element **19** preferably provides eye **30** with the first sub-spectrum originating from part **38,** and the second sub-spectrum originating from part **36.**

Ideally, a multicolor image is a spectrum as a function of wavelength, measured at a plurality of image elements. This ideal input, however, is rarely attainable in practical systems. Therefore, the present embodiment also addresses other forms of imagery information. A large percentage of the visible spectrum (color gamut) can be represented by mixing red, green, and blue colored light in various proportions, while different intensities provide different saturation levels. Sometimes, other colors are used in addition to red, green and blue, in order to increase the color gamut. In other cases, different combinations of colored light are used in order to represent certain partial spectral ranges within the human visible spectrum.

In a different form of color imagery, a wide-spectrum light source is used, with the imagery information provided by the use of color filters. The most common such system is using white light source with cyan, magenta and yellow filters, including a complimentary black filter. The use of these filters could provide representation of spectral range or color gamut similar to the one that uses red, green and blue light sources, while saturation levels are attained through the use of different optical absorptive thickness for these filters, providing the well known "grey levels."

Thus, the multicolored image can be displayed by three or more channels, such as, but not limited to, Red-Green-Blue (RGB) or Cyan-Magenta-Yellow-Black (CMYK) channels. RGB channels are typically used for active display systems (*e.g.*, CRT or OLED) or light shutter systems (*e.g.*, Digital Light Processing™ (DLP™) or LCD illuminated with RGB light sources such as LEDs). CMYK images are typically used for passive display systems (*e.g.*, print). Other forms are also contemplated within the scope of the present invention.

When the multicolor image is formed from a discrete number of colors (*e.g.*, an RGB display), the sub-spectra can be discrete values of wavelength. For example, a multicolor image can be provided by an OLED array having red, green and blue organic diodes (or white diodes used with red, green and blue filters) which are viewed by the eye as continues spectrum of colors due to many different combinations of relative proportions of intensities between the wavelengths of light emitted thereby. For such images, the first and the second sub-spectra can correspond to the wavelengths emitted by two of the blue, green and red diodes of the OLED array, for example the blue and red. Device **10** can be constructed such that, say, eye **30** is provided with blue light from part **36** and red light from part **38** whereas eye **25** is provided with red light from part **36** and blue light from part **38,** such that the entire spectral range of the image is transmitted into the two eyes and the physiological mechanism reconstructs the image.

The light arriving at the input optical element of device **10** is preferably collimated. In case the light is not collimated, a collimator **44** can be positioned on the light path between image **34** and the input element.

Collimator **44** can be, for example, a converging lens (spherical or non spherical), an arrangement of lenses and the like. Collimator **44** can also be a diffractive optical element, which may be spaced apart, carried by or formed in substrate **14.** A diffractive collimator may be positioned either on the entry surface of substrate **14,** as a transmissive diffractive element or on the opposite surface as a reflective diffractive element.

Following is a description of the principles and operations of optical device **10,** in the preferred embodiments in which device **10** comprises one input optical element and two output optical elements.

Reference is now made to Figures 4a-b which are schematic illustrations of wavefront propagation within substrate **14,** according to preferred embodiments in which diffractive elements are employed. Shown in Figures 4a-b are four principal light rays, **51, 52, 53** and **54,** respectively emitted from four points, **A**, **B**, **C** and **D**, of image **34**. The illustrations in Figures 4a-b lie in the *y-z* plane. The projections of the incident angles of rays **51, 52, 53** and **54** onto the *y-z* plane relative to the normal axis are denoted $\alpha_1^{--}$, $\alpha_1^{-+}$, $\alpha_1^{+-}$ and $\alpha_1^{++}$, respectively. As will be appreciated by one of ordinary skill in the art, the first superscript index refer to the position of the respective ray relative to the center of the field-of-view, and the second superscript index refer to the position of the respective ray relative to the normal from which the angle is measured, according to the aforementioned sign convention.

It is to be understood that this sign convention cannot be considered as limiting, and that one ordinarily skilled in the art can easily practice the present invention employing an alternative convention.

Similar notations will be used below for diffraction angles of the rays, with the subscript $D$ replacing the subscript $I$. Denoting the superscript indices by a pair $i, j$, an incident angle is denoted generally as $\alpha_I^{ij}$, and a diffraction angle is denoted generally as $\alpha_D^{ij}$, where $ij$ = "--", "-+", "+-" or "--". The relation between each incident angle, $\alpha_I^{ij}$, and its respective diffraction angle, $\alpha_D^{ij}$, is given by Equation 4, above, with the replacements $\phi_{iy} \rightarrow \alpha_I^{ij}$, and $\phi_{dy} \rightarrow \alpha_D^{ij}$.

Points **A** and **D** represent the left end and the right end of image **34,** and points **B** and **C** are located between points **A** and **D.** Thus, rays **51** and **53** are the leftmost and the rightmost light rays of a first asymmetric field-of-view, corresponding to a part **A-C** of image **34,** and rays **52** and **54** are the leftmost and the rightmost light rays of a second asymmetric field-of-view corresponding to a part **B-D** of image **34**. In angular notation, the first and second asymmetric field-of-views are, respectively, $[\alpha_I^{--}, \alpha_I^{+-}]$ and $[\alpha_I^{-+}, \alpha_I^{++}]$ (exclusive representations). Note that an overlap field-of-view between the two asymmetric field-of-views is defined between rays **52** and **53,** which overlap equals $[\alpha_1^{-+}, \alpha_1^{+-}]$ and corresponds to an overlap **B-C** between parts **A-C** and **B-D** of image **34.**

In the configuration shown in Figures 4a-b, lens **45** magnifies image **34** and collimates the wavefronts emanating therefrom. For example, light rays **51-54** pass through a center of lens **45,** impinge on substrate **14** at angles $\alpha_1^{ij}$ and diffracted by input optical element **13** into substrate **14** at angles $\alpha_D^{ij}$. For the purpose of a better understanding of the illustrations in Figures 4a-b, only two of the four diffraction angles (to each side) are shown in each figure, where Figure 4a shows the diffraction angles to the right of rays **51** and **53** (angles $\alpha_D^{+-}$ and $\alpha_D^{--}$), and Figure 4b shows the diffraction angles to the right of rays **52** and **54** (angles $\alpha_D^{-+}$ and $\alpha_D^{++}$).

Each diffracted light ray experiences a total internal reflection upon impinging on the inner surfaces of substrate **14** if $|\alpha_D^{ij}|$, the absolute value of the diffraction angle, is larger than the critical angle $\alpha_c$. Light rays with $|\alpha_D^{ij}| < \alpha_c$ do not experience a total internal reflection hence escape from substrate **14.** Generally, because input optical element **13** diffracts the light both to the left and to the right, a light ray may, in principle, split into two secondary rays each propagating in an opposite direction within substrate **14,** provided the diffraction angle of each of the two secondary rays is larger than $\alpha_c$. To ease the understanding of the illustrations in Figures 4a-b, secondary rays diffracting leftward and rightward are designated by a single and double prime, respectively.

Reference is now made to Figure 4a showing a particular and preferred embodiment in which $|\alpha_D^{-+}| = |\alpha_D^{+-}| = \alpha_c$. Shown in Figure 4a are rightward propagating rays **51"** and **53",** and leftward propagating rays **52'** and **54'**. Hence, in this embodiment, element **13** split all light rays between ray **51** and ray **52** into two secondary rays, a left secondary ray, impinging on the inner surface of substrate **14** at an angle which is smaller than $\alpha_c$, and a right secondary ray, impinging on the inner surface of substrate **14** at an angle which is larger than $\alpha_c$. Thus, light rays between ray **51** and ray **52** can only propagate rightward within substrate **14.** Similarly, light rays between ray **53** and ray **54** can only propagate leftward. On the other hand, light rays between rays **52** and **53,** corresponding to the overlap between the asymmetric field-of-views, propagate in both directions, because element **13** split each such ray into two secondary rays, both impinging the inner surface of substrate **14** at an angle larger than the critical angle, $\alpha_c$.

Thus, light rays of the asymmetrical field-of-view defined between rays **51** and **53** propagate within substrate **14** to thereby reach second output optical element **19** (not shown in Figure 4a), and light rays of the asymmetrical field-of-view defined between rays **52** and **54** propagate within substrate **14** to thereby reach first output optical element **15** (not shown in Figure 4a).

In another embodiment, illustrated in Figure 4b, the light rays at the largest entry angle split into two secondary rays, both with a diffraction angle which is larger than $\alpha_c$, hence do not escape from substrate **14.** However, whereas one secondary ray experience a few reflections within substrate **14,** and thus successfully reaches its respective output optical element (not shown), the diffraction angle of the other secondary ray is too large for the secondary ray to impinge the other side of substrate **14,** so as to properly propagate therein and reach its respective output optical element.

Specifically shown in Figure 4b are original rays **51, 52, 53** and **54** and secondary rays **51', 52", 53'** and **54".** Ray **54** splits into two secondary rays, ray **54'** (not shown) and ray **54"** diffracting leftward and rightward, respectively. However, whereas rightward propagating ray **54"** diffracted at an angle $\alpha_D^{++}$ experiences a few reflection within substrate **14** (see Figure 4b), leftward propagating ray **54'** either diffracts at an angle which is too large to successfully reach element **15,** or evanesces.

Similarly, ray **52** splits into two secondary rays, **52'** (not shown) and **52"** diffracting leftward and rightward, respectively. For example, rightward propagating ray **52"** diffracts at an angle $\alpha_D^{-+} > \alpha_c$. Both secondary rays diffract at an angle which is larger than $\alpha_c$, experience one or a few reflections within substrate **14** and reach output optical element **15** and **19** respectively (not shown). In the case that $\alpha_D^{-+}$ is the largest angle for which the diffracted light ray will successfully reach the optical output element **19**, all light rays emitted from part **A-B** of the image do not reach element **19** and all light rays emitted from part **B-D** successfully reach element **19**. Similarly, if angle $\alpha_D^{+-}$ is the largest angle (in absolute value) for which the diffracted light ray will successfully reach optical output element **15,** then all light rays emitted from part **C-D** of the image do not reach element **15** and all light rays emitted from part **A-C** successfully reach element **15.**

Thus, light rays of the asymmetrical field-of-view defined between rays **51** and **53** propagate within substrate **14** to thereby reach output optical element **15,** and light rays of the asymmetrical field-of-view defined between rays **52** and **54** propagate within substrate **14** to thereby reach output optical element **19.**

Any of the above embodiments can be successfully implemented by a judicious design of the monocular devices, and, more specifically the input/output optical elements and the substrate.

For example, as stated, the input and output optical elements can be linear diffraction gratings having identical periods and being in a parallel orientation. This embodiment is advantageous because it is angle-preserving. Specifically, the identical periods and parallelism of the linear gratings ensure that the relative orientation between light rays exiting the substrate is similar to their relative orientation before the impingement on the input optical element. Consequently, light rays emanating from a particular point of the overlap part **B-C** of image **34,** hence reaching both eyes, are parallel to each other. Thus, such light rays can be viewed by both eyes as arriving from the same angle in space. It will be appreciated that with such configuration viewing convergence is easily obtained without eye-strain or any other inconvenience to the viewer, unlike the prior art binocular devices in which relative positioning and/or relative alignment of the optical elements is necessary.

According to a preferred embodiment of the present invention the period, *D*, of the gratings and/or the refraction index, $n_s$, of the substrate can be selected so to provide the two asymmetrical field-of-views, while ensuring a predetermined overlap therebetween. This can be achieved in more than one way.

Hence, in one embodiment, a ratio between the wavelength, $\lambda$, of the light and the period *D* is larger than or equal a unity:

$$\lambda/D \geq 1. \qquad\qquad (EQ.\ 12)$$

This embodiment can be used to provide an optical device operating according to the aforementioned principle in which there is no mixing between light rays of the non-overlapping parts of the field-of-view (see Figure 4a).

In another embodiment, the ratio $\lambda/D$ is smaller than the refraction index, $n_s$, of the substrate. More specifically, *D* and $n_s$ can be selected to comply with the following inequality:

$$D > \lambda/(n_s\, p), \qquad\qquad (EQ.\ 13)$$

where $p$ is a predetermined parameter which is smaller than 1.

The value of $p$ is preferably selected so as to ensure operation of the device according to the principle in which some mixing is allowed between light rays of the non-overlapping parts of the field-of-view, as further detailed hereinabove (see Figure 4b). This can be done for example, by setting $p = \sin(\alpha_D^{MAX})$, where ($\alpha_D^{MAX}$) is a maximal diffraction angle. Because there are generally no theoretical limitations on $\alpha_D^{MAX}$ (apart from a requirement that its absolute value is smaller than 90°), it may be selected according to any practical considerations, such as cost, availability or geometrical limitations which may be imposed by a certain miniaturization necessity. Hence, in one embodiment, further referred to herein as the "at least one hop" embodiment, $\alpha_D^{MAX}$ is selected so as to allow at least one reflection within a predetermined distance $x$ which may vary from about 30 mm to about 80 mm.

For example, for a glass substrate, with an index of refraction of $n_s$ = 1.5 and a thickness of 2 mm, a single total internal reflection event of a light having a wavelength of 465 nm within a distance $x$ of 34 mm, corresponds to $\alpha_D^{MAX}$ = 83.3°.

In another embodiment, further referred to herein as the "flat" embodiment, $\alpha_D^{MAX}$ is selected so as to reduce the number of reflection events within the substrate, *e.g.*, by imposing a requirement that all the diffraction angles will be sufficiently small, say, below 80°.

In an additional embodiment, particularly applicable to those situations in the industry in which the refraction index of the substrate is already known (for example when device **10** is intended to operate synchronically with a given device which includes a specific substrate), Equation 13 may be inverted to obtain the value of $p$ hence also the value of $\alpha_D^{MAX} = \sin^{-1}p$.

As stated, device **10** can transmit light having a plurality of wavelengths. According to a preferred embodiment of the present invention, for a multicolor image the gratings period is preferably selected to comply with Equation 12, for the shortest wavelength, and with Equation 13, for the longest wavelength. Specifically:

$$\lambda_R/(n_s\, p) \le D \le \lambda_B\,, \qquad\qquad (EQ.\ 14)$$

where $\lambda_B$ and $\lambda_R$ are, respectively, the shortest and longest wavelengths of the multicolor spectrum. Note that it follows from Equation 12 that the index of refraction of the substrate should satisfy, under these conditions, $n_s\, p \ge \lambda_R/\lambda_B$.

The grating period can also be smaller than the sum $\lambda_B + \lambda_R$, for example:

$$D = \frac{\lambda_B + \lambda_R}{n_S \sin(\alpha_D^{MAX}) + n_A}\,. \qquad\qquad (EQ.\ 15)$$

As stated, when a light ray propagates in the substrate via total internal reflection, typically only a portion of the light energy exits the substrate while the remnant of the ray is reflected back into the substrate. When the output optical element is diffractive, this corresponds to a diffraction efficiency of less than 100 %. The diffraction efficiency is defined as the fraction of light energy being diffracted by the diffractive optical element.

For a uniform diffraction efficiency of the output elements, each light ray of the series exits with a lower intensity compared to the preceding light ray. For example, suppose that the diffraction efficiency of the output grating for a particular wavelength is 50 % (meaning that for this wavelength 50 % of the light energy is diffracted at each diffraction occurrence). In this case, the first light ray of the series carries 50 % of the original energy, the second light ray of the series carries less than 25 % of the original energy and so on. This results in a non-uniform light output across the output grating.

The present embodiments successfully provide an optical element with a grating designed to provide a predetermined light profile. Generally, a profile of light refers to an optical characteristic (intensity, phase, wavelength, brightness, hue, saturation, *etc.*) or a collection of optical characteristics of a light beam.

A light beam is typically described as a plurality of light rays which can be parallel, in which case the light beam is said to be collimated, or non-parallel, in which case the light beam is said to be non-collimated.

A light ray is mathematically described as a one-dimensional mathematical object. As such, a light ray intersects any surface which is not parallel to the light ray at a point. A light beam therefore intersects a surface which is not parallel to the beam at a plurality of points, one point for each light ray of the beam. The profile of light is the optical characteristic of the locus of all such intersecting points. In various exemplary embodiments of the invention the profile comprises the intensity of the light and, optionally, one or more other optical characteristics.

Typically, but not obligatorily, the profile of the light beam is measured at a planar surface which is substantially perpendicular to the propagation direction of the light.

A profile relating to a specific optical characteristic is referred to herein as a specific profile and is termed using the respective characteristic. Thus, the term "intensity profile" refers to the intensity of the locus of all the intersecting points, the term "wavelength profile" refers to the wavelength of the locus of all the intersecting points, and so on.

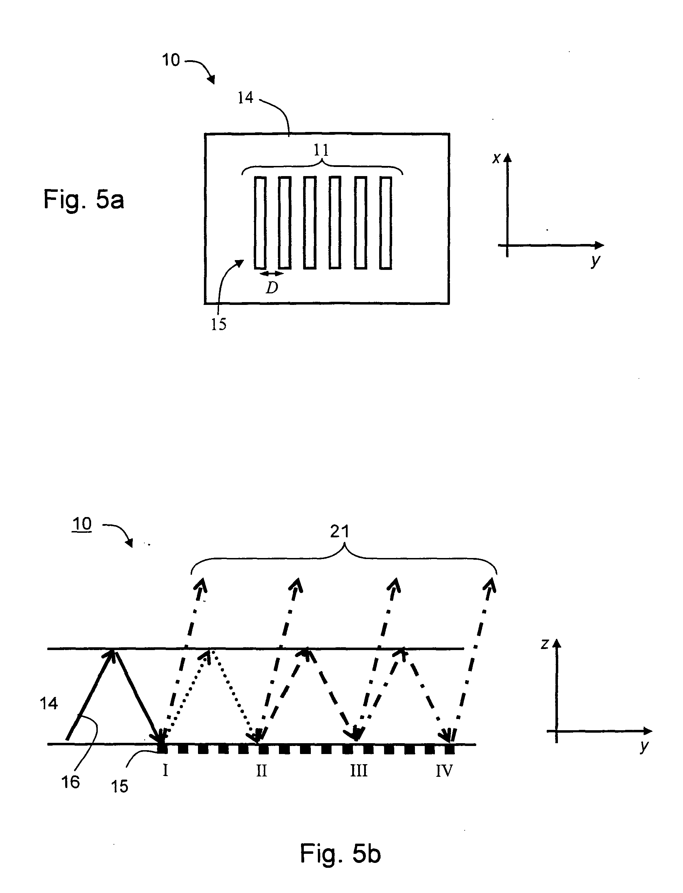

Reference is now made to Figures 5a-b which are schematic illustration of a fragmentary top view (Figure 5a) and a fragmentary side view (Figure 5b) of device **10** in the preferred embodiment in which one or more of its diffractive optical elements comprise a grating. The following description is for output element **15,** but one of ordinary skills in the art, provided with the details described herein would know how to adjust the description for the case of other diffractive elements of device **10.** Preferably, but not obligatorily, all the diffractive elements of device **10** are manufactured according to the principles described below.

According to a preferred embodiment of the present invention element **15** has a periodic linear structure **11** in one or more directions. In the representative illustration of Figure 5a, the periodic linear structure is along the *y* direction. Shown in Figure 5b is a light ray **16** which propagates within substrate **14** via total internal reflection and impinge on the grating of element **15.** Element **15** diffracts ray **16** out of substrate **14** to provide a light beam **21** having a predetermined profile. Preferably, element **15** is described by a non-uniform diffraction efficiency function.

The term "non-uniform," when used in conjunction with a particular observable characterizing the grating (*e.g.*, diffraction efficiency function, duty cycle, modulation depth), refers to variation of the particular observable along at least one direction, and preferably along the same direction as the periodic linear structure (*e.g.*, the *y* direction in the exemplified illustration of Figure 5a).

The diffraction efficiency function returns the local diffraction efficiency (*i.e.,* the diffraction efficiency of a particular region) of the grating and can be expressed in terms of percentage relative to the maximal diffraction efficiency of the grating. For example, at a point on the grating at which the diffraction efficiency function returns the value of, say, 50 %, the local diffraction efficiency of the grating is 50 % of the maximal diffraction efficiency. In various exemplary embodiments of the invention the diffraction efficiency function is a monotonic function over the grating.

The term "monotonic function", as used herein, has the commonly understood mathematical meaning, namely, a function which is either non-decreasing or non-increasing. Mathematically, a function $f(x)$ is said to be monotonic over the interval $[a, b]$ if $f(x_1) \geq f(x_2)$ for any $x_1 \in [a, b]$ and $x_2 \in [a, b]$ satisfying $x_1 > x_2$, or if $f(x_1) \leq f(x_2)$ for any such $x_1$ and $x_2$.

In various exemplary embodiments of the invention light beam **21** has a substantially uniform intensity profile for a predetermined range of wavelengths.

As used herein, "substantially uniform intensity profile" refers to an intensity which varies by less than 2 % per millimeter, more preferably less than 1 % per millimeter.

A "predetermined range of wavelengths" is characterized herein by a central value and an interval. Preferably the predetermined range of wavelengths extends from about 0.7 $\lambda$ to about 1.3 $\lambda$, more preferably from about 0.85 $\lambda$ to about 1.15 $\lambda$, where $\lambda$ is the central value characterizing the range.

Thus, the non-uniform diffraction efficiency function is selected such that when a light ray impinges on grating a plurality of times, a predetermined and substantially constant fraction of the energy of light is diffracted at each impingement.

This can be achieved when the diffraction efficiency function returns a harmonic series (1/*k*, *k*=1, 2, ...) at the intersection points between the light ray and the grating. In the exemplified embodiment of Figure 5b ray **16** experiences four diffractions along element **15.** The diffraction points are designated by roman numerals I, II, III and IV. In this example, the diffraction efficiency function preferably returns the value 25 % at point I, 33 % at point II, 50 % at point III and 100 % at point IV. For illustrative purposes, reflected light rays of different optical energy are shown in Figure 5b using different types of lines: solid lines, for light rays carrying 100 % of the original optical energy, dotted lines (75 %), dashed lines (50 %) and dot-dashed lines (25 %). Each of the four diffractions thus results in an emission of 25 % of the original optical energy of the light ray, and a substantially uniform intensity profile of the light across element **15** is achieved.

The non-uniform diffraction efficiency function of element **15** can be achieved in more than one way.

In one embodiment, linear structure **11** of element **15** is characterized by non-uniform duty cycle selected in accordance with the desired diffraction efficiency function.

As used herein, "duty cycle" is defined as the ratio of the width, *W*, of a ridge in the grating to the period *D*.

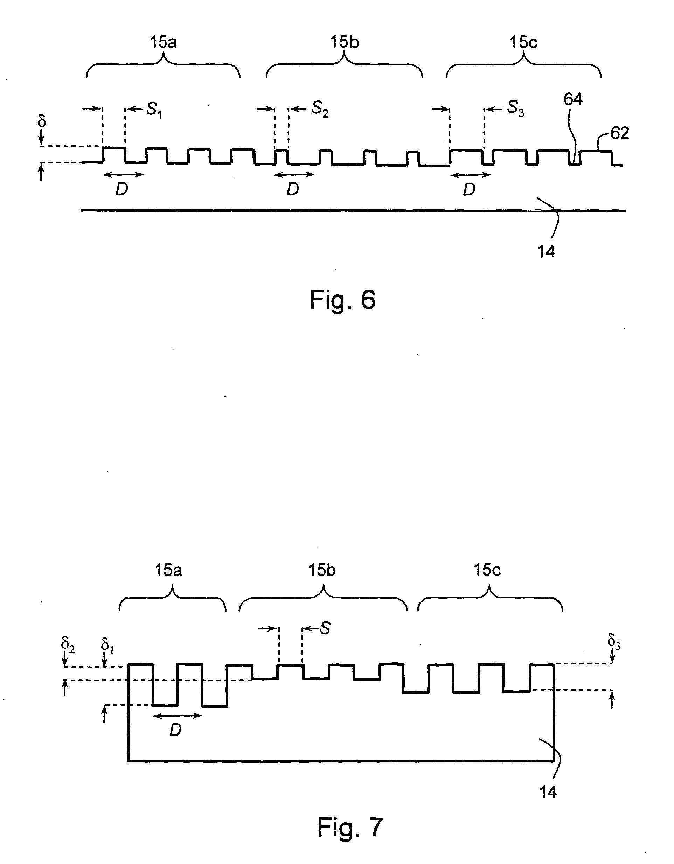

A representative example of element **10** in the preferred embodiment in which element **15** has non-uniform duty cycle is illustrated in Figure 6. As shown element **15** comprises a plurality of ridges **62** and grooves **64.** In the exemplified illustration of Figure 6, the ridges and grooves of the grating form a shape of a square wave. Such grating is referred to as a "binary grating". Other shapes for the ridges and grooves are also contemplated. Representative examples include, without limitation, triangle, saw tooth and the like.

Figure 6 exemplifies a preferred embodiment in which element **15** comprises different sections, where in each section the ridges have a different width. In a first section, designated **15a,** the width $S_1$ of the ridges equals 0.5 *D*, hence the duty cycle is 0.5; in a second section, designated **15b,** the width $S_2$ of the ridges equals 0.25 *D*, hence the duty cycle is 0.25; and in a third section, designated **15c,** the width $S_3$ of the ridges equals 0.75 *D*, hence the duty cycle is 0.75.

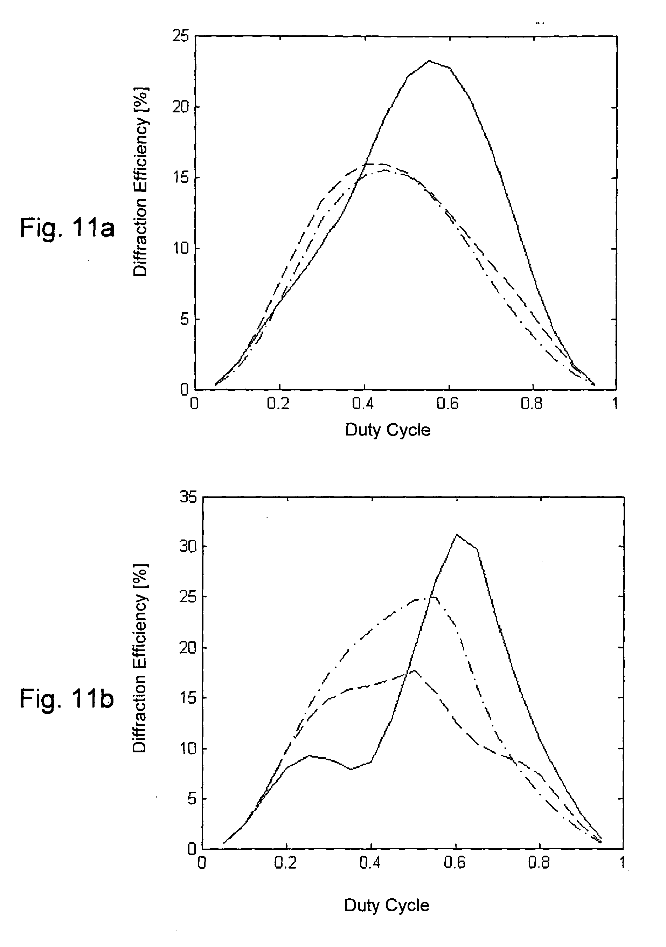

As demonstrated in the Examples section that follows (see Figures 11a-d) the diffraction efficiency significantly depends on the value of the duty cycle. Thus, a non-uniform diffraction efficiency function can be achieved using a non-uniform duty cycle. Additionally, Figures 11a-d demonstrate that the relation between the diffraction efficiency and the duty cycle depends on the wavelength of the light. By judicious selection of the duty cycle at each region of element **15**, a predetermined profile (intensity, wavelength, *etc.*) can be obtained.

Linear grating having a non-uniform duty cycle suitable for the present embodiments is preferably fabricated utilizing a technology characterized by a resolution of 50-100 nm. For example, element **15** can be formed on a light transmissive substrate by employing a process in which electron beam lithography is followed by etching. A process suitable for forming grating having a non-uniform duty cycle according to embodiments of the present invention may be similar to and/or be based on the teachings of U.S. Patent Application No. 11/505,866, assigned to the common assignee of the present invention and fully incorporated herein by reference. Some of the contents of U.S. Patent Application No. 11/505,866 is provided in Annex 1.

An additional embodiment for achieving non-uniform diffraction efficiency function includes a linear structure characterized by non-uniform modulation depth.

Figure 7 exemplifies a preferred embodiment in which element 15 comprises different sections, where in each section the ridges and grooves of element **15** are characterized by a different modulation depth. The three sections **15a, 15b** and **15c** have identical duty cycles *SID,* but their modulation depths differ. The modulation depth of sections **15a, 15b** and **15c** are denoted $\delta_1$, $\delta_2$ and $\delta_3$, respectively.

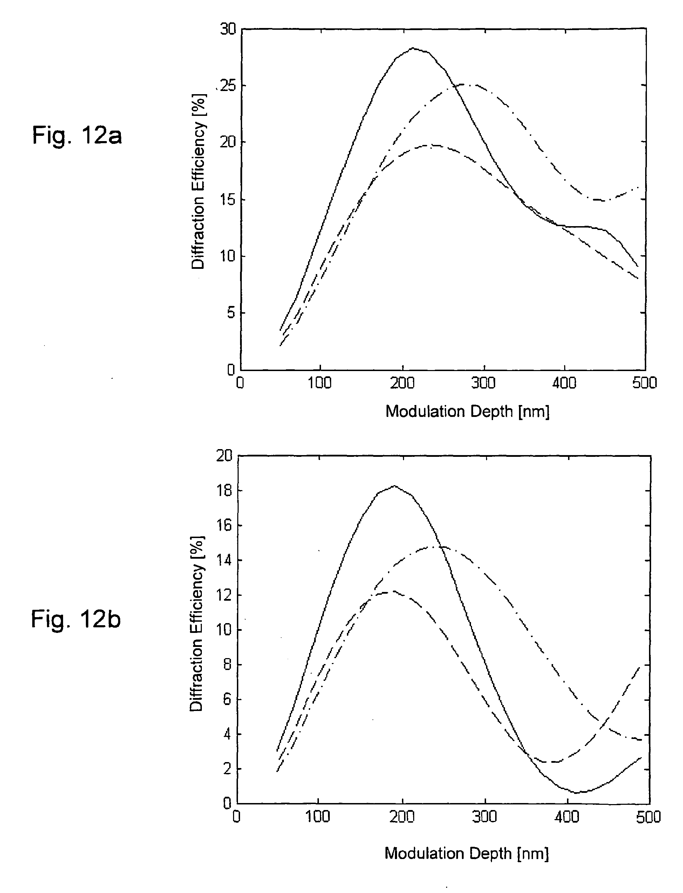

It is demonstrated in the Examples section that follows (see Figures 12a-b) that the diffraction efficiency significantly depends on the value of the modulation depth, and that the relation between the diffraction efficiency and the modulation depth depends on the wavelength of the light. A non-uniform diffraction efficiency function can therefore be achieved using a non-uniform modulation depth. By judicious selection of the modulation depth of element 15 at each region of element 15, a predetermined profile can be obtained.

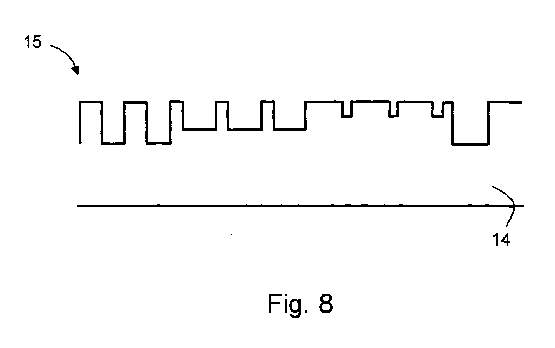

In another embodiment, illustrated in Figure 8, the linear structure of the grating is characterized by non-uniform modulation depth and non-uniform duty-cycle, where the non-uniform duty cycle is selected in combination with the non-uniform modulation depth to provide the desired non-uniform diffraction efficiency function. As will be appreciated by one ordinarily skilled in the art, the combination between non-uniform duty cycle and non-uniform modulation depth significantly improves the ability to accurately design the grating in accordance with the required profile, because such combination increases the number of degrees of freedom available to the designer.

According to an additional aspect of the present invention there is provided a system 100 for providing an image to a user in a wide field-of-view.

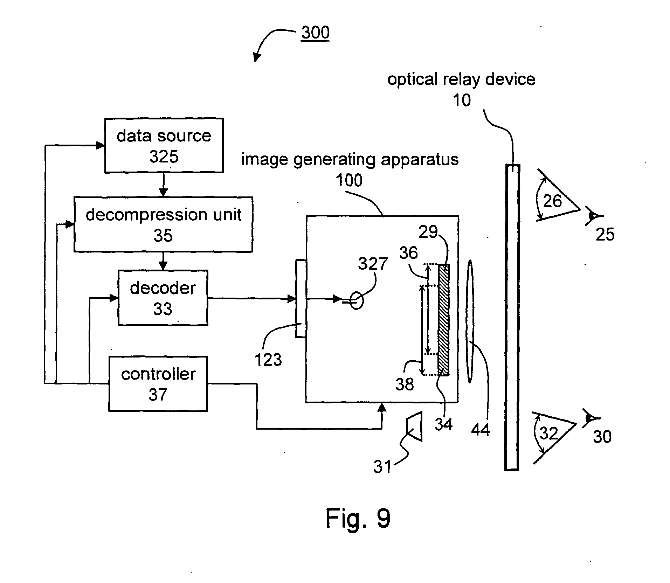

Reference is now made to Figure 9 which is a schematic illustration of system 100, which, in its simplest configuration, comprises optical relay device 10 for transmitting image 34 into first eye 25 and second eye 30 of the user, and an image generating system 121 for providing optical relay device 10 with collimated light constituting the image.

Image generating system **121** can be either analog or digital. An analog image generating system typically comprises a light source **127,** at least one image carrier **29** and a collimator **44.** Collimator **44** serves for collimating the input light, if it is not already collimated, prior to impinging on substrate **14.** In the schematic illustration of Figure 9, collimator **44** is illustrated as integrated within system **121,** however, this need not necessarily be the case since, for some applications, it may be desired to have collimator **44** as a separate element. Thus, system **121** can be formed of two or more separate units. For example, one unit can comprise the light source and the image carrier, and the other unit can comprise the collimator. Collimator **44** is positioned on the light path between the image carrier and the input element of device **10.**

Any collimating element known in the art may be used as collimator **44,** for example a converging lens (spherical or non spherical), an arrangement of lenses, a diffractive optical element and the like. The purpose of the collimating procedure is for improving the imaging ability.

In case of a converging lens, a light ray going through a typical converging lens that is normal to the lens and passes through its center, defines the optical axis. The bundle of rays passing through the lens cluster about this axis and may be well imaged by the lens, for example, if the source of the light is located as the focal plane of the lens, the image constituted by the light is projected to infinity.

Other collimating means, *e.g.,* a diffractive optical element, may also provide imaging functionality, although for such means the optical axis is not well defined. The advantage of a converging lens is due to its symmetry about the optical axis, whereas the advantage of a diffractive optical element is due to its compactness.

Representative examples for light source **127** include, without limitation, a lamp (incandescent or fluorescent), one or more LEDs or OLEDs, and the like. Representative examples for image carrier **29** include, without limitation, a miniature slide, a reflective or transparent microfilm and a hologram. The light source can be positioned either in front of the image carrier (to allow reflection of light therefrom) or behind the image carrier (to allow transmission of light therethrough). Optionally and preferably, system **121** comprises a miniature CRT. Miniature CRTs are known in the art and are commercially available, for example, from Kaiser Electronics, a Rockwell Collins business, of San Jose, California.

A digital image generating system typically comprises at least one display and a collimator. The use of certain displays may require, in addition, the use of a light source. In the embodiments in which system **121** is formed of two or more separate units, one unit can comprise the display and light source, and the other unit can comprise the collimator.

Light sources suitable for a digital image generating system include, without limitation, a lamp (incandescent or fluorescent), one or more LEDs (*e.g.*, red, green and blue LEDs) or OLEDs, and the like. Suitable displays include, without limitation, rear-illuminated transmissive or front-illuminated reflective LCD, OLED arrays, Digital Light Processing™ (DLP™) units, miniature plasma display, and the like.. A positive display, such as OLED or miniature plasma display, may not require the use of additional light source for illumination. Transparent miniature LCDs are commercially available, for example, from Kopin Corporation, Taunton, Massachusetts. Reflective LCDs are are commercially available, for example, from Brillian Corporation, Tempe, Arizona. Miniature OLED arrays are commercially available, for example, from eMagin Corporation, Hopewell Junction, New York. DLP™ units are commercially available, for example, from Texas Instruments DLP™ Products, Plano, Texas. The pixel resolution of the digital miniature displays varies from QVGA (320 × 240 pixels) or smaller, to WQUXGA (3840 × 2400 pixels).

System **100** is particularly useful for enlarging a field-of-view of devices having relatively small screens. For example, cellular phones and personal digital assistants (PDAs) are known to have rather small on-board displays. PDAs are also known as Pocket PC, such as the trade name iPAQ™ manufactured by Hewlett-Packard Company, Palo Alto, California. The above devices, although capable of storing and downloading a substantial amount of information in a form of single frames or moving images, fail to provide the user with sufficient field-of-view due to their small size displays.

Thus, according to a preferred embodiment of the present invention system **100** comprises a data source **125** which can communicate with system **121** via a data source interface **123**. Any type of communication can be established between interface **123** and data source **125,** including, without limitation, wired communication, wireless communication, optical communication or any combination thereof. Interface **123** is preferably configured to receive a stream of imagery data (*e.g.*, video, graphics, *etc.*) from data source **125** and to input the data into system **121.** Many types or data sources are contemplated. According to a preferred embodiment of the present invention data source **125** is a communication device, such as, but not limited to, a cellular telephone, a personal digital assistant and a portable computer (laptop). Additional examples for data source **125** include, without limitation, television apparatus, portable television device, satellite receiver, video cassette recorder, digital versatile disc (DVD) player, digital moving picture player (*e.g.*, MP4 player), digital camera, video graphic array (VGA) card, and many medical imaging apparatus, *e.g.,* ultrasound imaging apparatus, digital X-ray apparatus (*e.g.*, for computed tomography) and magnetic resonance imaging apparatus.

In addition to the imagery information, data source **125** may generates also audio information. The audio information can be received by interface **123** and provided to the user, using an audio unit **31** (speaker, one or more earphones, *etc.*).

According to various exemplary embodiments of the present invention, data source **125** provides the stream of data in an encoded and/or compressed form. In these embodiments, system **100** further comprises a decoder **33** and/or a decompression unit **35** for decoding and/or decompressing the stream of data to a format which can be recognized by system **121.** Decoder **33** and decompression unit **35** can be supplied as two separate units or an integrated unit as desired.

System **100** preferably comprises a controller **37** for controlling the functionality of system **121** and, optionally and preferably, the information transfer between data source **125** and system **121.** Controller **37** can control any of the display characteristics of system **121,** such as, but not limited to, brightness, hue, contrast, pixel resolution and the like. Additionally, controller **37** can transmit signals to data source **125** for controlling its operation. More specifically, controller **37** can activate, deactivate and select the operation mode of data source **125.** For example, when data source **125** is a television apparatus or being in communication with a broadcasting station, controller **37** can select the displayed channel; when data source **125** is a DVD or MP4 player, controller **37** can select the track from which the stream of data is read; when audio information is transmitted, controller **37** can control the volume of audio unit **31** and/or data source **125.**

System **100** or a portion thereof (*e.g.*, device **10**) can be integrated with a wearable device, such as, but not limited to, a helmet or spectacles, to allow the user to view the image, preferably without having to hold optical relay device **10** by hand.

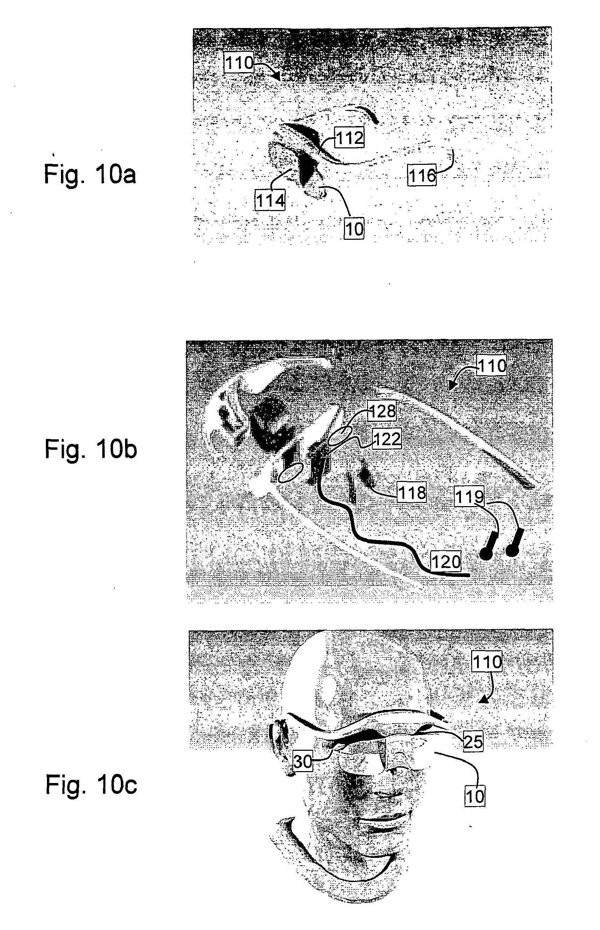

Device **10** can also be used in combination with a vision correction device **128** (not shown, see Figure 10), for example, one or more corrective lenses for correcting, *e.g.,* short-sightedness (myopia). In this embodiment, the vision correction device is preferably positioned between the eyes and device **20**. According to a preferred embodiment of the present invention system **100** further comprises correction device **128,** integrated with or mounted on device **10.**

Alternatively system **100** or a portion thereof can be adapted to be mounted on an existing wearable device. For example, in one embodiment device **10** is manufactured as a spectacles clip which can be mounted on the user's spectacles, in another embodiment, device **10** is manufactured as a helmet accessory which can be mounted on a helmet's screen.

Reference is now made to Figures 10a-c which illustrate a wearable device **110** in a preferred embodiment in which spectacles are used. According to the presently preferred embodiment of the invention device **110** comprises a spectacles body **112,** having a housing **114,** for holding image generating system **21** (not shown, see Figure 9); a bridge **122** having a pair of nose clips **118,** adapted to engage the user's nose; and rearward extending arms **116** adapted to engage the user's ears. Optical relay device **10** is preferably mounted between housing **114** and bridge **122,** such that when the user wears device **110,** element **17** is placed in front of first eye **25,** and element **15** is placed in front of second eye **30.** According to a preferred embodiment of the present invention device **110** comprises a one or more earphones **119** which can be supplied as separate units or be integrated with arms **116.**

Interface **123** (not explicitly shown in Figures 10a-c) can be located in housing **114** or any other part of body **112.** In embodiments in which decoder **33** is employed, decoder **33** can be mounted on body **112** or supplied as a separate unit as desired. Communication between data source **25** and interface **123** can be, as stated, wireless, in which case no physical connection is required between wearable device **110** and data source **25.** In embodiments in which the communication is not wireless, suitable communication wires and/or optical fibers **120** are used to connect interface **123** with data source **25** and the other components of system **100.**

The present embodiments can also be provided as add-ons to the data source or any other device capable of transmitting imagery data. Additionally, the present embodiments can also be used as a kit which includes the data source, the image generating system, the binocular device and optionally the wearable device. For example, when the data source is a communication device, the present embodiments can be used as a communication kit.

Additional objects, advantages and novel features of the present invention will become apparent to one ordinarily skilled in the art upon examination of the following examples and Annex 1, which are not intended to be limiting. Additionally, each of the various embodiments and aspects of the present invention as delineated hereinabove and as claimed in the claims section below finds experimental support in the following examples and Annex 1.

## EXAMPLES

Reference is now made to the following examples, which together with the above descriptions illustrate the invention in a non limiting fashion.

### EXAMPLE 1

#### Diffraction of Red Light

Following is a non-limiting example in which planar dimension calculations are performed in accordance with the teachings of the preferred embodiments of the invention for the diffraction of red light.

The present calculations are for 509 nm period gratings formed in a light transmissive substrate having index of refraction of 1.522 and thickness of 2 mm. As a representative example for red light, a wavelength of 615 nm was assumed.

With the above values of the grating period, index of refraction and wavelength a longitudinal field-of-view $\Omega_y$ of [-12.0°, +12.0°] and a transverse field-of-view $\Omega_x$ of [-9.0°, +9.0°] can be achieved. The overall (diagonal) field-of-view $\Omega$ is calculated using Equation 5 to obtain $\Omega$ = [-15°, +15°].

For $\Delta z$ = 25 mm, the minimal dimensions of the output optical element(s) are (see Equation 6) $L_{O, min}$ = 10.6 mm and $W_{O,min}$ = 7.9 mm. For $L_{EB}$ = 4 mm, $W_{EB}$ = 1 mm and $O_p$ = 3 mm, the dimensions of the output optical element (s) are (see Equation 7) $L_O$ = 17.6 mm and $W_O$ = 11.9 mm.

Using the thickness of the substrate and the above values of $\Omega_y$ one obtains a hop-length of $h$ = 3.5 mm which is then used to set the length $L_1$ of the input element to be from about 3.5 mm to about 10.5 mm.

The above values of $\Omega_x$ and $\Omega_y$ correspond to an outermost propagation angle (as projected on the x-y plane) of $\pm 8.8°$. Thus, in accordance with preferred embodiments of the present invention, the value of the angular parameter $\gamma$ is 8.8°.

For $\Delta y$ = 17.7 mm, and $L_1$ = 10 mm, the width $W_1$ of the input optical element is (see Equation 8) is $W_1$ = 22.8 mm.

### EXAMPLE 2

#### Diffraction of Blue Light

Following is a non-limiting example in which planar dimension calculations are performed in accordance with the teachings of the preferred embodiments of the invention for the diffraction of blue light.

The present calculations are for 389 nm period gratings formed in a light transmissive substrate having index of refraction of 1.529 and thickness of 1.8 mm. As a representative example for blue light, a wavelength of 465 nm was assumed.

With the above values of the grating period, index of refraction and wavelength a longitudinal field-of-view $\Omega_y$ of [-11°, +11°] and a transverse field-of-view $\Omega_x$ of [-8.3°, +8.3°] can be achieved. The overall (diagonal) field-of-view $\Omega$ is calculated using Equation 5 to obtain $\Omega$ = [-13.7°, +13.7°].

For $\Delta z$ = 20 mm, the minimal dimensions of the output optical element(s) are $L_{O,min}$ = 7.8 mm and $W_{O,min}$ = 5.8 mm. For $L_{EB}$ = 5 mm, $W_{EB}$ = 2 mm and $O_p$ = 3 mm the dimensions of the output optical element(s) are $L_O$ = 15.8 mm and $W_O$ = 10.8 mm.

Using the thickness of the substrate and the above values of $\Omega_y$ one obtains a hop-length of $h$ = 3.1 mm, which is then used to set the length $L_I$ of the input element to be from about 3 mm to about 10 mm.

The above values of $\Omega_x$ and $\Omega_y$ correspond to an outermost propagation angle (as projected on the $x$-$y$ plane) of $\pm 8°$, hence $\gamma$ = 8°, in accordance with preferred embodiments of the present invention.

For $\Delta y$ = 16.6 mm and $L_1$ = 9 mm, the width $W_1$ is 19.9 mm.

## EXAMPLE 3

### Non-uniform Duty cycle

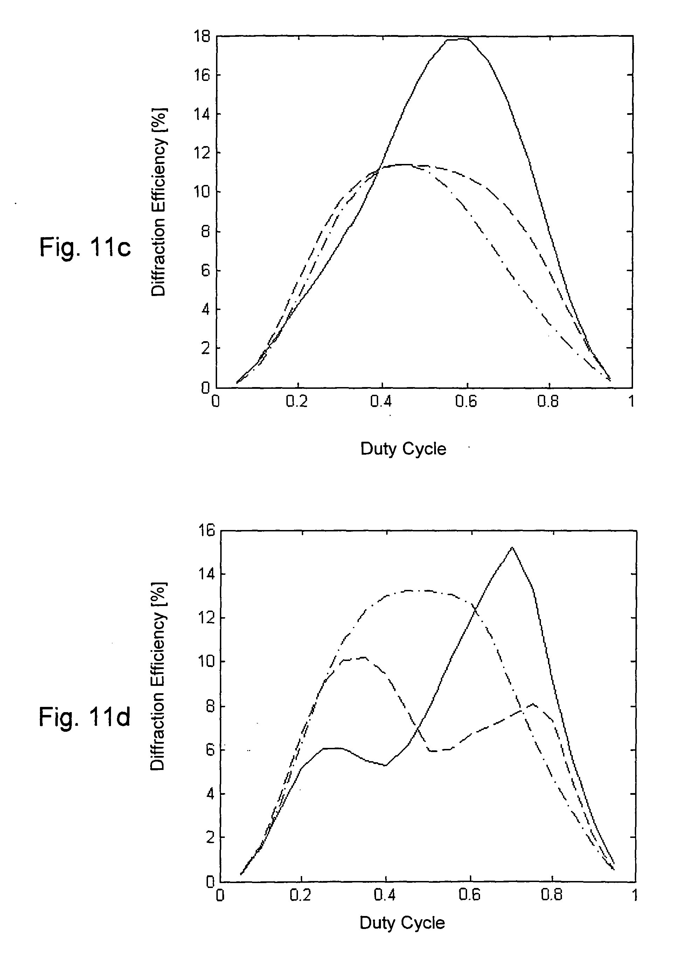

Figures 11a-d show numerical calculations of the diffraction efficiency of a grating as a function of the duty cycle, for impinging angles $\phi_{iy}$ of 50° (Figures 11a-b) and 55° (Figures 11c-d), and modulation depths $\delta$ of 150 nm (Figures 11a and 11c) and 300 nm (Figures 11b and 11d). The different curves in Figures 11a-d correspond to wavelengths of 480 nm (solid line), 540 nm (dashed line) and 600 nm (dot-dash line). The calculations were based on the Maxwell equations, for 455 nm period grating formed in a light transmissive substrate having index of refraction of 1.53.

## EXAMPLE 4

### Non-uniform Modulation Depth

Figures 12a-b show numerical calculations of the diffraction efficiency of a grating as a function of the modulation depth $\delta$, for impinging angles $\phi_{iy}$ of 50° (Figure 12a) and 55° (Figure 12b), and duty cycle of 0.5. The different curves in Figures 12a-b correspond to wavelengths of 480 nm (solid line), 540 nm (dashed line) and 600 nm (dot-dash line). The calculations were based on the Maxwell equations, for 455 nm period grating formed in a light transmissive substrate having index of refraction of 1.53.

As shown in Figures 12-a-b, the diffraction efficiency increases with increasing $\delta$ up to modulation depth of about 200-250 nm. Above about 250 nm, the diffraction efficiency decreases with increasing $\delta$ up to modulation depth of about 400-500 nm.

### ANNEX 1

The refraction index of a given material expresses the reduction of the light's phase velocity within the material compared to the phase velocity of light in vacuum. Formally, $n$ = $c/v$, where $c$ is the phase velocity of light in vacuum and $v$ is phase velocity of light in the material. Thus, the higher the refraction index of the material, the lower is the phase velocity of light within the material. The light's phase velocity is reduced in a material because the light is an electromagnetic wave, and as a result of the interaction between the light and the atoms in the material, the atoms begin to oscillate and radiate their own electromagnetic radiation. In a sense, the interaction between the light and the charge distribution of the atoms alters the polarization of the light. The superposition of all radiations together with the original wave, results is an electromagnetic wave having the same frequency but a shorter wavelength than the original wave. Since the relation between the frequency and wavelength determines the phase velocity of the light, whereby for a given frequency shorter wavelengths correspond to lower phase velocity, the light is slowed within the material. Once the light exits the material, its original wavelength, hence the phase velocity, is restored.

In many materials, the atomic or molecular structure is such that the phase velocity depends on the propagation direction of the light within the material, hence it is not isotropic. Such materials are called optically anisotropic.

Optical birefringence, also known as double refraction, is an optical phenomenon which is associated with optically anisotropic materials, whereby the material exhibits a different refraction index (hence the light has a different phase velocity) for each of two polarization directions defined by the material. An optically anisotropic material rotates the polarization plane of the light as the light propagates therethrough.

Since optically anisotropic materials exhibits different refraction indices in different directions, their refraction index is a vector quantity, **_n_,** commonly written as **_n_** = $(n_o, n_e)$, where the $n_o$ is referred to as the ordinary refraction index and $n_e$ is referred to as the extraordinary refraction index. Also known are more complicated materials for which the refraction index is a tensor quantity.

The level of anisotropy of the material is quantified by a quantity called birefringence. The birefringence can be expressed as an optical path difference, when the light propagates through a unit length of the material. The optical path $\Lambda$ of the light along a geometrical distance $x$ is defined as $\Lambda = ct$, where $c$ is speed of light in the vacuum and $t$ is the propagation time of a single component of the light along the distance $x$.

A commonly used unit for birefringence is nanometer per centimeter. For example, suppose that when the light propagates along $x$ centimeters of the material in one direction its optical distance is $\Lambda_1$ nanometers, and when the light propagates along $x$ centimeters of the material in another direction its optical distance is $\Lambda_2$ nanometers. The birefringence of the material is defined as the ratio $(\Lambda_1 - \Lambda_2)/x$. The birefringence can also be expressed as a dimensionless quantity, which is commonly defined as the difference between the ordinary and extraordinary refraction indices: $\Delta n = \boldsymbol{n_o} - n_e$. From the above definition of the optical path and the refraction index it follows that the dimensional and dimensionless definitions of the birefringence are equivalent.

Unless otherwise stated, the term "birefringence" refers herein to the dimensionless definition of the birefringence, $\Delta n = n_e - n_o$. One of ordinary skills in the art, provided with the details described herein would know how to obtain the dimensional birefringence from its dimensionless equivalent.

Linear diffraction gratings are polarization dependent in the sense that linearly polarized light is diffracted with higher diffraction efficiency when the polarization direction is parallel to the groves of the gratings and with lower diffraction efficiency otherwise. In particular, when the polarization direction is perpendicular to the groves of the gratings diffraction efficiency is generally low.

Thus, if several parallel linear gratings are formed in a substrate with high birefringence, a linearly polarized light propagating in the substrate experiences different diffraction efficiencies at different gratings, because the polarization plane of the light is rotating during the propagation and the light may arrive at different gratings with different polarization directions. This problem is aggravated even in the case of small $\Delta n$ when the propagation distance of the light in the substrate is of the order of about one centimeter or longer. For such distances, the reduction of diffraction efficiency is substantial and results in loss of information.

In a search for an optical relay device with enhanced optical characteristics, the present Inventors have uncovered that good transmission efficiency can be achieved using materials with substantially low birefringence.

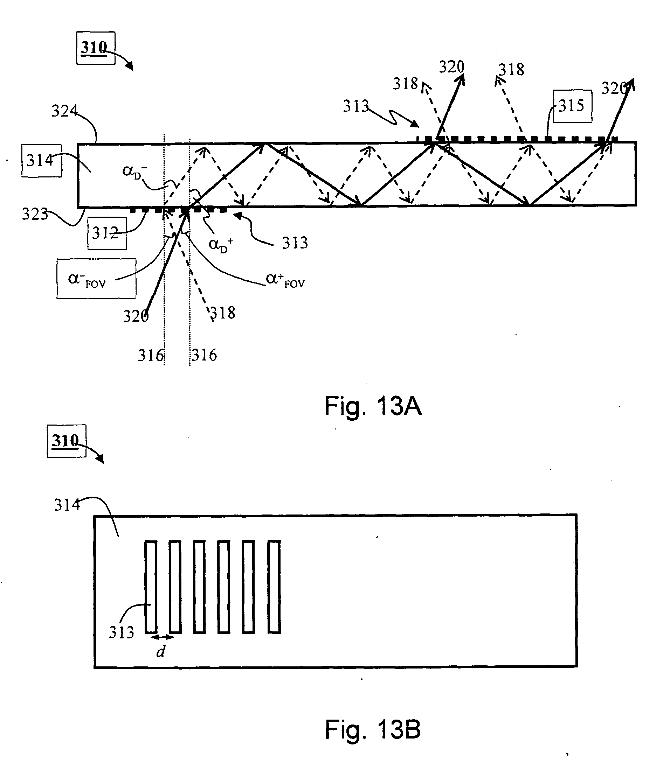

Referring now to the drawings, Figure 13A illustrates an optical relay device **310,** according to various exemplary embodiments of the present invention. Device **310** comprises a substrate **314,** having a first surface **322** and a second surface **323.** Substrate **314** is made, at least in part, of a light transmissive material characterized by a birefringence, $\Delta n$, which is substantially low in its absolute value. Device **310** further comprises one or more diffractive optical elements **313** formed on one or more of the surfaces of substrate **314.** A top view of device **310** having a single diffractive optical element is illustrated in Figure 13B. In the representative example shown in Figure 13B, diffractive optical element **313** is a linear diffraction grating, characterized by a grating period, *d*.

The diffraction optical element(s) serves for diffracting light into substrate **314.** The term "diffracting" as used herein, refers to a change in the propagation direction of a wavefront, in either a transmission mode or a reflection mode. In a transmission mode, "diffracting" refers to change in the propagation direction of a wavefront while passing through an optical element; in a reflection mode, "diffracting" refers to change in the propagation direction of a wavefront while reflecting off an optical element.

The birefringence of the light transmissive material of the present embodiments preferably satisfies the inequality $|\Delta n| < \varepsilon$, where $\varepsilon$ is lower than the birefringence of polycarbonate. In various exemplary embodiments of the invention $\varepsilon$ equals 0.0005, more preferably 0.0004, more preferably 0.0003, even more preferably 0.0002.

In various exemplary embodiments of the invention the light transmissive material comprises a polymer or a copolymer. Polymers or copolymers suitable for the present embodiments are characterized by isotropic optical activity and at least one, more preferably at least two additional characteristics selected from: high transmission efficiency, good molding ability, low moisture permeability, chemical resistance and dimensional stability.

Exemplary light transmissive materials suitable for the present embodiments include, without limitation, cycloolefin polymers, cycloolefin copolymers and other polycyclic polymers from cycloolefinic monomers such as norbornene, hydrocarbyl and/or halogen substituted norbornene-type monomers, polymers and/or copolymers containing N-halogenated phenyl maleimides, N-halogenated phenyl bismaleimides, halogenated acrylates, halogenated styrenes, halogenated vinyl ethers, halogenated olefins, halogenated vinyl isocyanates, halogenated N-vinyl amides, halogenated allyls, halogenated propenyl ethers, halogenated methacrylates, halogenated maleates, halogenated itaconates, halogenated crotonates, and other amorphous transparent plastics.

In various exemplary embodiments of the invention the light transmissive material comprises a cycloolefin polymer or a cycloolefin copolymer, such as those commercially available from suppliers such as Zeon, Japan, under the trade-names Zeonex™ and Zeonor™, from Ticona, a business of Celanese Corporation, USA, under the trade-name Topas™, and from Mitsui Chemicals Group under the trade name APEL™. Although both cycloolefin polymer and cycloolefin copolymer are preferred over the above light transmissive materials, cycloolefin polymer is more favored over cycloolefin copolymer, because the temperature window for fabricating a substrate which comprises a cycloolefin polymer is wider.

A preferred method for manufacturing optical relay device 310 is provided hereinafter.

In the representative illustration of Figure 13A, device 310 comprises an input optical element 312 and an output optical element 315, which are typically, but not obligatorily, linear diffraction gratings. Element 315 is laterally displaced from element 312 by a few centimeters. When elements 312 and 315 are linear diffraction gratings, the grating lines of element 312 are preferably substantially parallel to the grating lines of element 315. Device 310 is preferably designed to transmit light striking substrate 314 at any striking angle within a predetermined range of angles, which predetermined range of angles is referred to of the field-of-view of the device.

The field-of-view is illustrated in Figure 13A by its rightmost light ray 318, striking substrate 314 at an angle $\alpha^-_{FOV}$, and leftmost light ray 320, striking substrate 314 at an angle $\alpha^+_{FOV}$. $\alpha^-_{FOV}$ is measured anticlockwise from a normal 316 to substrate 314, and $\alpha^+_{FOV}$ is measured clockwise from normal 316. Thus, according to the above convention, $\alpha^-_{FOV}$ has a negative value and $\alpha^+_{FOV}$ has a positive value, resulting in a field-of-view of $\varphi = \alpha^+_{FOV} + |\alpha^-_{FOV}|$, in inclusive representation.

Input optical element 312 is preferably designed to trap all light rays in the field-of-view within substrate 314. Specifically, when the light rays in the field-of view impinge on element 312, they are diffracted at a diffraction angle (defined relative to normal 316) which is larger than the critical angle, such that upon striking the other surface of substrate 314, all the light rays of the field-of-view experiences total internal reflection and propagate within substrate 314. The diffraction angles of leftmost ray 320 and rightmost ray 318 are designated in Figure 13A by $\alpha_D^+$ and $\alpha_D^-$, respectively. The propagated light, after a few reflections within substrate 314, reaches output optical element 315 which diffracts the light out of substrate 314. As shown in Figure 13A, only a portion of the light energy exits substrate 314. The remnant of each ray is redirected through an angle, which causes it, again, to experience total internal reflection from the other side of substrate 314. After a first reflection, the remnant may re-strike element 315, and upon each such re-strike, an additional part of the light energy exits substrate 314.

The diffraction efficiency of elements 312 and 315 is polarization dependent. For example, for linear gratings and a linearly polarized light, the diffraction efficiency depends on the angle between the polarization direction and the grating lines. Specifically, the diffraction efficiency is generally higher when the polarization direction is parallel to the grating lines and lower when the polarization direction is perpendicular to the grating lines. As stated, substrate 314 preferably has a very low birefringence and/or high light transmission. These properties of substrate 314 significantly improve the overall transmission efficiency from element 312 to element 315, because there are minimal or no variations in refraction index of substrate 314 for different polarizations of the light, and there is a minimal or no optical absorbance when the light propagates within substrate 314 from element 312 to element 315.

The light rays arriving to device 310 can have a plurality of wavelengths, from a shortest wavelength, $\lambda_B$, to a longest wavelength, $\lambda_R$, referred to herein as the spectrum of the light. In a preferred embodiment in which surfaces 322 and 323 are substantially parallel, elements 312 and 315 can be designed, for a given spectrum, solely based on the value of $\alpha^-_{Fov}$ and the value of the shortest wavelength $\lambda_B$. For example, when the diffractive optical elements are linear gratings, the period, d, of the gratings can be selected based $\alpha^-_{FOV}$ and $\lambda_B$, irrespectively of the optical properties of substrate 314 or any wavelength longer than $\lambda_B$.

According to a preferred embodiment of the present invention d is selected such that the ratio $\lambda_B/d$ is from about 1 to about 2. A preferred expression for d is given by the following equation:

$$d = \lambda_B/[n_A(1 - \sin \alpha^-_{FOV})]. \qquad \text{(EQ. A-1)}$$

It is appreciated that the d, as given by Equation A-1, is a maximal grating period. Hence, in order to accomplish total internal reflection d can also be smaller than $\lambda_B/[n_A(1-\sin \alpha^-_{FOV})]$.

Substrate 314 is preferably selected such as to allow light having any wavelength within the spectrum and any striking angle within the field-of-view to propagate in substrate 314 via total internal reflection.

The substantially low birefringence of substrate 314 allow to accurately design the device to achieve such performance, because there is a minimal or no dependence of the refraction index on the propagation direction of the light. According to a preferred embodiment of the present invention the refraction index of substrate 314 is larger than $\lambda_R/d + n_A\sin(\alpha^+_{FOV})$. More preferably, the refraction index, $n_S$, of substrate 314 satisfies the following equation:

$$n_S \geq [\lambda_R/d + n_A \sin(\alpha^+_{FOV})]/\sin(\alpha_D^{MAX}). \qquad \text{(EQ. A-2)}$$

where $\alpha_D^{MAX}$ is the largest diffraction angle, *i.e.*, the diffraction angle of the light ray which arrive at a striking angle of $\alpha^+_{FOV}$. In the exemplified illustration of Figure 13A, $\alpha_D^{MAX}$ is the diffraction angle of ray **320**. There are no theoretical limitations on $\alpha_D^{MAX}$, except from a requirement that it is positive and smaller than 90 degrees. $\alpha_D^{MAX}$ can therefore have any positive value smaller than 90°. Various considerations for the value $\alpha_D^{MAX}$ are found in U.S. Patent No. 6,757,105, the contents of which are hereby incorporated by reference.

The thickness, *h*, of substrate **314** is preferably from about 0.1 mm to about 5 mm, more preferably from about 1 mm to about 3 mm, even more preferably from about 1 to about 2.5 mm. For multicolor use, *h* is preferably selected to allow simultaneous propagation of plurality of wavelengths, *e.g.*, $h > 10\ \lambda_R$. The width/length of substrate **314** is preferably from about 10 mm to about 100 mm. A typical width/length of the diffractive optical elements depends on the application for which device **310** is used. For example, device **310** can be employed in a near eye display, such as the display described in U.S. Patent No. 5,966,223, in which case the typical width/length of the diffractive optical elements is from about 5 mm to about 20 mm. The contents of U.S. Patent Application No. 60/716,533, which provides details as to the design of the diffractive optical elements and the selection of their dimensions, are hereby incorporated by reference.

Device **310** is capable of transmitting light having a spectrum spanning over at least 100 nm. More specifically, the shortest wavelength, $\lambda_B$, generally corresponds to a blue light having a typical wavelength of between about 400 to about 500 nm and the longest wavelength, $\lambda_R$, generally corresponds to a red light having a typical wavelength of between about 600 to about 700 nm.

As can be understood from the geometrical configuration illustrated in Figure 13A, the angles at which light rays **318** and **320** diffract can differ. As the diffraction angles depend on the incident angles (see Equation 2, for the case in which element **312** is a linear diffraction grating), the allowed clockwise ($\alpha^+_{FOV}$) and anticlockwise ($\alpha^-_{FOV}$) field-of-view angles, are also different. Thus, device **310** supports transmission of asymmetric field-of-view in which, say, the clockwise field-of-view angle is greater than the anticlockwise field-of-view angle. The difference between the absolute values of the clockwise and anticlockwise field-of-view angles can reach more than 70 % of the total field-of-view.

This asymmetry can be exploited, in accordance with various exemplary embodiments of the present invention, to enlarge the field-of-view of optical relay device **310**. According to a preferred embodiment of the present invention, a light-transmissive substrate can be formed with at least one input optical element and two output optical elements. The input optical element(s) serve for diffracting the light into the light-transmissive substrate in a manner such that different portions of the light, corresponding to different partial fields-of-view, propagate within the substrate in different directions to thereby reach the output optical elements. The output optical elements complementarily diffract the different portions of the light out of the light-transmissive substrate.

The terms "complementarily" or "complementary," as used herein in conjunction with a particular observable or quantity (*e.g.*, field-of-view, image, spectrum), refer to a combination of two or more overlapping or non-overlapping parts of the observable or quantity so as to provide the information required for substantially reconstructing the original observable or quantity.

Any number of input/output optical elements can be used. Additionally, the number of input optical elements and the number of output optical elements may be different, as two or more output optical elements may share the same input optical element by optically communicating therewith. The input and output optical element can be formed on a single substrate or a plurality of substrates, as desired. For example, in one embodiment the input and output optical element are linear diffraction gratings, preferably of identical periods, formed on a single substrate, preferably in a parallel orientation.

If several input/output optical elements are formed on the same substrate, as in the above embodiment, they can engage any side of the substrate, in any combination.

One ordinarily skilled in the art would appreciate that this corresponds to any combination of transmissive and reflective optical elements. Thus, for example, suppose that there is one input optical element, formed on surface **322** of substrate **314** and two output optical elements formed on surface **323**. Suppose further that the light impinges on surface **322** and it is desired to diffract the light out of surface **323.** In this case, the input optical element and the two output optical elements are all transmissive, so as to ensure that entrance of the light through the input optical element, and the exit of the light through the output optical elements. Alternatively, if the input and output optical elements are all formed on surface **322,** then the input optical element remain transmissive, so as to ensure the entrance of the light therethrough, while the output optical elements are reflective, so as to reflect the propagating light at an angle which is sufficiently small to couple the light out. In such configuration, light can enter the substrate through the side opposite the input optical element, be diffracted in reflection mode by the input optical element, propagate within the light transmissive substrate in total internal diffraction and be diffracted out by the output optical elements operating in a transmission mode.

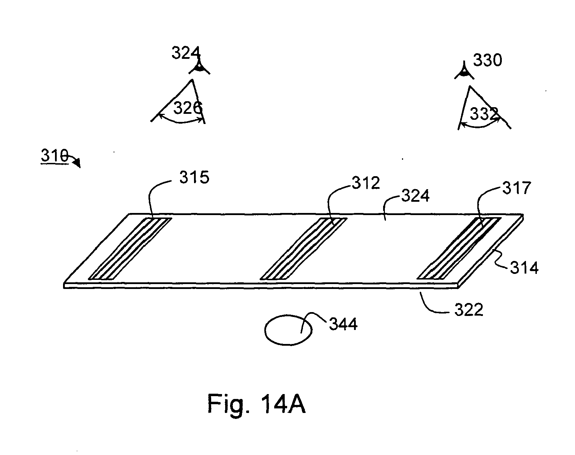

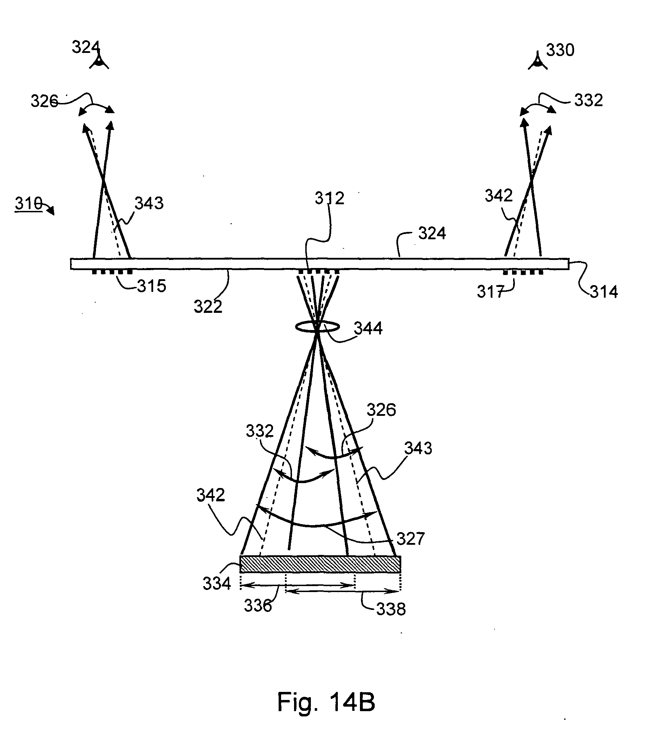

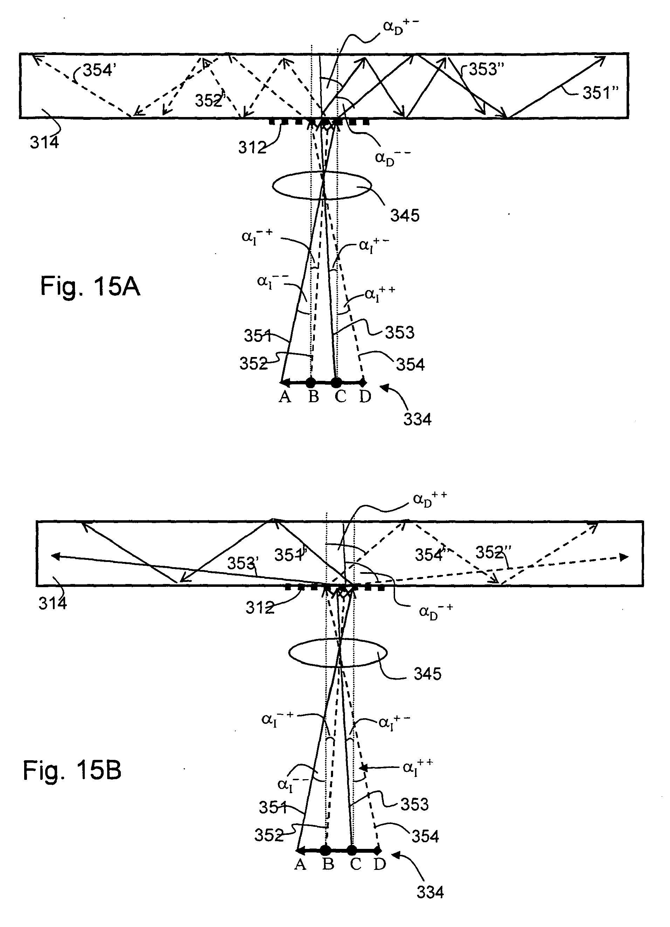

Reference is now made to Figures 14A-B which are schematic illustrations of a perspective view (Figure 14A) and a side view (Figure 14B) of device **310,** in a preferred embodiment in which one input optical element **312** and two output optical elements **315** and **317** are employed. In Figure 14B, first **315** and second **317** output optical elements are formed, together with input optical element **312,** on surface **322** of substrate **314.** However, as stated, this need not necessarily be the case, since, for some applications, it may be desired to form the input/output optical elements on any of first **322** or second **323** surface of substrate **314,** in an appropriate transmissive/reflective combination. According, to a preferred embodiment of the present invention first **322** and second **323** surfaces are substantially parallel. Wavefront propagation within substrate **314,** according to various exemplary embodiments of the present invention, is further detailed hereinunder with reference to Figures 15A-B.

Element **312** preferably diffracts the incoming light into substrate **314** in a manner such that different portions of the light, corresponding to different partial fields-of-view, propagate in different directions within substrate **314.** In the configuration exemplified in Figures 14A-B, element **312** diffract light rays within one asymmetric partial field-of-view, designated by reference numeral **326,** leftwards to impinge on element **315,** and another asymmetric partial field-of-view, designated by reference numeral **332,** to impinge on element **317.** Elements **315** and **317** complementarily diffract the respective portions of the light, or portions thereof, out of substrate **314,** to provide a first eye **324** with partial field-of-view **326** and a second eye **330** with partial field-of-view **332.**

Partial fields-of-view **326** and **332** form together the field-of-view **327** of device **310.** When device **310** is used for transmitting an image **334**, field-of-view **327** preferably includes substantially all light rays originated from image **334.** Partial fields-of-view **326** and **332** can correspond to different parts of image **334,** which different parts are designated in Figure 14B by numerals **336** and **338.** Thus, as shown in Figure 14B, there is at least one light ray **342** which enters device **310** via element **312** and exits device **310** via element **317** but not via element **315.** Similarly, there is at least one light ray **343** which enters device **310** via element **312** and exits device **310** via element **315** but not via element **317.**

Generally, the partial field-of-views, hence also the parts of the image arriving to each eye depend on the wavelength of the light. Therefore, it is not intended, to limit the scope of the present embodiments to a configuration in which part **336** is viewed by eye **324** and part **338** viewed by eye **330.** In other words, for different wavelengths, part **336** is viewed by eye **330** and part **338** viewed by eye **324.** For example, suppose that the image is constituted by a light having three colors: red, green and blue. As demonstrated in the Examples section that follows, device **310** can be constructed such that eye **324** sees part **338** for the blue light and part **336** for the red light, while eye **330** sees part **336** for the blue light and part **338** for the red light. In such configuration, both eyes see an almost symmetric field-of-view for the green light. Thus, for every color, the two partial fields-of-view compliment each other.

The human visual system is known to possess a physiological mechanism capable of inferring a complete image based on several parts thereof, provided sufficient information reaches the retinas. This physiological mechanism operates on monochromatic as well as chromatic information received from the rod cells and cone cells of the retinas. Thus, in a cumulative nature, the two asymmetric field-of-views, reaching each individual eye, form a combined field-of-view perceived by the user, which combined field-of-view is wider than each individual asymmetric field-of-view.

According to a preferred embodiment of the present invention, there is a predetermined overlap between first **326** and second **332** partial fields-of-view, which overlap allows the user's visual system to combine parts **336** and **338** of image **334,** thereby to perceive the image, as if it has been fully observed by each individual eye.

For example, as further demonstrated in the Examples section that follows, the diffractive optical elements can be constructed such that the exclusive representations of partial fields-of-view **326** and **332** are, respectively, $[-\alpha, \beta]$ and $[-\beta, \alpha]$, resulting in a symmetric combined field-of-view **327** of $[-\beta, \beta]$. It will be appreciated that when $\beta \gg \alpha > 0$, the combined field-of-view is considerably wider than each of the asymmetric field-of-views. Device **310** is capable of transmitting a field-of-view of at least 20 degrees, more preferably at least 30 degrees most preferably at least 40 degrees, in inclusive representation.

When the image is a multicolor image having a spectrum of wavelengths, different sub-spectra correspond to different, wavelength-dependent, asymmetric partial field-of-views, which, in different combinations, form different wavelength-dependent combined fields-of-view. For example, a red light can correspond to a first red asymmetric partial field-of-view, and a second red asymmetric partial field-of-view, which combine to a red combined field-of-view. Similarly, a blue light can correspond to a first blue asymmetric partial field-of-view, and a second blue asymmetric partial field-of-view, which combine to a blue combined field-of-view, and so on. Thus, a multicolor configuration is characterized by a plurality of wavelength-dependent combined field-of-views. According to a preferred embodiment of the present invention the diffractive optical elements are designed and constructed so as to maximize the overlap between two or more of the wavelength-dependent combined field-of-views.

In terms of spectral coverage, the design of device **310** is preferably as follows: element **315** provides eye **324** with, say, a first sub-spectrum which originates from part **336** of image **334,** and a second sub-spectrum which originates from part **338** of image **334.** Element **317** preferably provides the complementary information, so as to allow the aforementioned physiological mechanism to infer the complete spectrum of the image. Thus, element **317** preferably provides eye **330** with the first sub-spectrum originating from part **338,** and the second sub-spectrum originating from part **336.**

Ideally, a multicolor image is a spectrum as a function of wavelength, measured at a plurality of image elements. This ideal input, however, is rarely attainable in practical systems. Therefore, the present embodiment also addresses other forms of imagery information. A large percentage of the visible spectrum (color gamut) can be represented by mixing red, green, and blue colored light in various proportions, while different intensities provide different saturation levels. Sometimes, other colors are used in addition to red, green and blue, in order to increase the color gamut. In other cases, different combinations of colored light are used in order to represent certain partial spectral ranges within the human visible spectrum.

In a different form of color imagery, a wide-spectrum light source is used, with the imagery information provided by the use of color filters. The most common such system is using white light source with cyan, magenta and yellow filters, including a complimentary black filter. The use of these filters could provide representation of spectral range or color gamut similar to the one that uses red, green and blue light sources, while saturation levels are attained through the use of different optical absorptive thickness for these filters, providing the well known "grey levels."

Thus, the multicolored image can be displayed by three or more channels, such as, but not limited to, Red-Green-Blue (RGB) or Cyan-Magenta-Yellow-Black (CMYK) channels. RGB channels are typically used for active display systems (*e.g.*, CRT or OLED) or light shutter systems (*e.g.*, Digital Light Processing™ (DLP™) or LCD illuminated with RGB light sources such as LEDs). CMYK images are typically used for passive display systems (*e.g.*, print). Other forms are also contemplated within the scope of the present invention.

When the multicolor image is formed from a discrete number of colors (*e.g.,* an RGB display), the sub-spectra can be discrete values of wavelength. For example, a multicolor image can be provided by an OLED array having red, green and blue organic diodes (or white diodes used with red, green and blue filters) which are viewed by the eye as continues spectrum of colors due to many different combinations of relative proportions and intensities between the wavelengths of light emitted thereby. For such images, the first and the second sub-spectra can correspond to the wavelengths emitted by two of the blue, green and red diodes of the OLED array, for example the blue and red. As further demonstrated in the Example section that follows, device **310** can be constructed such that, say, eye **330** is provided with blue light from part **336** and red light from part **338** whereas eye **324** is provided with red light from part **336** and blue light from part **338,** such that the entire spectral range of the image is transmitted into the two eyes and the physiological mechanism reconstructs the image.

The light arriving at the input optical element of device **310** is preferably collimated. In case the light is not collimated, a collimator **344** can be positioned on the light path between image **334** and the input element.

Collimator **344** can be, for example, a converging lens (spherical or non spherical), an arrangement of lenses and the like. Collimator **344** can also be a diffractive optical element, which may be spaced apart, carried by or formed in substrate **314.** A diffractive collimator may be positioned either on the entry surface of substrate **314,** as a transmissive diffractive element or on the opposite surface as a reflective diffractive element.

Following is a description of the principles and operations of optical relay device **310,** in the embodiment in which device **310** comprises one input optical element and two output optical elements.

Reference is now made to which are schematic illustrations of wavefront propagation within substrate **314,** according to preferred embodiments of the present invention. Shown in Figures 15A-B are four light rays, **351, 352, 353** and **354,** respectively emitted from four points, **A, B, C** and **D,** of image **334.** The incident angles, relative to the normal to substrate, of rays **351, 352, 353** and **354** are denoted $\alpha_I^{--}$, $\alpha_I^{-+}$, $\alpha_I^{+-}$ and $\alpha_I^{++}$, respectively. As will be appreciated by one of ordinary skill in the art, the first superscript index refer to the position of the respective ray relative to the center of the field-of-view, and the second superscript index refer to the position of the respective ray relative to the normal from which the angle is measured, according to the aforementioned sign convention.

It is to be understood that this sign convention cannot be considered as limiting, and that one ordinarily skilled in the art can easily practice the present invention employing an alternative convention.

Similar notations will be used below for the diffraction angles of the rays, with the subscript *D* replacing the subscript *I*. Denoting the superscript indices by a pair *i, j*, an incident angle is denoted generally as $\alpha_I^{ij}$, and a diffraction angle is denoted generally as $\alpha_D^{ij}$, where $ij$ = "- -", "- +", "+ -" or "- -". The relation between each incident angle, $\alpha_I^{ij}$, and its respective diffraction angle, $\alpha_D^{ij}$, is given by Equation 2, above, with the replacements $\alpha_I \rightarrow \alpha_I^{ij}$, and $\alpha_D \rightarrow \alpha_D^{ij}$.

Points **A** and **D** represent the left end and the right end of image **334,** and points **B** and **C** are located between points **A** and **D.** Thus, rays **351** and **353** are the leftmost and the rightmost light rays of a first asymmetric field-of-view, corresponding to a part **A-C** of image **334,** and rays **352** and **354** are the leftmost and the rightmost light rays of a second asymmetric field-of-view corresponding to a part **B-D** of image **334.** In angular notation, the first and second asymmetric field-of-view are, respectively, $[\alpha_I^{--}, \alpha_I^{+-}]$ and $[\alpha_I^{-+}, \alpha_I^{++}]$ (exclusive representations). Note that an overlap field-of-view between the two asymmetric field-of-views is defined between rays **352** and **353,** which overlap equals $[\alpha_I^{-+}, \alpha_I^{+-}]$ and corresponds to an overlap **B-C** between parts **A-C** and **B-D** of image **334.** In the configuration shown in Figures 15A-B, a lens **345** magnifies image **334** and collimates the wavefronts emanating therefrom. For example, light rays **351-354** pass through a center of lens **345,** impinge on substrate **314** at angles $\alpha_I^{ij}$ and diffracted by input optical element **312** into substrate **314** at angles $\alpha_D^{ij}$. For the purpose of a better understanding of the illustrations in Figures 15A-B, only two of the four diffraction angles (to each side) are shown in each figure, where Figure 15A shows the diffraction angles to the right of rays **351** and **353** (angles $\alpha_D{}^{+-}$ and $\alpha_D{}^{--}$), and Figure 15B shows the diffraction angles to the right of rays **352** and **354** (angles $\alpha_D{}^{-+}$ and $\alpha_D{}^{++}$).

Each diffracted light ray experiences a total internal reflection upon impinging on the inner surfaces of substrate **314** if $|\alpha_D{}^{ij}|$, the absolute value of the diffraction angle, is larger than the critical angle $\alpha_c$. Light rays with $|\alpha_D{}^{ij}| < \alpha_c$ do not experience a total internal reflection hence escape from substrate **314**. Generally, because input optical element **312** diffracts the light both to the left and to the right, a light ray may, in principle, split into two secondary rays each propagating in an opposite direction within substrate **314,** provided the diffraction angle of each of the two secondary rays is larger than $\alpha_c$. To ease the understanding of the illustrations in Figures 15A-B, secondary rays diffracting leftward and rightward are designated by a single and double prime, respectively.

Reference is now made to Figure 15A showing a particular and preferred embodiment in which $|\alpha_D{}^{-+}| = |\alpha_D{}^{+-}| = \alpha_c$. Shown in Figure 15A are rightward propagating rays **351"** and **353",** and leftward propagating rays **352'** and **354'.** Hence, in this embodiment, element **312** split all light rays between ray **351** and ray **352** into two secondary rays, a left secondary ray, impinging on the inner surface of substrate **314** at an angle which is smaller than $\alpha_c$, and a right secondary ray, impinging on the inner surface of substrate **314** at an angle which is larger than $\alpha_c$. Thus, light rays between ray **351** and ray **352** can only propagate rightward within substrate **314**. Similarly, light rays between ray **353** and ray **354** can only propagate leftward. On the other hand, light rays between rays **352** and **353,** corresponding to the overlap between the asymmetric field-of-views, propagate in both directions, because element **312** split each such ray into two secondary rays, both impinging the inner surface of substrate **314** at an angle larger than the critical angle, $\alpha_c$.

Thus, light rays of the asymmetrical field-of-view defined between rays **351** and **353** propagate within substrate **314** to thereby reach second output optical element **317** (not shown in Figure 15A), and light rays of the asymmetrical field-of-view defined between rays **352** and **354** propagate within substrate **314** to thereby reach first output optical element **315** (not shown in Figure 15A).

In another embodiment, illustrated in Figure 15B, the light rays at the largest entry angle split into two secondary rays, both with a diffraction angle which is larger than $\alpha_c$, hence do not escape from substrate **314.** However, whereas one secondary ray experience a few reflections within substrate **314,** and thus successfully reaches its respective output optical element (not shown), the diffraction angle of the other secondary ray is too large for the secondary ray to impinge the other side of substrate **314,** so as to properly propagate therein and reach its respective output optical element.

Specifically shown in Figure 15B are original rays **351, 352, 353** and **354** and secondary rays **351', 352", 353'** and **354".** Ray **354** splits into two secondary rays, ray **354'** (not shown) and ray **354"** diffracting leftward and rightward, respectively. However, whereas rightward propagating ray **354"** diffracted at an angle $\alpha_D{}^{++}$ experiences a few reflection within substrate **314** (see Figure 15B), leftward propagating ray **354'** either diffracts at an angle which is too large to successfully reach element **315,** or evanesces.

Similarly, ray **352** splits into two secondary rays, **352'** (not shown) and **352"** diffracting leftward and rightward, respectively. For example, rightward propagating ray **352"** diffracts at an angle $\alpha_D{}^{-+} > \alpha_c$. Both secondary rays diffract at an angle which is larger than $\alpha_c$, experience one or a few reflections within substrate **314** and reach output optical element **315** and **317** respectively (not shown). Supposing that $\alpha_D{}^{-+}$ is the largest angle for which the diffracted light ray will successfully reach the optical output element **317,** all light rays emitted from part **A-B** of the image do not reach element **317** and all light rays emitted from part **B-D** successfully reach element **317**. Similarly, if angle $\alpha_D{}^{+-}$ is the largest angle (in absolute value) for which the diffracted light ray will successfully reach optical output element **315,** then all light rays emitted from part **C-D** of the image do not reach element **315** and all light rays emitted from part **A-C** successfully reach element **315.**

Thus, light rays of the asymmetrical field-of-view defined between rays **351** and **353** propagate within substrate **314** to thereby reach output optical element **315,** and light rays of the asymmetrical field-of-view defined between rays **352** and **354** propagate within substrate **314** to thereby reach output optical element **317.**

Any of the above embodiments can be successfully implemented by a judicious design of the monocular devices, and, more specifically the input/output optical elements and the substrate.

For example, as stated, the input and output optical elements can be linear diffraction gratings having identical periods and being in a parallel orientation. This embodiment is advantageous because it is angle-preserving. Specifically, the identical periods and parallelism of the linear gratings ensure that the relative orientation between light rays exiting the substrate is similar to their relative orientation before the impingement on the input optical element. Consequently, light rays emanating from a particular point of the overlap part **B-C** of image **334,** hence reaching both eyes, are parallel to each other. Thus, such light rays can be viewed by both eyes as arriving from the same angle in space. It will be appreciated that with such configuration viewing convergence is easily obtained without eye-strain or any other inconvenience to the viewer, unlike the prior art binocular devices in which relative positioning and/or relative alignment of the optical elements is necessary.

According to a preferred embodiment of the present invention the period, $d$, of the gratings and/or the refraction index, $n_s$, of the substrate can be selected so to provide the two asymmetrical field-of-views, while ensuring a predetermined overlap therebetween. This can be achieved in more than one way.

Hence, in one embodiment, a ratio between the wavelength, $\lambda$, of the light and the period, $d$, is larger than or equal a unity:

$$\lambda/d \geq 1. \qquad\qquad \text{(EQ. (A-3)}$$

This embodiment can be used to provide an optical device operating according to the aforementioned principle in which there is no mixing between light rays of the non-overlapping parts of the field-of-view (see Figure 15A).

In another embodiment, the ratio $\lambda/d$ is smaller than the refraction index, $n_s$, of the substrate. More specifically, $d$ and $n_s$ can be selected to comply with the following inequality:

$$d > \lambda/(n_s p), \qquad\qquad \text{(EQ. A-4)}$$

where $p$ is a predetermined parameter which is smaller than 1.

The value of $p$ is preferably selected so as to ensure operation of the device according to the principle in which some mixing is allowed between light rays of the non-overlapping parts of the field-of-view, as further detailed hereinabove (see Figure 15B). This can be done for example, by setting $p = \sin(\alpha_D{}^{MAX})$, where $(\alpha_D{}^{MAX})$ is a maximal diffraction angle. Because there are generally no theoretical limitations on $\alpha_D{}^{MAX}$ (apart from a requirement that its absolute value is smaller than 90°), it may be selected according to any practical considerations, such as cost, availability or geometrical limitations which may be imposed by a certain miniaturization necessity. Hence, in one embodiment, further referred to herein as the "at least one hop" embodiment, $\alpha_D{}^{MAX}$ is selected so as to allow at least one reflection within a predetermined distance $x$ which may vary from about 30 mm to about 80 mm.

For example, for a glass substrate, with an index of refraction of $n_s$ =1.5 and a thickness of 2 mm, a single total internal reflection event of a light having a wavelength of 465 nm within a distance $x$ of 34 mm, corresponds to $\alpha_D{}^{MAX}$ = 83.3°.

In another embodiment, further referred to herein as the "flat" embodiment, $\alpha_D{}^{MAX}$ is selected so as to reduce the number of reflection events within the substrate, *e.g.*, by imposing a requirement that all the diffraction angles will be sufficiently small, say, below 80°.

In an additional embodiment, particularly applicable to those situations in the industry in which the refraction index of the substrate is already known (for example when device **310** is intended to operate synchronically with a given device which includes a specific substrate), Equation A-4 may be inverted to obtain the value of $p$ hence also the value of $\alpha_D{}^{MAX} = \sin^{-1}p$.

As stated, device **310** can transmit light having a plurality of wavelengths. According to a preferred embodiment of the present invention, for a multicolor image the gratings period is preferably selected to comply with Equation A-3, for the shortest wavelength, and with Equation A-4, for the longest wavelength. Specifically:

$$\lambda_R/(n_s p) \leq d \leq \lambda_B , \qquad\qquad \text{(EQ. A-5)}$$

where $\lambda_B$ and $\lambda_R$ are, respectively, the shortest and longest wavelengths of the multicolor spectrum. Note that it follows from Equation A-3 that the index of refraction of the substrate should satisfy, under these conditions, $n_s p \geq \lambda_R/\lambda_B$.

The grating period can also be smaller than the sum $\lambda_B + \lambda_R$, for example:

$$d = \frac{\lambda_B + \lambda_R}{n_S \sin(\alpha_D^{MAX}) + n_A} . \qquad\qquad \text{(EQ. A-6)}$$

According to an additional aspect of the present invention there is provided a system **100** for providing an image to a user in a wide field-of-view.

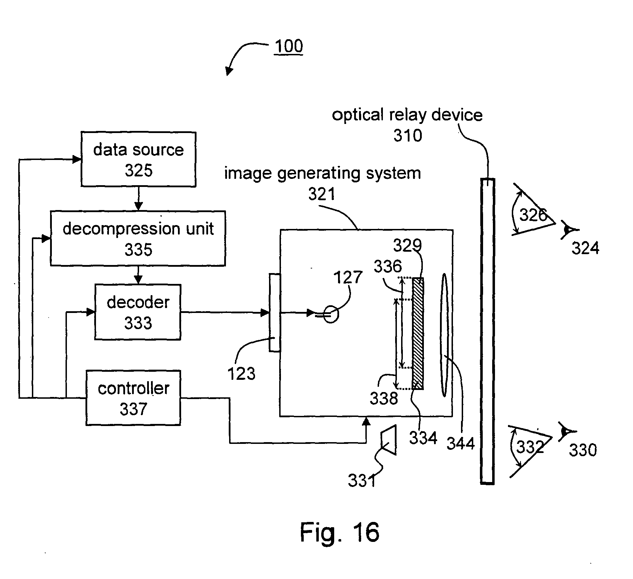

Reference is now made to Figure 16 which is a schematic illustration of system **100,** which, in its simplest configuration, comprises optical relay device **310** for transmitting image **334** into first eye **324** and second eye **330** of the user, and an image generating system **321** for providing optical relay device **310** with collimated light constituting the image.

Image generating system **321** can be either analog or digital. An analog image generating system typically comprises a light source **127,** at least one image carrier **329** and a collimator **344.** Collimator **344** serves for collimating the input light, if it is not already collimated, prior to impinging on substrate **314.** In the schematic illustration of Figure 16, collimator **344** is illustrated as integrated within system **321,** however, this need not necessarily be the case since, for some applications, it may be desired to have collimator **344** as a separate element. Thus, system **321** can be formed of two or more separate units. For example, one unit can comprise the light source and the image carrier, and the other unit can comprise the collimator. Collimator **344** is positioned on the light path between the image carrier and the input element of device **310.**

Any collimating element known in the art may be used as collimator **344,** for example a converging lens (spherical or non spherical), an arrangement of lenses, a diffractive optical element and the like. The purpose of the collimating procedure is for improving the imaging ability.

In case of a converging lens, a light ray going through a typical converging lens that is normal to the lens and passes through its center, defines the optical axis. The bundle of rays passing through the lens cluster about this axis and may be well imaged by the lens, for example, if the source of the light is located as the focal plane of the lens, the image constituted by the light is projected to infinity.

Other collimating means, *e.g.*, a diffractive optical element, may also provide imaging functionality, although for such means the optical axis is not well defined. The advantage of a converging lens is due to its symmetry about the optical axis, whereas the advantage of a diffractive optical element is due to its compactness.

Representative examples for light source **127** include, without limitation, a lamp (incandescent or fluorescent), one or more LEDs or OLEDs, and the like. Representative examples for image carrier **329** include, without limitation, a miniature slide, a reflective or transparent microfilm and a hologram. The light source can be positioned either in front of the image carrier (to allow reflection of light therefrom) or behind the image carrier (to allow transmission of light therethrough). Optionally and preferably, system **321** comprises a miniature CRT. Miniature CRTs are known in the art and are commercially available, for example, from Kaiser Electronics, a Rockwell Collins business, of San Jose, California.

A digital image generating system typically comprises at least one display and a collimator. The use of certain displays may require, in addition, the use of a light source. In the embodiments in which system **321** is formed of two or more separate units, one unit can comprise the display and light source, and the other unit can comprise the collimator.

Light sources suitable for a digital image generating system include, without limitation, a lamp (incandescent or fluorescent), one or more LEDs (*e.g.*, red, green and blue LEDs) or OLEDs, and the like. Suitable displays include, without limitation, rear-illuminated transmissive or front-illuminated reflective LCD, OLED arrays, Digital Light Processing™ (DLP™) units, miniature plasma display, and the like.. A positive display, such as OLED or miniature plasma display, may not require the use of additional light source for illumination. Transparent miniature LCDs are commercially available, for example, from Kopin Corporation, Taunton, Massachusetts. Reflective LCDs are are commercially available, for example, from Brillian Corporation, Tempe, Arizona. Miniature OLED arrays are commercially available, for example, from eMagin Corporation, Hopewell Junction, New York. DLP™ units are commercially available, for example, from Texas Instruments DLP™ Products, Plano, Texas. The pixel resolution of the digital miniature displays varies from QVGA (320 × 240 pixels) or smaller, to WQUXGA (3840 × 2400 pixels).

System **100** is particularly useful for enlarging a field-of-view of devices having relatively small screens. For example, cellular phones and personal digital assistants (PDAs) are known to have rather small on-board displays. PDAs are also known as Pocket PC, such as the trade name iPAQ™ manufactured by Hewlett-Packard Company, Palo Alto, California. The above devices, although capable of storing and downloading a substantial amount of information in a form of single frames or moving images, fail to provide the user with sufficient field-of-view due to their small size displays.

Thus, according to a preferred embodiment of the present invention system **100** comprises a data source **325** which can communicate with system **321** via a data source interface **123.** Any type of communication can be established between interface **123** and data source **325,** including, without limitation, wired communication, wireless communication, optical communication or any combination thereof. Interface **123** is preferably configured to receive a stream of imagery data (*e.g.*, video, graphics, *etc.*) from data source **325** and to input the data into system **321.** Many types or data sources are contemplated. According to a preferred embodiment of the present invention data source **325** is a communication device, such as, but not limited to, a cellular telephone, a personal digital assistant and a portable computer (laptop). Additional examples for data source **325** include, without limitation, television apparatus, portable television device, satellite receiver, video cassette recorder, digital versatile disc (DVD) player, digital moving picture player (*e.g.*, MP4 player), digital camera, video graphic array (VGA) card, and many medical imaging apparatus, *e.g.*, ultrasound imaging apparatus, digital X-ray apparatus (*e.g.*, for computed tomography) and magnetic resonance imaging apparatus.

In addition to the imagery information, data source **325** may generates also audio information. The audio information can be received by interface **123** and provided to the user, using an audio unit **331** (speaker, one or more earphones, *etc.*).

According to various exemplary embodiments of the present invention, data source **325** provides the stream of data in an encoded and/or compressed form. In these embodiments, system **100** further comprises a decoder **333** and/or a decompression unit **335** for decoding and/or decompressing the stream of data to a format which can be recognized by system **321**. Decoder **333** and decompression unit **335** can be supplied as two separate units or an integrated unit as desired.

System **100** preferably comprises a controller **337** for controlling the functionality of system **321** and, optionally and preferably, the information transfer between data source **325** and system **321**. Controller **337** can control any of the display characteristics of system **321,** such as, but not limited to, brightness, hue, contrast, pixel resolution and the like. Additionally, controller **337** can transmit signals to data source **325** for controlling its operation. More specifically, controller **337** can activate, deactivate and select the operation mode of data source **325**. For example, when data source **325** is a television apparatus or being in communication with a broadcasting station, controller **337** can select the displayed channel; when data source **325** is a DVD or MP4 player, controller **337** can select the track from which the stream of data is read; when audio information is transmitted, controller **337** can control the volume of audio unit **331** and/or data source **325.**

System **100** or a portion thereof (*e.g.*, device **310**) can be integrated with a wearable device, such as, but not limited to, a helmet or spectacles, to allow the user to view the image, preferably without having to hold optical relay device **310** by hand.

Device **310** can also be used in combination with a vision correction device **130** (not shown, see Figure 50), for example, one or more corrective lenses for correcting, *e.g.*, short-sightedness (myopia). In this embodiment, the vision correction device is preferably positioned between the eyes and device **320.** According to a preferred embodiment of the present invention system **100** further comprises correction device **130,** integrated with or mounted on device **310.**

Alternatively system 100 or a portion thereof can be adapted to be mounted on an existing wearable device. For example, in one embodiment device 310 is manufactured as a spectacles clip which can be mounted on the user's spectacles, in another embodiment, device 310 is manufactured as a helmet accessory which can be mounted on a helmet's screen.

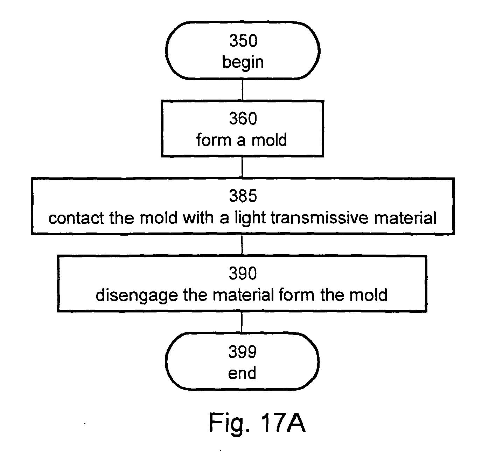

The present embodiments successfully provide a method suitable for manufacturing the optical relay device, in the preferred embodiments in the optical relay device comprises one or more diffraction gratings. The method according to various exemplary embodiments of the present invention is illustrated in the flowchart diagrams of Figures 17A-D.

It is to be understood that, unless otherwise defined, the method steps described hereinbelow can be executed either contemporaneously or sequentially in many combinations or orders of execution. Specifically, the ordering of the flowchart diagrams of Figures 17A-D is not to be considered as limiting. For example, two or more method steps, appearing in the following description or in the flowchart of Figures 17A-D in a particular order, can be executed in a different order (*e.g.*, a reverse order) or substantially contemporaneously. Additionally, several method steps described below are optional and may not be executed.

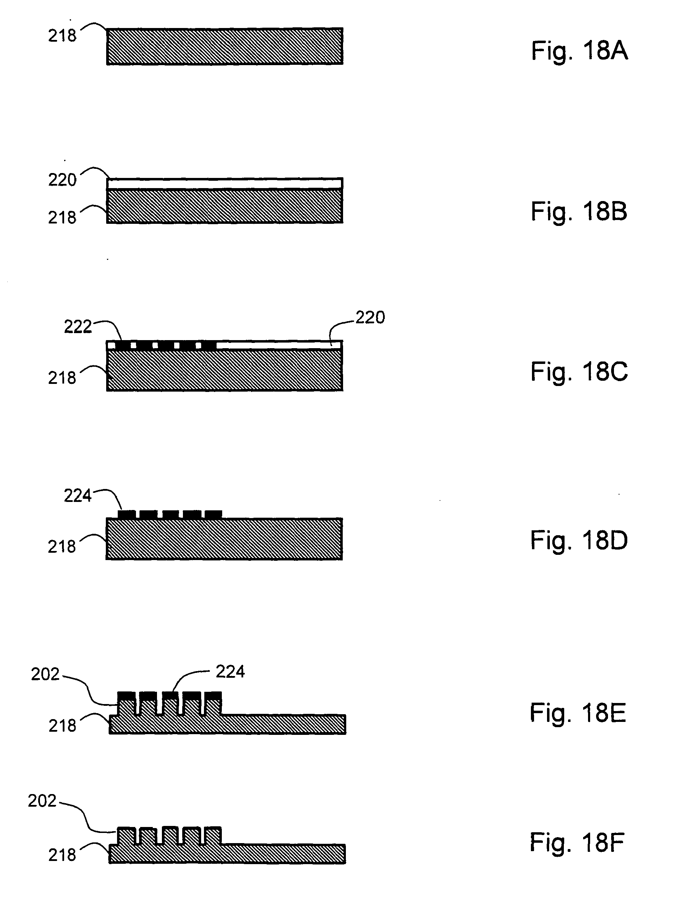

An exemplified process for manufacturing the optical relay device, according to a preferred embodiment of the present invention is provided in the Examples section that follows (see Example 1 and the schematic process illustrations of Figures 18A-L).

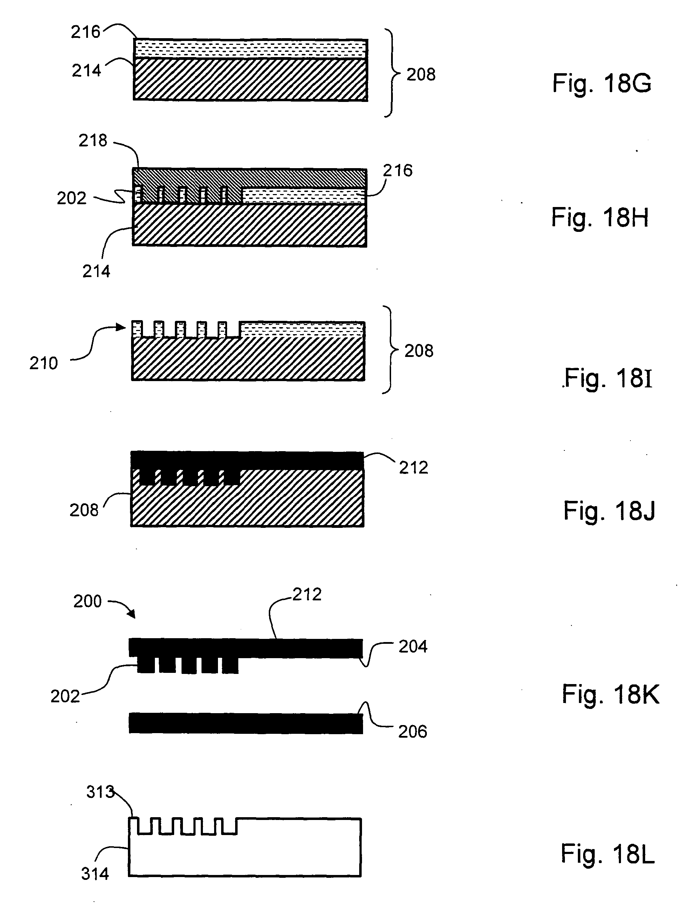

The method begins at step 350 and continues to step 360 in which a mold having one or more patterns corresponding to an inverted shape of the linear grating is formed. The number of patterns equals the number of linear gratings which are to be formed on the substrate of the optical relay device. The mold can be formed by any technique known in the art. A preferred method for forming the mold is described hereinunder. A schematic illustration of a mold 200 and an inverted shape 202 of one linear grating is provided in Figure 18K.

Mold 200 is preferably made of metal, *e.g.*, nickel or aluminum, and can comprise one or two surfaces, generally shown at 204 and 206. Shown in Figure 18K is an exemplified configuration in which surface 204 has the inverted shape of the grating while surface 206 is substantially flat. This embodiment is useful when it is desired to manufacture am optical relay in which all the gratings are formed on one surface of the substrate (say, surface **322,** see Figure 14B). When it is desired to form gratings on both surfaces of the optical relay device (surfaces **322** and **324,** see Figure 13A) both surfaces **204** and **206** of mold **200** include the inverted shape of the gratings.

The method continues to step **385** in which mold **200** is contacted with a light transmissive material which is characterized by a substantially low birefringence, as further detailed above. This can be done in more than one way.

In one embodiment, an injection molding technique is employed. In this embodiment, the mold is heated while being closed and the light transmissive material is introduced into the mold by injection. The injection of the light transmissive material is performed such as to substantially fill the mold. Once the material is injected to the mold, a high pressure can be applied between the two surfaces of the mold, so as to enhance the surface relief replication.

In another embodiment, an injection compression molding technique is employed. In this embodiment, the mold is heated and the light transmissive material is injected into the mold before the closure of the mold such that the mold is only partially filled. Once the material is injected to the mold, the mold is closed to its final position so as to shape the material according to the shape of the mold. High pressure can be applied between the two surfaces of the mold, so as to enhance the surface relief replication.

In an additional embodiment, a varying temperature protocol is employed. In this embodiment, the mold is first heated to a temperature to above the glass transition temperature of the material. Above this temperature, non-covalent bonds become weak in comparison to the thermal motion, and the material is capable of plastic deformation without fracture. This procedure reduces the internal stresses and the variations in the refractive index of the formed substrate. The advantage of this embodiment is that the high temperature of the mold facilitates optimal filling of the mold and replication of the nano-structures. Subsequently to the heating of the mold, the material is injected into the mold and the temperature of the mold is reduced to allow solidification of the material.

The light transmissive material is hardened within the mold and a substrate having the linear grating(s) thereon is thus formed.

The temperatures of the mold and the injected light transmissive material depend, in principle, on the type and amount of material injected into the mold. For example, when the light transmissive material is cycloolefin copolymer or cycloolefin polymer, the melt temperature of the light transmissive material is from about 200 °C to about 320 °C. For such materials, fixed temperature protocol can be performed at mold temperature from about 90 °C to about 150°C, and varying temperature protocol can be performed at initial temperature of from about 110 °C to about 180 °C, and a final temperature of from about 90 °C to about 140 °C.

In still another embodiment, the light transmissive material is in the form of a solid substrate having optically flat surfaces, preferably parallel. The substrate can be fabricated in any way known in the art or any of the processes described herein. In this embodiment, one or more surfaces of the substrate are preferably coated prior to the contacting step mold with one or more layers of materials suitable for three-dimensional object construction, optionally and preferably including a layer of adhesion promotion material located between the substrate and the molded coat layer. The coating material may be of various types, including, without limitation a modeling material which may solidify to form a solid layer of material upon curing. For example, the substrate can be coated with a material having a photopolymer component curable by the application of electromagnetic radiation. The coated substrate is then pressed against the mold and is irradiated by the curing radiation to cure the layers. The thickness of the modeling material is preferably a few hundreds of microns and the thickness of the adhesion promotion layer is preferably from a few microns to a few tens of microns.

In various exemplary embodiments of the invention the substrate is coated with a material having a curable component, such as a photoinitiator. In these embodiments, once the coated substrate is pressed against the mold, a curing radiation is applied to cure the layers. The curing radiation can be applied through the substrate, or through the mold if it is made of radiation-transparent material. To enhance adhesion of the modeling material to the substrate material, an adhesion promoter can be applied on the surface(s) of the substrate.

The photoinitiator may initiate polymerization of the transmissive material and/or the adhesion promoter.

The term "photoinitiator", as used herein, refers to a substance which may be chemically activated upon exposure to light, and the chemical activation is directed towards initiating a polymerization process between one or more polymerizable monomers in the material for coating the substrate.

In various exemplary embodiments of the invention the photoinitiator comprises a UV curable component, in which case the curing radiation is a UV radiation having a wavelength ranging from about 100 nm to about 400 nm. For example, the photoinitiator may be activated by UV radiation ranging from approximately 280 nm to approximately 400 nm.

The photoinitiator may be a charge-driven photoinitiator or a free radical-driven photoinitiator, depending on the type of transmissive polymeric materials and/or the adhesion promoter that is used for the substrate coating.

The photoinitiator may form a part of one or more monomers used for the polymer comprising the transmission material, by containing a free radical-driven polymerizable group and/or charge-driven polymerizable group (such as for a cationic ring opening polymerization process). The resulting polymer may therefore contain a UV curable component in the form of special functional groups. Such polymer is then blended with a free radical-driven and/or a charge-driven photoinitiator and processed into the coating layer on the substrate. Upon exposure to the UV radiation, the photoinitiator may produce cations or free radicals, which initiate polymerization of the transmissive polymeric materials and/or the adhesion promoter. For example, in embodiments wherein the transmissive polymeric materials and/or the adhesion promoter include monoacrylate, diacrylates, methacrylate and/or polyacrylate groups, the photoinitiator may be a free radical-driven photoinitiator. In embodiments wherein the transmissive polymeric materials and/or the adhesion promoter include vinyl, cycloolefin, epoxide and/or oxetane groups, a charge-driven photoinitiator may be used. During photolysis, many charge-driven photoinitiators generate free radicals in addition to cations, therefore, a preferred photoinitiator which may be used to initiate polymerization of the transmissive polymeric materials and/or the adhesion promoter, includes a mixture of acrylate or methacrylate groups and vinyl, epoxide, or oxetane groups.

Exemplary free radical-driven photoinitiators include, without limitation: acyloin and derivatives thereof such as benzoin, benzoin methyl ether benzoin ethyl ether, benzoin isopropyl ether, benzoin isobutyl ether, desyl bromide, and α-methylbenzoin; diketones, such as benzil and diacetyl; an organic sulfide, such as diphenyl monosulfide, diphenyl disulfide, desyl phenyl sulfide, and tetramethylthiuram monosulfide; a thioxanthone; an S-acyl dithiocarbamate, such as S-benzoyl-N,N-dimethyldithiocarbamate and S-(p-chlorobenzoyl)-N,N-dimethyldithiocarbamate; a phenone, such as acetophenone, α,α,α-tribromoacetophenone, o-nitro-α,α,α-tribromoacetophenone, benzophenone, and p,p'-tetramethyldiaminobenzophenone; a quinone; a triazole; a sulfonyl halide, such as p-toluenesulfonyl chloride; a phosphorus-containing photoinitiator, such as an acylphosphine oxide; an acrylated amine; 2,2-dimethoxy-2-phenylacetophenone, acetophenone, benzophenone, xanthone, 3-methylacetophenone, 4-chlorobenzophenone, 4,4'-dimethoxybenzophenone, benzoin propyl ether, benzyl dimethyl ketal, N,N,N',N'-tetramethyl-4,4'-diaminobenzophenone, 1-(4-isopropylphenyl)-2-hydroxy-2-methylpropane-1-one, and other thioxanthone compounds; and mixtures thereof.

Exemplary charge-driven photoinitiators include, without limitation: an onium salt, such as a sulfonium salt, an iodonium salt, or mixtures thereof; a bis-diaryliodonium salt, a diaryliodonium salt of sulfonic acid, a triarylsulfonium salt of sulfonic acid, a diaryliodonium salt of boric acid, a diaryliodonium salt of boronic acid, a triarylsulfonium salt of boric acid, a triarylsulfonium salt of boronic acid, or mixtures thereof; diaryliodonium hexafluoroantimonate, aryl sulfonium hexafluorophosphate, aryl sulfonium hexafluoroantimonate, bis(dodecyl phenyl) iodonium hexafluoroarsenate, tolyl-cumyliodonium tetrakis(pentafluorophenyl) borate, bis(dodecylphenyl) iodonium hexafluoroantimonate, dialkylphenyl iodonium hexafluoroantimonate, diaryliodonium salts of perfluoroalkylsulfonic acids, such as diaryliodonium salts of perfluorobutanesulfonic acid, perfluoroethanesulfonic acid, perfluorooctanesulfonic acid, and trifluoromethane sulfonic acid; diaryliodonium salts of aryl sulfonic acids such as diaryliodonium salts of para-toluene sulfonic acid, dodecylbenzene sulfonic acid, benzene sulfonic acid, and 3-nitrobenzene sulfonic acid; triarylsulfonium salts of perfluoroalkylsulfonic acids such as triarylsulfonium salts of perfluorobutanesulfonic acid, perfluoroethanesulfonic acid, perfluorooctanesulfonic acid, and trifluoromethane sulfonic acid; triarylsulfonium salts of aryl sulfonic acids such as triarylsulfonium salts of para-toluene sulfonic acid, dodecylbenzene sulfonic acid, benzene sulfonic acid, and 3-nitrobenzene-sulfonic-acid; diaryliodonium salts of perhaloarylboronic acids, triarylsulfonium salts of perhaloarylboronic acid, and mixtures thereof.

The phrase "adhesion promoter" as used herein refers to a substance which is added to the coating material so as to enhance the adhesion of the coating material to the substrate.

Typically the adhesion promoter comprises one or more types of polymerizable monomers having two or more polymerizable functional groups, which upon polymerization can enhance the adhesion of the coating layer, for example by crosslinking the coating material with the substrate. Additional attributes which the adhesion promoter may bestow on the coating layer include physical properties such as abrasion resistance, backmark retention, proper sliding friction and others. Preferred adhesion promoters, according to embodiments of the present invention include, without limitation, water soluble polymers, hydrophilic colloids or water insoluble polymers, latex or dispersions; styrene and derivatives thereof, acrylic acid or methacrylic acid and derivatives thereof, olefins, chlorinated olefins, cycloolefins, (meth)acrylonitriles, itaconic acid and derivatives thereof, maleic acid and derivatives thereof, vinyl halides, vinylidene halides, vinyl monomer having a primary amine addition salt, vinyl monomer containing an aminostyrene addition salt, polyurethanes and polyesters and others; and mixtures thereof. Also included are adhesion promoting polymers such as disclosed in, for example, U.S. Patent Nos. 6,171,769 and 6,077,656.

When using an adhesion promoter, the layer coating the substrate is subsequently crosslinked by exposure to UV radiation and then may be further set thermally.

In an additional embodiment, one or more surfaces of the substrates are coated with one or more layers of a soft thermally settable material. The mold is heated and the coated substrate is then pressed against the mold to thermally set (harden) the thermally settable material. To enhance adhesion, an adhesion promoter can be applied on the surface (s) of the substrate.

Thermally settable polymers are known in the art and found, *e.g.,* in U.S. Patent Nos. 6,197,486, 6,197,486, 6,207,361, 6,436,619, 6,465,140 and 6,566,033. Suitable classes of thermally settable polymers according to the present invention include polymers of alpha-beta unsaturated monomers, polyesters, polyamides, polycarbonates, cellulosic esters, polyvinyl resins, polysulfonamides, polyethers, polyimides, polyurethanes, polyphenylenesulfides, polytetrafluoroethylene, polyacetals, polysulfonates, polyester ionomers, and polyolefin ionomers. Interpolymers and/or mixtures thereof. Exemplary polymers of alpha-beta unsaturated monomers include polymers of ethylene, propylene, hexene, butene, octene, vinylalcohol, acrylonitrile, vinylidene halide, salts of acrylic acid, salts of methacrylic acid, tetrafluoroethylene, chlorotrifluoroethylene, vinyl chloride, and styrene.

In various exemplary embodiments of the invention the method continues to step **390** in which the substrate is disengaged from the mold. Figure 18L schematically illustrates the substrate **314** and the linear grating(s) **313** formed thereon, after the disengagement of the substrate from the mold.

The method ends at step **399.**

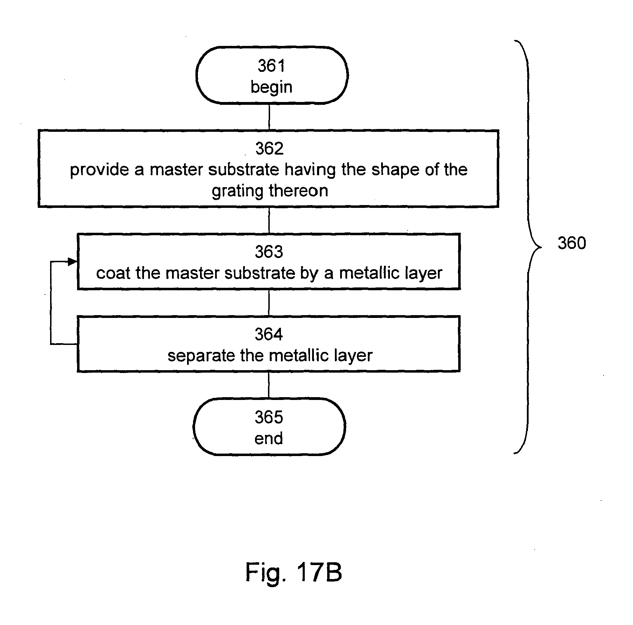

Reference is now made to Figure 17B which is a flowchart diagram further detailing a method suitable for forming the mold (step **360** in Figure 17A), according to various exemplary embodiments of the present invention. The method begins at step **361** and continues to step **362** in which a master substrate **208** having the shape **210** of the gratings form thereon is provided (see Figure 18I). A preferred method for forming such master substrate is described hereinunder.

The method continues to step **363** in which master substrate **208** is coated by one or more metallic layers **212** (see Figure 18J). The metallic layers can be made of any metal suitable for forming molds, such as, but not limited to, aluminum, nickel or any other suitable metal alloy as known in the art. The metallic layer(s) can be applied by any technique known in the art, including, without limitation, physical vapor deposition (PVD), chemical vapor deposition (CVD), atomic layer deposition (ALD), electrochemical plating (ECP) or combination thereof. In the case of more than one metallic layers, the first layer can be deposited formed by PVD, ALD and the other layers can be electroplated on the first layer.

Any of the above coating techniques are well known to those skilled in the art of coating and thin film deposition. In CVD, for example, the metallic layers are formed by placing the master substrate in a mixture of gases. Under certain pressure and temperature conditions, the molecules contained in the gases are deposited on the surfaces of the master substrate as a result of thermal reactions to form the metallic layer thereupon. CVD process can be done in a conventional CVD reactor such as, for example, the CVD reactor disclosed in U.S. Patent Nos. 5,503,875, 5,441,570, and 6,983,620.

In ALD, the metallic layers are formed on the master substrate by chemically sorbing one or more precursors which comprise the desired metal and a ligand onto the master substrate surface to form a monolayer of precursors that is approximately one molecule thick. A second precursor may be introduced to chemically react with the first chemisorbed layer to grow a thin film on the master substrate surface. After sufficient process cycles of monolayer formation has occurred, or alternatively with the formation of the monolayers, the monolayers can be contacted with a reaction gas to form the metallic layer on the surface of the master substrate. ALD process can be done in any ALD reactor such as, for example, the ALD reactor disclosed in U.S. Patent Nos. 6,787,463, 6,808,978, 6,869,876 and 7,037,574.

In PVD, the metallic layers are deposited on the master substrate by physical, as opposed to chemical, means. Typically, the deposition of the metallic layer is by sputtering, in which ions are created by collisions between gas atoms and electrons in a glow discharge. The ions are accelerated and directed to a cathode of sputter target material by an electromagnetic field causing atoms of the sputter target material to be ejected from the cathode surface, thereby forming sputter material plasma. By contacting the master substrate with the plasma, the metallic layers are deposited on the surface of the master substrate. PVD process can be done in any conventional magnetron, such as the magnetron disclosed in U.S. Patent Nos. 4,441,974, 4,931,158, 5,693,197 and 6,570,172.

In ECP, a seed layer is first formed over the surface of the master substrate and subsequently the master substrate is exposed to an electrolyte solution while an electrical bias is simultaneously applied between the master substrate and an anode positioned within the electrolyte solution. The electrolyte solution is generally rich in ions to be plated onto the surface of the master substrate. Therefore, the application of the electrical bias causes the ions to be urged out of the electrolyte solution and to be plated onto the seed layer. ECP process can be done in any way known in the art such as, for example, the techniques disclosed in U.S. Patent Nos. 6,492,269, 6,638,409, 6,855,037 and 6,939,206.

The method continues to step **364** in which metallic layer or layers **212** are separated from the master substrate **208** to form one surface (*e.g.,* surface **204**) of mold **200**. In the embodiment in which both surfaces of the mold are patterned according to the inverted shape of the linear grating, the method loops back to step **363** to fabricate the other surface.

The method for forming the mold ends at step **365.**

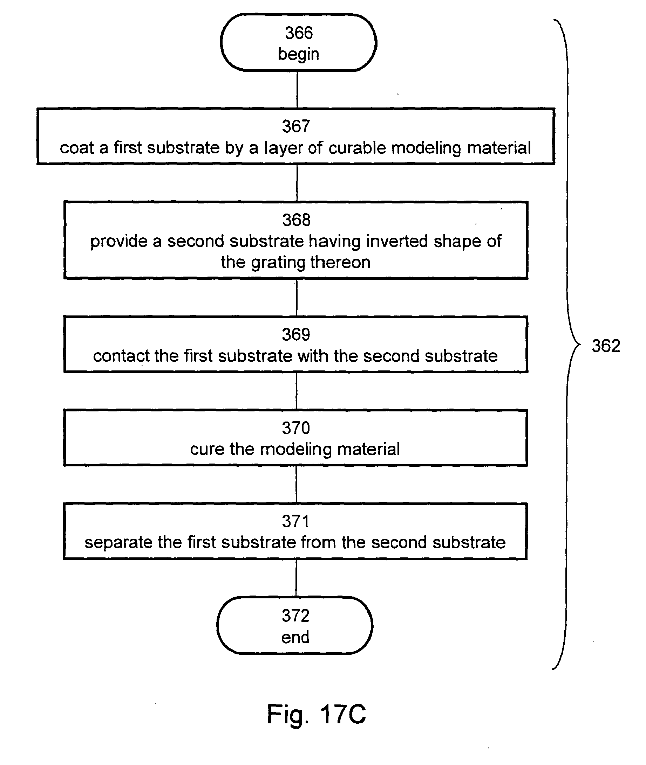

Reference is now made to Figure 17C which is a flowchart diagram of a method for forming a master substrate, according to various exemplary embodiments of the present invention. The master substrate can be used for forming the mold as described above.

The method begins at step **366** and continues to step **367** in which a first substrate **214** (see Figure 18G) is coated by one or more layers **216** of a curable modeling material. First substrate is preferably made of a hard material, such as, but not limited to, glass, fused silica, hard plastic, metal and the like. The method continues to step **368** in which a second substrate **218** having the inverted shape **202** of the linear grating is provided. Second substrate **218** is also made of hard material, such as, but not limited to, fused silica, quartz, borosilicate and the like. Second substrate **218** can be fabricated using any technique known in the art for forming either holographic or ruled diffraction gratings.

Thus, substrate **218** can be manufactured classically with the use of a ruling engine, *e.g.*, by burnishing grooves with a diamond stylus in substrate **218,** or holographically through a combination of photolithography and etching. A preferred method for forming the second substrate by lithography followed by etching is described hereinunder.

The curable modeling material is capable of solidifying to form a solid layer of material upon curing, as described above. The curable modeling material serves for hosting the shape **210** of the gratings, and is preferably selected to facilitate the aforementioned separation of the metallic layer from the master substrate. In this respect, the hardness of the modeling material in its cured state is preferably lower than the hardness of the metallic layer(s) **212.** Additionally, the hardness of the modeling material in its cured state is preferably lower than the hardness of second substrate **218.** In various exemplary embodiments of the invention the curable modeling material comprises a UV curable component.

The method continues to step **369** in which first substrate **214** is contacted with second substrate **218** (see Figure 18H). The method continues to step **370** in which the modeling material is cured. The curing procedure depends on the type of modeling material. For example, when the material is curable by certain electromagnetic radiation (*e.g.*, UV radiation), the curing is by applying the electromagnetic radiation. When the material is curable by thermal treatment, the curing is by thermal treatment, *e.g.*, heating.

The method continues to step **371** in which first substrate **214** is separated from second substrate **218** to expose the cured layer on first substrate **214,** thereby forming the master substrate **208** having the shape **210** of the gratings (see Figure 18I).

The method for forming the master substrate ends at step **372.**

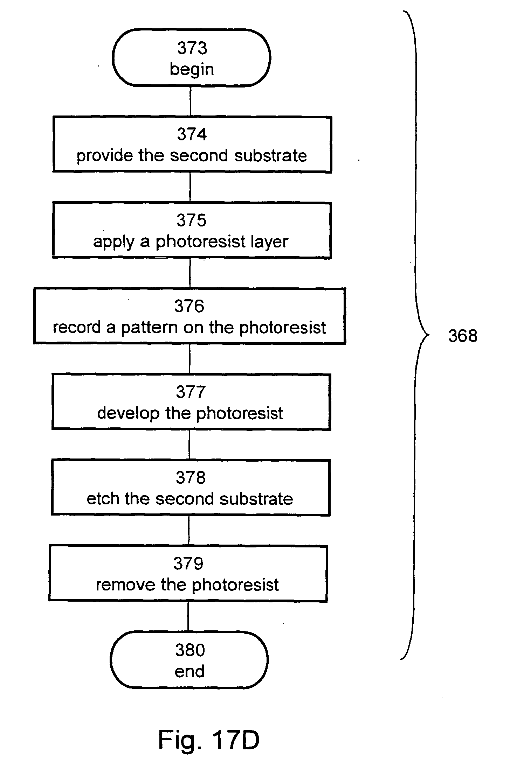

Reference is now made to Figure 17D which is a flowchart diagram of a method for forming a substrate having the inverted shape of the linear grating, according to various exemplary embodiments of the present invention. This method is useful for providing the second substrate **218** (see step **368** in Figure 17C) which is employed in the preferred manufacturing process of master substrate **208.**

The method begins at step **373** and continues to step **374** in which the second substrate **218,** which, as stated is preferably made of a hard material, is provided (see Figure 18A). The method continues to step **375** in which a layer **220** of a photoresist material is applied on substrate **218** (see Figure 18B).

A photoresist material is a material whose intermolecular bonds are either strengthened or weakened by exposure to certain type of radiation, such as electromagnetic radiation or particle (*e.g.*, electron) beam.

The photoresist material can be applied using any known procedure, such as, but not limited to, coating, printing and lamination. Representative examples of coating procedures include, without limitation, dip coating, roller coating, spray coating, reverse roll coating, spinning or brushing. Representative examples of printing procedures include, without limitation curtain printing or screen printing. The photoresist material used in accordance with the present embodiments may be any material used as a photoresist in the manufacture of diffraction gratings.

The photoresist material can be an organic or an inorganic photoresist material in a liquid or dry form. The photoresist material can be a positive photoresist material or a negative photoresist material. A positive photoresist material is a material that becomes, as a result of the exposure step that follows, non-resistant to the subsequent development step as described hereinbelow. Conversely, a negative photoresist material is a material that becomes, as a result of the exposure step that follows, resistant to the development step that follows.

The method continues to step **376** in which a pattern **222** is recorded on layer **220** (see Figure 18C). The pattern can correspond to the shape of the linear grating or an inverted shape thereof, depending whether the photoresist material is a negative photoresist material or a positive photoresist material. Since it is desired to form an inverted shape of the grating on the surface of substrate **218,** when a positive photoresist is used, the standing wave pattern corresponds to the shape of the linear grating, and when a negative photoresist is used, the pattern corresponds to the inverted shape of the grating.

The pattern can be recorded by means of optical interference, *e.g.*, by forming a standing wave interference pattern of two plane optical waves on layer **220.** Alternatively, the pattern can be recorded by means of a scanning electron beam.

Representative examples of photoresist materials suitable for electromagnetic radiation include, without limitation, Microposit S1805, commercially available from Shipley Corporation, USA. For such photoresist, the preferred recording is by electromagnetic radiation at a wavelength of 365 nm. Representative examples of photoresist materials suitable for electron beam include, without limitation, polymethyl methacrylate or derivatives thereof.

The method continues to step **377** in which the photoresist is developed thereby forming a mask pattern **224** of developed photoresist on the surface of substrate **218** (see Figure 18D). The method proceeds to step **378** in which substrate **218** is etched, to form ridges and grooves according to the inverted shape **202** of the grating (see Figure 18E).

The etching process can be any wet or dry etching process known in the art. The wet etching process can include isotropic etchants or anisotropic etchants. The dry etching process can be purely chemical, purely physical or a combination of chemical and physical etching. Suitable dry etching process thus includes, without limitation, chemical dry etching, ion beam etching, reactive ion etching (also known as chemical-physical etching) and laser induced etching.

Once the inverted shape **202** of the grating is formed, the method optionally and preferably continues to step **379** in which mask pattern **224** is removed (see Figure 18F).

The method for forming substrate **218** ends at step **380.**

It is expected that during the life of this patent many relevant light transmissive materials will be developed and the scope of the term light transmissive material is intended to include all such new light transmissive materials *a priori.*

### *A Detailed Manufacturing Process*

Figures 18A-L illustrate an exemplified embodiment for manufacturing the optical relay device according to the teachings of the present invention.

Figure 18A schematically illustrates second substrate **218,** which is preferably used for manufacturing the master substrate as further detailed hereinabove.

Figure 18B schematically illustrates second substrate **218,** once layer **220** of photoresist material is applied thereon.

Figure 18C schematically illustrates second substrate **218,** once pattern **222** is recorded on layer **220**

Figure 18D schematically illustrates second substrate **218,** once the photoresist is developed to form mask pattern **224** on layer the surface of substrate **218.**

Figure 18E schematically illustrates substrate **218** following the etching process which forms the inverted shape **202** of the grating on substrate **218.**

Figure 18F schematically illustrates substrate **218** following once mask pattern **224** is removed.

Figure 18G schematically illustrates first substrate **214,** which is also used for manufacturing the master substrate as further detailed hereinabove. Substrate **214** is coated by one or more layers **216** of a curable modeling material.

Figure 18H schematically illustrates the contact between first substrate **214** and second substrate **218.** As shown, the modeling material receives the shape of the gratings.

Figure 18I illustrate master substrate **208,** which is formed after the separation of first substrate **214** from second substrate **218.**

Figure 18J illustrate master substrate **208** once one or more metallic layers **212** are applied thereon. The metallic layers serve as a surface of the mold as further detailed hereinabove.

Figure 18K schematically illustrates mold **200** with a first surface **204** and a second surface **206.** First surface is formed by separating metallic layer **212** from master substrate **208.** In the present example, second surface **206** is flat, but, as stated, it can be manufactured similarly to surface **204** to include inverted shape of one or more gratings.

Figure 18L schematically illustrates substrate **314** and grating **313** formed using mold **200.**

### Birefringence Tests

Measurements of optical birefringence were made to samples of polycarbonate (PC) and cycloolefin polymer (COP). The measurements were made by the PROmeteus MT-200 inspection system purchased from Dr. Schenk GmbH, Germany. The measurements included the difference $\Delta n$ between the ordinary index of refraction, no and the extra-ordinary index of refraction $n_e$, $\Delta n = n_o - n_e$.

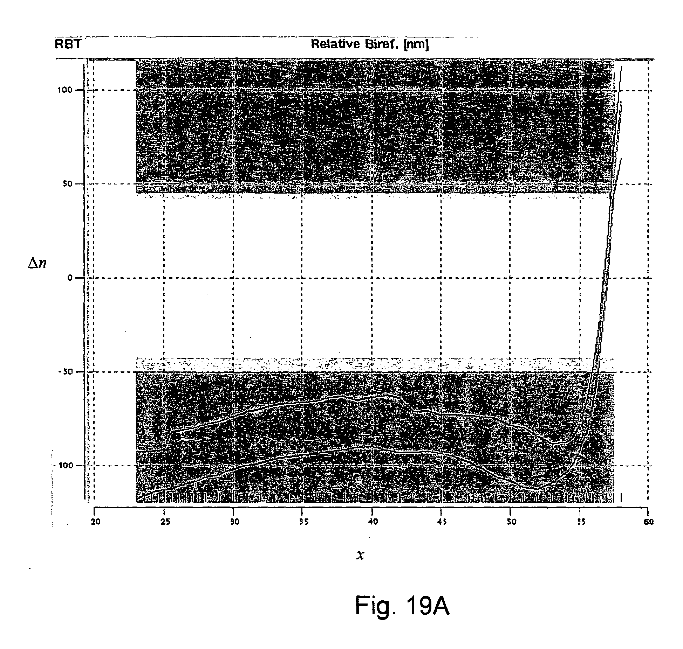

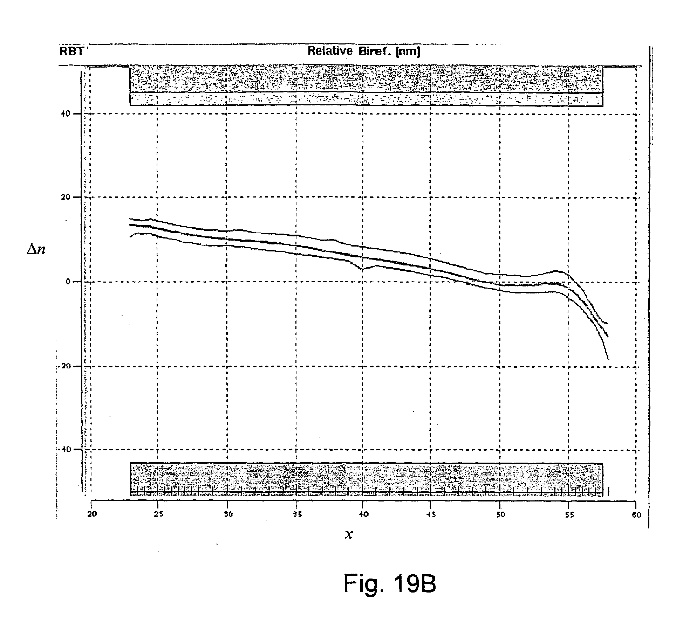

Figures 19A-B show $\Delta n$ as a function of the position $x$ (in millimeters) across a material sample, for the polycarbonate sample (Figure 19A) and the cycloolefin polymer (Figure 19B).

The PC measurement revealed birefringence of about -100 nm, in the units of measurement of the measuring system, which correspond to a dimensionless birefringence $\Delta n$ of about 0.001.

The COP birefringence measurement was less than 15 nm, in the units of measurement of the measuring system, which correspond to a dimensionless birefringence $\Delta n$ which is no more than 0.00015 ($\Delta n \leq 0.00015$). It is therefore demonstrated that the birefringence of cycloolefin polymer is about an order of magnitude lower in absolute value than the birefringence of polycarbonate.

The low value of birefringence in absolute value of the cycloolefin polymer significantly reduces the rotation of the polarization of the light during the propagation of light within the substrate. Thus, a linearly polarized light entering the substrate such that the polarization direction is parallel to the direction of the grating grooves, substantially maintains the polarization during the propagation. As a result, high diffraction efficiency is achieved also at the output grating.

### Monochromatic Binocular Confguration for Blue Light

This example demonstrate the attainable field-of-view when the optical relay device is used for binocular view, in the embodiment in which there is one input linear grating and two output linear gratings. The following demonstration is for a substrate made of cycloolefin polymer having a refraction index of $n_s = 1.531$.

Equation 1 is employed for a wavelength $\lambda = 465$ nm (blue light), and indices of refraction $n_s = 1.531$ for the substrate and $n_A = 1.0$ for air, corresponding to a critical angle of 40.78°.

For a grating period $d = 430$ nm ($\lambda/d > 1$, see Equation A-3), Equation 4 provides the maximal (negative by sign) angle at which total internal reflection can be occur is 4.67°. In the notation of Figure 15A, $\alpha_1^{+-} = -4.67°$ (see ray **353**). The positive incidence angle (see ray **351** of Figure 15A), on the other hand, can be as large as $\alpha_1^{--} = 25.24°$, in which case the diffraction angle is about 80°, which comply with the total internal reflection condition. Thus, in this configuration, each of the attainable asymmetric field-of-views is of $|\alpha_l^{++}| + \alpha_l^{--} \approx 30°$, resulting in a symmetric combined field-of-view of $2 \times \alpha_l^{--} \approx 50°$.

### Monochromatic Binocular Configuration for Red Light

This example demonstrate the attainable field-of-view when Equations 1, 4 and A-4 are employed for a wavelength $\lambda = 620$ nm (red light) and the refraction indices of Example 3, corresponding to the same critical angle ($\alpha_c = 40.78°$).

Imposing the "flat" requirement and a maximal diffraction angle of 80°, one can calculate that for $\lambda = 620$ mn

the grating period of Example 3 $d$ = 430 nm complies with Equation A-4.

The maximal (positive by sign) incidence angle at which total internal reflection can occur is 3.78°. In the notation of Figure 15B, $\alpha_I^+$ = +3.78° (see ray 352). The negative incidence angle (see ray **354** of Figure 15B) is limited by the requirement $|\alpha_D^{++}| < \alpha_c$, which corresponds to $\alpha_1^{++}$ = -26.22°. Thus, in this configuration, each of the attainable asymmetric field-of-views is of about 30°, resulting in a symmetric combined field-of-view of about 52°.

### *Multicolor Binocular Configuration*

This example demonstrate the attainable field-of-view when Equations 1, 4 and A-6 are employed for a spectrum in which the shortest wavelength is $\lambda_B$ = 465 nm (blue light) and the longest wavelength is $\lambda_R$ = 620 nm (red light). The refraction indices, the critical angle and the maximal diffraction angle are the same as in Example 4.

Using Equation A-6, one obtains $d$ = 433 nm. Further, using Equation 4 one can calculate the asymmetric field-of-views of the blue and red lights.

Hence for the blue light the first asymmetric field-of-view is [-4.24°, 25.71°], the second asymmetric field-of-view is [-25.71°, -4.24°], resulting in a combined field-of-view of about 51°.

For the red light, the calculation yield an opposite situation in which the first asymmetric field-of-view is [-25.59°, 4.35°], and the second asymmetric field-of-view is [-4.35°, 25.59°], still resulting in a combined field-of-view of about 51°.

If a third, intermediate wavelength is present, say 525 nm (green light), then the first green asymmetric field-of-view is [-12.27°, 17.17°], and the second green asymmetric field-of-view is [-17.17°, 12.27°], resulting in a symmetric combined field-of-view of about 34°. Thus, the overlap between the individual wavelength-dependent field-of-views is of 34°. It will be appreciated that selecting a different period for the gratings may result in a larger overlapping field of view.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims. All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention.

**Claims**

1. An optical relay device, comprising:

   a substrate, made at least in part of a light transmissive polymeric material **characterized by** a birefringence, $\Delta n$, satisfying the inequality $|\Delta n| < \varepsilon$, wherein $\varepsilon$ is lower than the birefringence of polycarbonate; and
   at least one diffractive optical element located on at least one surface of said substrate.

2. The device of claim 1, wherein said at least one diffractive optical element comprises an input diffractive optical element and at least one output diffractive optical element.

3. The device of claim 1, wherein said at least one diffractive optical element comprises linear grating.

4. A system for providing an image to a user, comprising an optical relay device for transmitting an image into at least one eye of the user, and an image generating system for providing said optical relay device with collimated light constituting said image,
   said optical relay device comprising:

   a substrate, made at least in part of a light transmissive polymeric material **characterized by** a birefringence, $\Delta n$, satisfying the inequality $|\Delta n| < \varepsilon$, wherein $\varepsilon$ is lower than the birefringence of polycarbonate, and
   a plurality of diffractive optical elements located on at least one surface of said substrate.

5. The device or system of claim 1 or 4, wherein said plurality of diffractive optical elements is formed on said at least one surface.

6. The device or system of claim 1 or 4, wherein said plurality of diffractive optical elements is attached to said at least one surface.

7. The device or system of claim 4, comprising an input diffractive optical element, a first output diffractive optical element and a second output diffractive optical element.

8. The device or system of claim 7, wherein said input diffractive optical element is designed and constructed for diffracting light originated from the image into said substrate such that a first partial field-of-view of the image propagates via total internal reflection to impinge on said first output diffractive optical element, and a second partial field-of-view of the image propagates via total internal reflection to impinge on said second output diffractive optical element, said first partial field-of view being different from said second partial field-of-view.

9. The device or system of claim 8, wherein said image generating system comprises a light source, at least one image carrier and a collimator for collimating light produced by said light source and reflected or transmitted through said at least one image carrier.

10. The system of claim 8, wherein said image generating system comprises at least one miniature display and a collimator for collimating light produced by said at least one miniature display.

11. The system of claim 8, wherein said image generating system comprises a light source, configured to produce light modulated imagery data, and a scanning device for scanning said light modulated imagery data onto said input diffractive optical element.

12. A method of manufacturing an optical relay device having at least one linear grating, comprising:

   forming a mold having at least one pattern corresponding to an inverted shape of the at least one linear grating; and
   contacting said mold with a light transmissive polymeric material **characterized by** a birefringence, $\Delta n$, satisfying the inequality $|\Delta n| < \varepsilon$, wherein $\varepsilon$ is lower than the birefringence of polycarbonate, so as to provide a substrate having the at least one linear grating formed on at least one surface thereof.

13. The device, system or method of claim 1, 4 or 12, wherein said polymeric material comprises a cycloolefin polymer.

14. The device, system or method of claim 1, 4 or 12, wherein said polymeric material comprises a polycyclic polymer.

15. The device, system or method of claim 1, 4 or 12, wherein said light transmissive polymeric material comprises a copolymer.

16. The device, system or method of claim 15, wherein said copolymer comprises a cycloolefin copolymer.

17. The device, system or method of claim 15, wherein said copolymer comprises a polycyclic copolymer.

18. The method of claim 12, wherein said contacting is by injection molding.

19. The method of claim 12, wherein said light transmissive polymeric material is in a solid form.

20. The method of claim 19, wherein said light transmissive polymeric material is in form of a substrate having optically flat surfaces.

21. The method of claim 20, further comprising coating at least one of said optically flat surfaces by a curable modeling material, prior to said contacting of said mold with said light transmissive polymeric material.

22. The method of claim 21, wherein said contacting comprises pressing said mold against said light transmissive polymeric material in said solid form.

23. The method of claim 21, wherein said curable modeling material comprises at least one photopolymer component.

**24.** The method of claim 21, wherein said curable modeling material comprises at least one curable component.

**25.** The method of claim 21, wherein said curable modeling material comprises a thermally settable material.

**26.** The method of claim 12, wherein at least one surface of said mold is formed by coating a master substrate having the at least one linear grating formed thereon by a metallic layer, and separating said metallic layer from said master substrate, thereby forming said at least one surface.

**27.** The method of claim 26, wherein said mold comprises a second surface which is substantially flat.

**28.** The method of claim 26, wherein said coating said master substrate by said metallic layer comprises sputtering followed by electroplating.

**29.** The method of claim 26, further comprising forming said master substrate.

**30.** The method of claim 29, wherein said forming said master substrate comprises:

providing a first substrate coated by a layer of curable modeling material;
contacting said first substrate with a second substrate having said inverted shape of the at least one linear grating formed thereon;
curing said curable modeling material, thereby providing a cured layer patterned according to the shape of the at least one linear grating; and
separating said first substrate from said second substrate to expose said cured layer on said first substrate, thereby forming said master substrate.

**31.** The method of claim 30, wherein said curable modeling material comprises at least one photopolymer component, and said step of curing said curable modeling material comprises irradiating said curable modeling material by electromagnetic radiation.

**32.** The method of claim 30, wherein said curable modeling material comprises at least one curable component, and said step of curing said curable modeling material comprises irradiating said curable modeling material by curing radiation.

**33.** The method of claim 30, wherein said curable modeling material comprises a thermally settable material, and said step of curing said curable modeling material comprises applying heat to said thermally settable material.

**34.** The method of claim 30, further comprising, prior to said step of contacting said first substrate with said second substrate, forming said inverted shape of the at least one linear grating on said second substrate.

**35.** The method of claim 34, wherein said forming said inverted shape of the at least one linear grating on said second substrate is by a ruling engine.

**36.** The method of claim 34, wherein said forming said inverted shape of the at least one linear grating on said second substrate is by lithography followed by etching.

**37.** The method of claim 36, wherein said lithography comprises photolithography.

**38.** The method of claim 36, wherein said lithography comprises electron beam lithography.

Fig. 1

Fig. 2a

Fig. 2b

Fig. 2c

Fig. 2d

Fig. 2e

Fig. 2f

Fig. 3a

Fig. 3b

Fig. 4a

Fig. 4b

Fig. 5a

Fig. 5b

Fig. 6

Fig. 7

15

14

Fig. 8

Fig. 9

Fig. 10a

Fig. 10b

Fig. 10c

Fig. 11a

Fig. 11b

Fig. 11c

Fig. 11d

Fig. 12a

Fig. 12b

310

324

314

$\alpha_D^-$

323

312

$\alpha^-_{FOV}$

313

320

318

$\alpha_D^+$

$\alpha^+_{FOV}$

313

318 318 320 318 315 320

316 316

## Fig. 13A

310

314

313

d

## Fig. 13B

Fig. 14A

Fig. 14B

Fig. 15A

Fig. 15B

Fig. 16

350
begin

360
form a mold

385
contact the mold with a light transmissive material

390
disengage the material form the mold

399
end

Fig. 17A

```
                    ┌──────────────┐
                    │     361      │
                    │    begin     │
                    └──────────────┘
    ┌────────────────────────────────────────────┐
    │                   362                        │
    │  provide a master substrate having the shape of the  │
    │                grating thereon               │
    └────────────────────────────────────────────┘
        ┌────────────────────────────────────────┐
        │                 363                     │
        │  coat the master substrate by a metallic layer  │
        └────────────────────────────────────────┘
        ┌────────────────────────────────────────┐
        │                 364                     │
        │         separate the metallic layer     │
        └────────────────────────────────────────┘
                    ┌──────────────┐
                    │     365      │
                    │     end      │
                    └──────────────┘
```

360

Fig. 17B

```
                    ┌──────────────┐
                    │     366      │
                    │    begin     │
                    └──────┬───────┘
                           │
        ┌──────────────────┴───────────────────────────┐
        │                   367                         │
        │ coat a first substrate by a layer of curable  │
        │            modeling material                  │
        └──────────────────┬───────────────────────────┘
                           │
          ┌────────────────┴──────────────────┐
          │               368                 │
          │ provide a second substrate having │
          │   inverted shape of               │
          │     the grating thereon           │
          └────────────────┬──────────────────┘
                           │
          ┌────────────────┴──────────────────┐
          │               369                 │
          │ contact the first substrate with  │
          │        the second substrate       │
          └────────────────┬──────────────────┘
                           │
          ┌────────────────┴──────────────────┐
          │               370                 │
          │       cure the modeling material  │
          └────────────────┬──────────────────┘
                           │
          ┌────────────────┴──────────────────┐
          │               371                 │
          │ separate the first substrate from │
          │        the second substrate       │
          └────────────────┬──────────────────┘
                           │
                    ┌──────┴───────┐
                    │     372      │
                    │     end      │
                    └──────────────┘
```

362

Fig. 17C

```
        ┌─────────────────┐
        │      373        │
        │     begin       │
        └─────────────────┘
                 │
        ┌─────────────────────────┐
        │           374           │
        │ provide the second substrate │
        └─────────────────────────┘
                 │
        ┌─────────────────────────┐
        │           375           │
        │  apply a photoresist layer  │
        └─────────────────────────┘
                 │
        ┌───────────────────────────────┐
        │             376               │
        │ record a pattern on the photoresist │
        └───────────────────────────────┘
                 │
        ┌─────────────────────────┐
        │           377           │
        │   develop the photoresist   │
        └─────────────────────────┘
                 │
        ┌─────────────────────────┐
        │           378           │
        │   etch the second substrate  │
        └─────────────────────────┘
                 │
        ┌─────────────────────────┐
        │           379           │
        │   remove the photoresist    │
        └─────────────────────────┘
                 │
        ┌─────────────────┐
        │      380        │
        │      end        │
        └─────────────────┘
```

368

Fig. 17D

218

Fig. 18A

220
218

Fig. 18B

222 ⌐220
218

Fig. 18C

224
218

Fig. 18D

202 — 224
218

Fig. 18E

202
218

Fig. 18F

Fig. 18G

Fig. 18H

.Fig. 18I

Fig. 18J

Fig. 18K

Fig. 18L

Fig. 19A

Fig. 19B

**European Patent Office**

**PARTIAL EUROPEAN SEARCH REPORT**

which under Rule 63 of the European Patent Convention shall be considered, for the purposes of subsequent proceedings, as the European search report

Application Number

EP 08 00 6532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/122015 A1 (SONG YOUNG-RAN [KR] ET AL) 5 September 2002 (2002-09-05) * paragraphs [0042] - [0046]; figures 5,6 * ----- | 1-12 | INV. G02B27/01 G02B5/32 G02B6/00 G02B5/18 |
| X | JP 2000 056259 A (FUJI XEROX CO LTD) 25 February 2000 (2000-02-25) * abstract; figure 1 * ----- | 1 | |
| X | EP 1 536 268 A1 (NIPPON KOGAKU KK [JP]) 1 June 2005 (2005-06-01) * paragraphs [0045] - [0059]; figure 1 * ----- | 1 | |
| X | WO 2004/109349 A2 (ELOP ELECTROOPTICS IND LTD [IL]; WEISS VICTOR [IL]; GURWICH IOSEPH [IL] 16 December 2004 (2004-12-16) * page 27, line 27 - page 28, line 5; figure 1b * ----- | 1,12 | |
| A | WO 99/52002 A (ELOP ELECTROOPTICS IND LTD [IL]; YEDA RES & DEV [IL]; AMITAI YAAKOV [I] 14 October 1999 (1999-10-14) * page 5 - page 6 * ----- | 1-12 | TECHNICAL FIELDS SEARCHED (IPC) G02B |

-/--

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 29 May 2008 | Hambach, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

**European Patent Office**

## PARTIAL EUROPEAN SEARCH REPORT

Application Number

EP 08 00 6532

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A | JINWON SUNG ET AL: "Analog micro-optics fabrication by use of a binary phase grating mask" MICROMACHINING TECHNOLOGY FOR MICRO-OPTICS AND NANO-OPTICS II 27-29 JAN. 2004 SAN JOSE, CA, USA, vol. 5347, no. 1, 2004, pages 62-70, XP002422582 Proceedings of the SPIE - The International Society for Optical Engineering SPIE-Int. Soc. Opt. Eng USA ISSN: 0277-786X * the whole document * | 1-12 | |
| | ----- | | TECHNICAL FIELDS SEARCHED (IPC) |

EPO FORM 1503 03.82 (P04C10)

| European Patent Office | INCOMPLETE SEARCH SHEET C | Application Number EP 08 00 6532 |
|---|---|---|

Claim(s) searched incompletely:
    1-12

Claim(s) not searched:
    13-38

Reason for the limitation of the search:

1      Objections under Art. 76(1) EPC

1.1      The present application is a divisional application of the European application EP06780476.5, designated as parent application, which is an application based on the international application PCT/IL/200601050, filed on September 07, 2006.

1.2      However, the present claims extend beyond the disclosure of the parent application, contrary to Art. 76(1) EPC. In particular:

    The present independent claims 1, 4 and 12 define a substrate,
        a) made at least in part of a light transmissive polymeric material
        b) characterized by a birefringence,
        c) wherein the birefringence is lower than the birefringence of polycarbonate.

    The description and claims of the parent application mention a polymeric or organic material only on page 2, line 2 and page 35, line 13, both times in conjunction with an OLED array used for creating an image, not in conjunction with the actual realy element. Birefringence is mentioned on page 21, line 2-4, but only with the general teaching that the birefringence should be sufficiently low. No specific values or comparative examples could be found. Finally, polycarbonate is not mentioned at all.

    Hence, none of the subfeatures a)-c) is disclosed in the parent application.

1.3      With respect to independent method claim 12 it is further observed that the parent application does not disclose a mold or molding process.

1.4      Moreover, none of the features defined in the claims 13-38 appears to have a basis in the parent application.
*
2      As a consequence of the search was limited to the features being apperently allowable under Art. 76 EPC, namely:

    An optical relay device, comprising:
    - a substrate, made at least in part of a light transmissive material
    - comprising at least one diffractive optical element located on at least one surface of said substrate.

    and

A method of manufacturing an optical relay device having at least one linear grating, so as to provide a substrate having the at least one linear grating formed on at least one surface thereof.

## ANNEX TO THE EUROPEAN SEARCH REPORT
## ON EUROPEAN PATENT APPLICATION NO.

EP 08 00 6532

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2008

| Patent document cited in search report | | Publication date | Patent family member(s) | | Publication date |
|---|---|---|---|---|---|
| US 2002122015 | A1 | 05-09-2002 | NONE | | |
| JP 2000056259 | A | 25-02-2000 | NONE | | |
| EP 1536268 | A1 | 01-06-2005 | AU | 2003252686 A1 | 16-02-2004 |
| | | | CN | 1672082 A | 21-09-2005 |
| | | | WO | 2004011986 A1 | 05-02-2004 |
| | | | JP | 3867634 B2 | 10-01-2007 |
| | | | JP | 2004061731 A | 26-02-2004 |
| | | | US | 2005141066 A1 | 30-06-2005 |
| WO 2004109349 | A2 | 16-12-2004 | EP | 1639394 A2 | 29-03-2006 |
| WO 9952002 | A | 14-10-1999 | AT | 254291 T | 15-11-2003 |
| | | | AU | 3052499 A | 25-10-1999 |
| | | | CA | 2326767 A1 | 14-10-1999 |
| | | | DE | 69912759 D1 | 18-12-2003 |
| | | | DE | 69912759 T2 | 30-09-2004 |
| | | | EP | 1068548 A1 | 17-01-2001 |
| | | | US | 6580529 B1 | 17-06-2003 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4711512 A
- US 5966223 A
- US 5682255 A, Friesern
- US 6757105 B, Niv
- US 896865 A
- US 11017920 A
- WO 2006008734 A
- US 5969869 A
- US 6941069 B
- US 6687010 B
- US 6330388 B
- US 6766082 B
- US 6829095 B
- US 716533 P
- US 6833955 B
- US 505866 A
- US 6171769 B
- US 6077656 B
- US 6197486 B
- US 6207361 B
- US 6436619 B
- US 6465140 B
- US 6566033 B
- US 5503875 A
- US 5441570 A
- US 6983620 B
- US 6787463 B
- US 6808978 B
- US 6869876 B
- US 7037574 B
- US 4441974 A
- US 4931158 A
- US 5693197 A
- US 6570172 B
- US 6492269 B
- US 6638409 B
- US 6855037 B
- US 6939206 B